# EUROPEAN PATENT APPLICATION

(11) **EP 4 832 404 A1**
(43) Date of publication of application: **28.10.2026**
(21) Application number: 25797575.5
(22) Date of filing: 25.04.2025
(51) Int. Cl.: H04L 5/00

(54) **PILOT CONFIGURATION METHOD AND APPARATUS**

(30) Priority: 30.04.2024 CN 202410545035
(71) Applicant: Ruijie Networks Co., Ltd., Fuzhou, Fujian 350002 (CN)
(72) Inventor: ZHONG, Ke, Fuzhou, Fujian 350002 (CN)
(74) Representative: Mathys & Squire
(86) International application number: PCT/CN2025/091290
(87) International publication number: WO 2025/228269

(57) **Abstract**

This application discloses a pilot configuration method and an apparatus, and relates to the field of communications. According to the method, a first access point (AP) determines first indication information based on state information of an STA, where the first indication information is used to indicate a pilot subcarrier configuration allocated to the STA; and the first AP sends the first indication information to the STA. With the above design, the first AP can determine, based on the state information of the STA, the pilot subcarrier configuration allocated to the STA, and thus can further adjust a pilot subcarrier more flexibly based on an actual communication condition. This is more adaptable to complex and variable communication scenarios, features high flexibility and strong adaptability, and effectively improves overall system performance.

## Description

### CROSS-REFERENCE TO RELATED APPLICATIONS

This application claims priority to Chinese Patent Application No. 202410545035.7, filed with the China National Intellectual Property Administration on April.30, 2024 and entitled "PILOT CONFIGURATION METHOD AND APPARATUS ", which is incorporated herein by reference in its entirety.

### TECHNICAL FIELD

This application relates to the field of communication technologies, and in particular, to a pilot configuration method and an apparatus.

### BACKGROUND

Currently, the quantity of vehicles capable of interconnection and networking is growing rapidly, and the market scale is expected to exceed trillions of yuan in the future. Infotainment of connected vehicles serves as one major use case, which features a larger data volume and a higher requirement on time sensitivity. Nevertheless, a manner of relying on cellular network connections to implement uplink and downlink transmission of time-sensitive data for mobile connected vehicles in the related art poses great challenges to costs and network capacity of the cellular networks for supporting vehicle infotainment services.

Therefore, it is highly necessary and prospective to adopt Wi-Fi to supplement data transmission of the foregoing cellular-network-based connected vehicles. However, how to better implement Wi-Fi-based communication transmission in connected vehicle scenarios is an urgent technical problem to be solved.

### SUMMARY

This application provides a pilot configuration method and a related apparatus, to provide a highly adaptive communication transmission solution based on a Wi-Fi scenario and effectively improve overall performance of a communication transmission system.

According to a first aspect, an embodiment of this application provides a pilot configuration method. The method may be performed by an AP or a module (such as a chip) in an AP. The method includes:
determining, by a first access point (AP), first indication information based on state information of an STA, where the first indication information is used to indicate a pilot subcarrier configuration allocated to the STA; and sending, by the first AP, the first indication information to the STA.

With the above method, the first AP can determine, based on the state information of the STA, the pilot subcarrier configuration allocated to the STA, and further adaptively adjust a pilot subcarrier more flexibly. This is more adaptable to complex and variable communication scenarios, features high flexibility and strong adaptability, and effectively improves overall system performance.

In a possible design, the first indication information includes distributed-tone resource unit (DRU) pilot configuration information and/or regular resource unit (RRU) pilot configuration information; where the DRU pilot configuration information includes a quantity of pilot subcarriers and a location of a pilot subcarrier in a DRU allocated to the STA for uplink and/or downlink communication transmission; and the RRU pilot configuration information includes a quantity of pilot subcarriers and a location of a pilot subcarrier in an RRU allocated to the STA for uplink and/or downlink communication transmission.

With the above scheme, this embodiment of this application provides a plurality of pilot configuration scenarios, for example, an RRU-based pilot configuration scheme or a DRU-based pilot configuration scheme, so that an application scope is broader and features stronger applicability.

As an example, in this embodiment of this application, the location of the pilot subcarrier may be represented by an index of the pilot subcarrier.

In a possible design, the quantity of pilot subcarriers is determined by using at least one of the following methods:
the quantity of pilot subcarriers is linearly positively correlated with a value of the state information of the STA; or
the quantity of pilot subcarriers is positively and non-linearly correlated with a value of the state information of the STA; or
the quantity of pilot subcarriers is determined by the first AP from a correspondence between a value range of the state information and the quantity of pilot subcarriers based on the correspondence and a range in which the value of the state information of the STA falls.

With the above scheme, this embodiment of this application provides a plurality of schemes for determining the quantity of pilot subcarriers based on the state information of the STA.

In a possible design, indices of pilot subcarriers in the DRU pilot configuration information do not include indices corresponding to a direct current subcarrier, a guard subcarrier, and a null subcarrier within the DRU.

In a possible design, indices of pilot subcarriers in the RRU pilot configuration information do not include indices corresponding to a DC subcarrier, a band-edge subcarrier, and a null subcarrier within the RRU.

In a possible design, the pilot subcarriers in the DRU pilot configuration information are symmetrically arranged in the DRU. It may be understood that the symmetric arrangement of the pilot subcarriers in the DRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

With the above scheme, setting locations of the pilot subcarriers to be relatively symmetric can better achieve channel equalization estimation.

In a possible design, pilot subcarriers in the RRU pilot configuration information are symmetrically arranged in the RRU.

Similarly, the symmetric arrangement of the pilot subcarriers in the RRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, a difference between a transmit power of the pilot subcarrier in the DRU pilot configuration information and a transmit power of a data subcarrier in the DRU does not exceed a first threshold.

As an example, in this embodiment of this application, the transmit power of the pilot subcarrier in the DRU may be equal to the transmit power of the data subcarrier in the DRU, that is, the first threshold is 0 at this time.

In a possible design, a difference between a transmit power of the pilot subcarrier in the RRU pilot configuration information and a transmit power of a data subcarrier in the RRU does not exceed a second threshold.

As an example, in this embodiment of this application, the transmit power of the pilot subcarrier in the RRU may be equal to the transmit power of the data subcarrier in the RRU, that is, the second threshold is 0 at this time.

As an example, in this embodiment of this application, the first threshold may be equal to the second threshold, or the first threshold may be not equal to the second threshold. For example, in this embodiment of this application, magnitudes of the first threshold and the second threshold may alternatively be set correspondingly based on respective attribute features of the DRU and the RRU.

In a possible design, the location of the pilot subcarrier in the DRU pilot configuration information includes at least one of the following:

Location of pilot subcarrier in the DRU pilot configuration information are locations of some or all pilot subcarriers in a fixed pilot configuration scheme allocated to the STA; or locations of pilot subcarriers in the DRU pilot configuration information do not include locations of all pilot subcarriers in a fixed pilot configuration scheme allocated to the STA, where the fixed pilot configuration scheme includes an RRU-based fixed pilot configuration scheme and/or a DRU-based fixed pilot configuration scheme.

In a possible design, the location of the pilot subcarrier in the RRU pilot configuration information includes at least one of the following:
Locations of pilot subcarriers in the RRU pilot configuration information are locations of some or all pilot subcarriers in a fixed pilot configuration scheme allocated to the STA; or locations of pilot subcarriers in the RRU pilot configuration information do not include locations of all pilot subcarriers in a fixed pilot configuration scheme allocated to the STA, where the fixed pilot configuration scheme includes an RRU-based fixed pilot configuration scheme and/or a DRU-based fixed pilot configuration scheme.

With the above scheme, the first AP in this embodiment of this application may use a fixed pilot scheme as a reference and perform adaptive adjustment based on the fixed pilot scheme to acquire a new pilot scheme. This can better save configuration time of the AP and acquire a suitable pilot configuration scheme more quickly.

In a possible design, the quantity of pilot subcarriers in the RRU pilot configuration information is a natural number not exceeding a first proportion of a total quantity of subcarriers in the RRU; or the quantity of pilot subcarriers in the DRU pilot configuration information is a natural number not exceeding a second proportion of a total quantity of subcarriers in the DRU.

In a possible design, the quantity of pilot subcarriers in the RRU pilot configuration information may be determined from a fixed pilot configuration quantity set; or the quantity of pilot subcarriers in the DRU pilot configuration information may be determined from a fixed pilot configuration quantity set.

For example, the quantity of pilot subcarriers included in the fixed pilot configuration quantity set may be (2, 4), (2, 4, 6), or the like. It may be understood that fixed pilot configuration quantity sets corresponding to different bandwidths and different RU division types may be different. This is not limited herein.

In a possible design, the quantity of pilot subcarriers in the RRU pilot configuration information is an odd number greater than or equal to 1 and not greater than a total quantity of subcarriers in the RRU.

As an example, in this embodiment of this application, the quantity of pilot subcarriers configured in the RRU may be 1, 3, 5, 7..., or the like, with a maximum value not exceeding the total quantity of subcarriers in the RRU.

As an example, in this embodiment of this application, the quantity of pilot subcarriers may alternatively be set to not exceeding a first preset proportion of the total quantity of subcarriers in the RRU.

For example, assuming that the total quantity of subcarriers in the RRU is 26, and that the first preset proportion is 50%, the quantity of pilot subcarriers in the RRU does not exceed 13.

In a possible design, the quantity of pilot subcarriers in the RRU pilot configuration information is an even number greater than or equal to 0 and not greater than a total quantity of subcarriers in the RRU.

As an example, in this embodiment of this application, the quantity of pilot subcarriers configured in the RRU may be 0, 2, 4, 6..., or the like, with a maximum value not exceeding the total quantity of subcarriers in the RRU.

In a possible design, the quantity of pilot subcarriers in the DRU pilot configuration information is an odd number greater than or equal to 1 and not greater than a total quantity of subcarriers in the DRU.

As an example, in this embodiment of this application, the quantity of pilot subcarriers configured in the DRU may be 1, 3, 5, 7..., or the like, with a maximum value not exceeding the total quantity of subcarriers in the DRU.

As an example, in this embodiment of this application, the quantity of pilot subcarriers may alternatively be set to not exceeding a second preset proportion of the total quantity of subcarriers in the DRU.

For example, assuming that the total quantity of subcarriers in the DRU is 26, and that the second preset proportion is 50%, the quantity of pilot subcarriers in the DRU does not exceed 13.

In a possible design, the quantity of pilot subcarriers in the DRU pilot configuration information is an even number greater than or equal to 0 and not greater than a total quantity of subcarriers in the DRU.

As an example, in this embodiment of this application, the quantity of pilot subcarriers configured in the DRU may be 0, 2, 4, 6..., or the like, with a maximum value not exceeding the total quantity of subcarriers in the DRU.

In a possible design, before the determining, by a first AP, first indication information based on state information of an STA, the method further includes:
receiving, by the first AP, second indication information reported by the STA, where the second indication information is used to indicate the state information of the STA.

In a possible design, the state information of the STA includes one or more of: a moving speed of the STA, a Doppler value of the STA, and an orientation of the STA.

For example, the state information of the STA in this embodiment of this application may be real-time state information. For another example, the state information of the STA in this embodiment of this application may alternatively be state information of the STA in a future period of time. For another example, the state information of the STA in this embodiment of this application may alternatively be state information of the STA in a past period of time.

It should be noted that the state information of the STA in this embodiment of this application is not limited to the moving speed of the STA, the Doppler value of the STA, the orientation of the STA, and the like as described above, and may also include other related information, for example, may also include a communication state, a communication environment, communication quality, a communication failure rate, a communication delay, and the like of the STA during movement. This is not limited herein.

In a possible design, the second indication information is configured in one or more of the following information reported by the STA: channel state information, block acknowledgment information, or location tracking notification frame information.

In a possible design, the receiving, by the first AP, second indication information reported by the STA includes:
receiving, by the first AP at an interval of a preset period, second indication information reported by the STA; or
receiving, by the first AP, second indication information reported by the STA after a variation of a value of the state information exceeds a threshold.

In a possible design, before the receiving, by the first AP, second indication information reported by the STA, the method further includes:
sending, by the first AP, third indication information to the STA, where the third indication information is used to indicate that the first AP has a capability of configuring a pilot subcarrier based on the state information of the STA.

As an example, in this embodiment of this application, if the STA has not received the third indication information sent by the first AP, the STA may perform uplink or downlink communication transmission by using a DRU-based or RRU-based original pilot configuration scheme.

In a possible design, the third indication information is configured in one or more of the following fields sent by the first AP to the STA: a universal signaling (U-SIG) field, an extremely high throughput signaling (EHT-SIG) field, or an extended capability field.

In a possible design, before the determining, by a first AP, first indication information based on state information of an STA, the method further includes:
receiving, by the first AP, fourth indication information sent by a second AP, where the fourth indication information includes the state information of the STA.

Exemplarily, in multi-AP coordinated communication, a specific STA is associated with the second AP but not with the first AP, where the first AP as a primary AP needs to configure pilot information of the STA. In this case, the second AP may send the fourth indication information to the first AP, then the first AP transmits configuration information to the second AP through a channel with the second AP, and finally the second AP sends the configuration information to the STA.

As an example, in this embodiment of this application, the fourth indication information may also include state information of other STAs; and based on its own actual needs, the first AP may acquire, from the fourth indication information sent by the second AP, state information corresponding to a required STA.

As an example, in this embodiment of this application, there is a function of interworking between the first AP and the second AP. This embodiment of this application does not limit a mode of communication between the first AP and the second AP, and the first AP may interact with the second AP based on a wired mode or based on a wireless mode.

For example, the second AP may broadcast the fourth indication information to associated APs in a broadcast manner, where the associated APs include the first AP, so that the first AP can acquire the state information of the STA. For another example, the second AP may perform targeted sending of the fourth indication information through directional propagation. Assuming that first APs associated with the second AP include first AP1 to first AP3, the second AP may directionally propagate the fourth indication information to the first AP1, so that the AP1 can acquire the state information of the STA. For another example, assuming that the second AP is a secondary AP and the first AP is a primary AP, after acquiring the second indication information, the second AP may report the second indication information to the corresponding primary AP, that is, report to the first AP.

As an example, in this embodiment of this application, the fourth indication information may be transmitted between the first AP and the second AP in a wired or wireless manner.

In a possible design, the method further includes:
performing, by the first AP, data transmission to the STA based on the first indication information; or
receiving, by the first AP, data transmitted by the STA based on the first indication information.

According to a second aspect, this application provides a pilot configuration method. The method may be performed by an STA or a module (such as a chip) in an STA. The method includes:
receiving, by the station (STA), first indication information sent by a first AP, where the first indication information is determined by the first AP based on state information of the STA, and the first indication information is used to indicate a pilot subcarrier configuration allocated to the STA; and performing, by the STA, data transmission to the first AP based on the first indication information.

With the above method, the pilot configuration information received by the STA is determined by the first AP based on the state information of the STA. This better meets needs of the STA, achieves more flexible adaptive adjustment on the pilot subcarrier, is more adaptable to complex and variable communication scenarios, achieves high flexibility and strong adaptability, and effectively improves overall system performance.

In a possible design, the first indication information includes DRU pilot configuration information and/or RRU pilot configuration information; where the DRU pilot configuration information includes a quantity of pilot subcarriers and a location of a pilot subcarrier in a DRU allocated to the STA for uplink and/or downlink communication transmission; and the RRU pilot configuration information includes a quantity of pilot subcarriers and a location of a pilot subcarrier in an RRU allocated to the STA for uplink and/or downlink communication transmission.

As an example, in this embodiment of this application, the location of the pilot subcarrier may be represented by an index of the pilot subcarrier.

In a possible design, before the receiving, by the station (STA), first indication information sent by a first AP, the method further includes:
reporting, by the STA, second indication information to the first AP, where the second indication information is used to indicate the state information of the STA.

In a possible design, the STA reports the second indication information to a second AP, so that the second AP sends, to the first AP, the state information of the STA acquired based on the second indication information.

In a possible design, the second indication information is carried in one or more of the following signals reported by the STA to the first AP and/or the second AP: a CSI feedback signal, a block acknowledgment signal, or a location tracking notification frame signal.

In a possible design, the second indication information is reported by the STA to the first AP and/or the second AP at an interval of a preset period; or
the second indication information is reported by the STA to the first AP and/or the second AP after the STA determines that a variation of a value of the state information exceeds a threshold.

In a possible design, before the reporting, by the STA, second indication information to the first AP, the method further includes:
receiving, by the STA, third indication information sent by the first AP, where the third indication information is used to indicate that the first AP has a capability of configuring a pilot subcarrier based on the state information of the STA.

In a possible design, the method further includes:
if the STA has not received the third indication information sent by the first AP, performing, by the STA, uplink and/or downlink communication transmission with the first AP based on a fixed pilot configuration scheme allocated by the first AP to the STA, where the fixed pilot configuration scheme includes an RRU-based fixed pilot configuration scheme and/or a DRU-based fixed pilot configuration scheme.

In a possible design, the third indication information is carried in one or more of the following fields sent by the first AP to the STA: a universal signaling (U-SIG) field, an extremely high throughput signaling (EHT-SIG) field, or an extended capability field.

In a possible design, indices of pilot subcarriers in the DRU pilot configuration information do not include indices corresponding to a direct current subcarrier, a guard subcarrier, and a null subcarrier within the DRU.

In a possible design, indices of pilot subcarriers in the RRU pilot configuration information do not include indices corresponding to a DC subcarrier, a band-edge subcarrier, and a null subcarrier within the RRU.

In a possible design, the pilot subcarriers in the DRU pilot configuration information are symmetrically arranged in the DRU.

It may be understood that the symmetric arrangement of the pilot subcarriers in the DRU in this embodiment of this application is not strictly limited to completely symmetric arrangement, and the symmetric arrangement in this embodiment of this application may further make, based on an actual quantity of pilot subcarriers, locations of pilot subcarriers approximately symmetrically arranged.

In a possible design, pilot subcarriers in the RRU pilot configuration information are symmetrically arranged in the RRU.

Similarly, the symmetric arrangement of the pilot subcarriers in the RRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, a difference between a transmit power of the pilot subcarrier in the DRU pilot configuration information and a transmit power of a data subcarrier in the DRU does not exceed a first threshold.

As an example, in this embodiment of this application, the transmit power of the pilot subcarrier in the DRU may be equal to the transmit power of the data subcarrier in the DRU, that is, the first threshold is 0 at this time.

In a possible design, a difference between a transmit power of the pilot subcarrier in the RRU pilot configuration information and a transmit power of a data subcarrier in the RRU does not exceed a second threshold.

As an example, in this embodiment of this application, the transmit power of the pilot subcarrier in the RRU may be equal to the transmit power of the data subcarrier in the RRU, that is, the second threshold is 0 at this time.

As an example, in this embodiment of this application, the first threshold may be equal to the second threshold, or the first threshold may be not equal to the second threshold. For example, in this embodiment of this application, magnitudes of the first threshold and the second threshold may alternatively be set correspondingly based on respective attribute features of the DRU and the RRU.

In a possible design, the location of the pilot subcarrier in the DRU pilot configuration information includes at least one of the following:
Locations of pilot subcarriers in the DRU pilot configuration information are locations of some or all pilot subcarriers in a fixed pilot configuration scheme allocated to the STA; or locations of pilot subcarriers in the DRU pilot configuration information do not include locations of all pilot subcarriers in a fixed pilot configuration scheme allocated to the STA, where the fixed pilot configuration scheme includes an RRU-based fixed pilot configuration scheme and/or a DRU-based fixed pilot configuration scheme.

In a possible design, the location of the pilot subcarrier in the RRU pilot configuration information includes at least one of the following:
Locations of pilot subcarriers in the RRU pilot configuration information are locations of some or all pilot subcarriers in a fixed pilot configuration scheme allocated to the STA; or locations of pilot subcarriers in the RRU pilot configuration information do not include locations of all pilot subcarriers in a fixed pilot configuration scheme allocated to the STA, where the fixed pilot configuration scheme includes an RRU-based fixed pilot configuration scheme and/or a DRU-based fixed pilot configuration scheme.

In a possible design, the quantity of pilot subcarriers in the RRU pilot configuration information is an odd number greater than or equal to 1 and not greater than a total quantity of subcarriers in the RRU.

As an example, in this embodiment of this application, the quantity of pilot subcarriers configured in the RRU may be 1, 3, 5, 7..., or the like, with a maximum value not exceeding the total quantity of subcarriers in the RRU.

As an example, in this embodiment of this application, the quantity of pilot subcarriers may alternatively be set to not exceeding a first preset proportion of the total quantity of subcarriers in the RRU.

For example, assuming that the total quantity of subcarriers in the RRU is 26, and that the first preset proportion is 50%, the quantity of pilot subcarriers in the RRU does not exceed 13.

In a possible design, the quantity of pilot subcarriers in the RRU pilot configuration information is an even number greater than or equal to 0 and not greater than a total quantity of subcarriers in the RRU.

As an example, in this embodiment of this application, the quantity of pilot subcarriers configured in the RRU may be 0, 2, 4, 6..., or the like, with a maximum value not exceeding the total quantity of subcarriers in the RRU. In a possible design, the quantity of pilot subcarriers in the DRU pilot configuration information is an odd number greater than or equal to 1 and not greater than a total quantity of subcarriers in the DRU.

As an example, in this embodiment of this application, the quantity of pilot subcarriers configured in the DRU may be 1, 3, 5, 7..., or the like, with a maximum value not exceeding the total quantity of subcarriers in the DRU.

As an example, in this embodiment of this application, the quantity of pilot subcarriers may alternatively be set to not exceeding a second preset proportion of the total quantity of subcarriers in the DRU.

For example, assuming that the total quantity of subcarriers in the DRU is 26, and that the first preset proportion is 50%, the quantity of pilot subcarriers in the DRU does not exceed 13.

In a possible design, the quantity of pilot subcarriers in the DRU pilot configuration information is an even number greater than or equal to 0 and not greater than a total quantity of subcarriers in the DRU.

As an example, in this embodiment of this application, the quantity of pilot subcarriers configured in the DRU may be 0, 2, 4, 6..., or the like, with a maximum value not exceeding the total quantity of subcarriers in the DRU.

According to a third aspect, this application provides a pilot configuration method. The method may be performed by a second AP or a module (such as a chip) in a second AP. The method includes:
receiving, by the second access point (AP), second indication information reported by a station (STA), where the second indication information is used to indicate state information of the STA; and sending, by the second AP, fourth indication information to an associated first AP, where the fourth indication information includes the state information of the STA.

As an example, in this embodiment of this application, the fourth indication information may include state information of a plurality of STAs, so that after receiving the fourth indication information, the first AP can acquire the state information of a required STA at one time from the fourth indication information, effectively saving signaling overheads.

With the above method, the first AP can acquire the state information of the STA from the second AP, so that a pilot subcarrier configuration allocated to the STA can be determined based on the state information of the STA. This achieves more flexible adaptive adjustment on the pilot subcarrier, is more adaptable to complex and variable communication scenarios, achieves high flexibility and strong adaptability, and effectively improves overall system performance.

In a possible design, before the receiving, by a second access point (AP), second indication information reported by a station (STA), the method further includes:
sending, by the second AP, third indication information to the STA, where the third indication information is used to indicate that the second AP has a capability of configuring a pilot subcarrier based on the state information of the STA.

In a possible design, before the receiving, by the second access point (AP), second indication information reported by a station (STA), the method further includes:
sending, by the second AP, fifth indication information to the STA, where the fifth indication information is used to indicate the STA to report the state information of the STA.

As an example, the fifth indication information may also be used to indicate that the second AP has a capability of configuring a pilot subcarrier based on the state information of the STA. That is, the fifth indication information may be the third indication information at this time.

In a possible design, before the sending, by the second AP, fourth indication information to an associated first AP, the method further includes:
receiving, by the second AP, sixth indication information sent by the first AP, where the sixth indication information is used to indicate the second AP to report acquired movement information of the STA to the first AP.

According to a fourth aspect, a pilot configuration apparatus is provided. The apparatus is a first AP or a chip in a first AP. The apparatus includes:
a processing module, configured to determine first indication information based on state information of an STA, where the first indication information is used to indicate a pilot subcarrier configuration allocated to the STA; and
a transceiver module, configured to send the first indication information to the STA.

In a possible design, the first indication information includes DRU pilot configuration information and/or RRU pilot configuration information; where the DRU pilot configuration information includes a quantity of pilot subcarriers and a location of a pilot subcarrier in a DRU allocated to the STA for uplink and/or downlink communication transmission; and the RRU pilot configuration information includes a quantity of pilot subcarriers and a location of a pilot subcarrier in an RRU allocated to the STA for uplink and/or downlink communication transmission.

In a possible design, the quantity of pilot subcarriers is determined by using at least one of the following methods:
the quantity of pilot subcarriers is linearly positively correlated with a value of the state information of the STA; or
the quantity of pilot subcarriers is positively and non-linearly correlated with a value of the state information of the STA; or
the quantity of pilot subcarriers is determined by the first AP from a correspondence between a value range of the state information and the quantity of pilot subcarriers based on the correspondence and a range in which the value of the state information of the STA falls.

In a possible design, indices of pilot subcarriers in the DRU pilot configuration information do not include indices corresponding to a DC subcarrier, a band-edge subcarrier, and a null subcarrier within the DRU.

In a possible design, indices of pilot subcarriers in the RRU pilot configuration information do not include indices corresponding to a DC subcarrier, a band-edge subcarrier, and a null subcarrier within the RRU.

In a possible design, the pilot subcarriers in the DRU pilot configuration information are symmetrically arranged in the DRU.

It may be understood that the symmetric arrangement of the pilot subcarriers in the DRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, the pilot subcarriers in the RRU pilot configuration information are symmetrically arranged in the RRU.

Similarly, the symmetric arrangement of the pilot subcarriers in the RRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, a difference between a transmit power of the pilot subcarrier in the DRU pilot configuration information and a transmit power of a data subcarrier in the DRU does not exceed a first threshold.

As an example, in this embodiment of this application, the transmit power of the pilot subcarrier in the DRU may be equal to the transmit power of the data subcarrier in the DRU, that is, the first threshold is 0 at this time.

In a possible design, a difference between a transmit power of the pilot subcarrier in the RRU pilot configuration information and a transmit power of a data subcarrier in the RRU does not exceed a second threshold.

As an example, in this embodiment of this application, the transmit power of the pilot subcarrier in the RRU may be equal to the transmit power of the data subcarrier in the RRU, that is, the second threshold is 0 at this time.

As an example, in this embodiment of this application, the first threshold may be equal to the second threshold, or the first threshold may be not equal to the second threshold. For example, in this embodiment of this application, magnitudes of the first threshold and the second threshold may alternatively be set correspondingly based on respective attribute features of the DRU and the RRU.

In a possible design, the location of the pilot subcarrier in the DRU pilot configuration information includes at least one of the following:
Locations of the pilot subcarriers in the DRU pilot configuration information are locations of some or all pilot subcarriers in a fixed pilot configuration scheme allocated to the STA; or locations of pilot subcarriers in the DRU pilot configuration information do not include locations of all pilot subcarriers in a fixed pilot configuration scheme allocated to the STA, where the fixed pilot configuration scheme includes an RRU-based fixed pilot configuration scheme and/or a DRU-based fixed pilot configuration scheme.

In a possible design, the location of the pilot subcarrier in the RRU pilot configuration information includes at least one of the following:
Locations of pilot subcarriers in the RRU pilot configuration information are locations of some or all pilot subcarriers in a fixed pilot configuration scheme allocated to the STA; or locations of pilot subcarriers in the RRU pilot configuration information do not include locations of all pilot subcarriers in a fixed pilot configuration scheme allocated to the STA, where the fixed pilot configuration scheme includes an RRU-based fixed pilot configuration scheme and/or a DRU-based fixed pilot configuration scheme.

In a possible design, the quantity of pilot subcarriers in the RRU pilot configuration information is an odd number greater than or equal to 1 and not greater than a total quantity of subcarriers in the RRU.

As an example, in this embodiment of this application, the quantity of pilot subcarriers configured in the RRU may be 1, 3, 5, 7..., or the like, with a maximum value not exceeding the total quantity of subcarriers in the RRU.

As an example, in this embodiment of this application, the quantity of pilot subcarriers may alternatively be set to not exceeding a first preset proportion of the total quantity of subcarriers in the RRU.

For example, assuming that the total quantity of subcarriers in the RRU is 26, and that the first preset proportion is 50%, the quantity of pilot subcarriers in the RRU does not exceed 13.

In a possible design, the quantity of pilot subcarriers in the RRU pilot configuration information is an even number greater than or equal to 0 and not greater than a total quantity of subcarriers in the RRU.

As an example, in this embodiment of this application, the quantity of pilot subcarriers configured in the RRU may be 0, 2, 4, 6..., or the like, with a maximum value not exceeding the total quantity of subcarriers in the RRU.

In a possible design, the quantity of pilot subcarriers in the DRU pilot configuration information is an odd number greater than or equal to 1 and not greater than a total quantity of subcarriers in the DRU.

As an example, in this embodiment of this application, the quantity of pilot subcarriers configured in the DRU may be 1, 3, 5, 7..., or the like, with a maximum value not exceeding the total quantity of subcarriers in the DRU.

As an example, in this embodiment of this application, the quantity of pilot subcarriers may alternatively be set to not exceeding a second preset proportion of the total quantity of subcarriers in the DRU.

For example, assuming that the total quantity of subcarriers in the DRU is 26, and that the first preset proportion is 50%, the quantity of pilot subcarriers in the DRU does not exceed 13.

In a possible design, the quantity of pilot subcarriers in the DRU pilot configuration information is an even number greater than or equal to 0 and not greater than a total quantity of subcarriers in the DRU.

As an example, in this embodiment of this application, the quantity of pilot subcarriers configured in the DRU may be 0, 2, 4, 6..., or the like, with a maximum value not exceeding the total quantity of subcarriers in the DRU.

In a possible design, the processing module is further configured to:
receive second indication information reported by the STA, where the second indication information is used to indicate the state information of the STA.

In a possible design, the state information of the STA includes one or more of: a moving speed of the STA, a Doppler value of the STA, and an orientation of the STA.

For example, the state information of the STA in this embodiment of this application may be real-time state information. For another example, the state information of the STA in this embodiment of this application may alternatively be state information of the STA in a future period of time. For another example, the state information of the STA in this embodiment of this application may alternatively be state information of the STA in a past period of time.

In a possible design, the second indication information is configured in one or more of the following information reported by the STA: channel state information, block acknowledgment information, or location tracking notification frame information.

In a possible design, the transceiver module is specifically configured to:
receive, at an interval of a preset period, second indication information reported by the STA; or
receive second indication information reported by the STA after a variation of a value of the state information exceeds a threshold.

In a possible design, the transceiver module is further configured to:
send third indication information to the STA, where the third indication information is used to indicate that the first AP has a capability of configuring a pilot subcarrier based on the state information of the STA.

In a possible design, the third indication information is configured in one or more of the following fields sent by the STA to the first AP: a universal signaling (U-SIG) field, an extremely high throughput signaling (EHT-SIG) field, or an extended capability field.

In a possible design, the transceiver module is further configured to:
receive fourth indication information sent by a second AP, where the fourth indication information includes the state information of the STA.

As an example, in this embodiment of this application, the fourth indication information may also include state information of other STAs; and based on its own actual needs, the first AP may acquire, from the fourth indication information sent by the second AP, state information corresponding to a required STA.

As an example, in this embodiment of this application, there is a function of interworking between the first AP and the second AP. This embodiment of this application does not limit a mode of communication between the first AP and the second AP, and the first AP may interact with the second AP based on a wired mode or based on a wireless mode.

In a possible design, the processing module is further configured to:
perform data transmission to the STA via the transceiver module based on the first indication information; or
receive, via the transceiver module, data transmitted by the STA based on the first indication information.

According to a fifth aspect, this application provides a pilot configuration apparatus. The apparatus is an STA or a chip in an STA. The apparatus includes:
a transceiver module, configured to receive first indication information sent by a first AP, where the first indication information is determined by the first AP based on state information of the STA, and the first indication information is used to indicate a pilot subcarrier configuration allocated to the STA; and
a processing module, configured to perform data transmission to the first AP via the transceiver module based on the first indication information.

In a possible design, the first indication information includes DRU pilot configuration information and/or RRU pilot configuration information; where the DRU pilot configuration information includes a quantity of pilot subcarriers and a location of a pilot subcarrier in a DRU allocated to the STA for uplink and/or downlink communication transmission; and the RRU pilot configuration information includes a quantity of pilot subcarriers and a location of a pilot subcarrier in an RRU allocated to the STA for uplink and/or downlink communication transmission.

In a possible design, the transceiver module is further configured to:
report second indication information to the first AP, where the second indication information is used to indicate the state information of the STA.

In a possible design, the transceiver module is further configured to:
report the second indication information to a second AP, so that the second AP sends, to the first AP, the state information of the STA acquired based on the second indication information.

In a possible design, the second indication information is carried in one or more of the following signals reported by the STA to the first AP and/or the second AP: a CSI feedback signal, a block acknowledgment (BA) signal, or a location tracking notification frame signal.

In a possible design, the second indication information is reported by the STA to the first AP and/or the second AP at an interval of a preset period; or
the second indication information is reported by the STA to the first AP and/or the second AP after the STA determines that a variation of a value of the state information exceeds a threshold.

In a possible design, the transceiver module is further configured to:
receive third indication information sent by the first AP, where the third indication information is used to indicate that the first AP has a capability of configuring a pilot subcarrier based on the state information of the STA.

In a possible design, the processing module is further configured to:
if the third indication information sent by the first AP is not received, perform uplink and/or downlink communication transmission with the first AP based on a fixed pilot configuration scheme allocated by the first AP to the STA, where the fixed pilot configuration scheme includes an RRU-based fixed pilot configuration scheme and/or a DRU-based fixed pilot configuration scheme.

In a possible design, the third indication information is carried in one or more of the following fields sent by the first AP to the STA: a universal signaling (U-SIG) field, an extremely high throughput signaling (EHT-SIG) field, or an extended capability field.

In a possible design, indices of pilot subcarriers in the DRU pilot configuration information do not include indices corresponding to a direct current subcarrier, a guard subcarrier, and a null subcarrier within the DRU.

In a possible design, indices of pilot subcarriers in the RRU pilot configuration information do not include indices corresponding to a direct current subcarrier, a guard subcarrier, and a null subcarrier within the RRU.

In a possible design, the pilot subcarriers in the DRU pilot configuration information are symmetrically arranged in the DRU.

It may be understood that the symmetric arrangement of the pilot subcarriers in the DRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, the pilot subcarriers in the RRU pilot configuration information are symmetrically arranged in the RRU.

Similarly, the symmetric arrangement of the pilot subcarriers in the RRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, a difference between a transmit power of the pilot subcarrier in the DRU pilot configuration information and a transmit power of a data subcarrier in the DRU does not exceed a first threshold.

In a possible design, a difference between a transmit power of the pilot subcarrier in the RRU pilot configuration information and a transmit power of a data subcarrier in the RRU does not exceed a second threshold.

In a possible design, the location of the pilot subcarrier in the DRU pilot configuration information includes at least one of the following:
Locations of pilot subcarriers in the DRU pilot configuration information are locations of some or all pilot subcarriers in a fixed pilot configuration scheme allocated to the STA; or locations of pilot subcarriers in the DRU pilot configuration information do not include locations of all pilot subcarriers in a fixed pilot configuration scheme allocated to the STA, where the fixed pilot configuration scheme includes an RRU-based fixed pilot configuration scheme and/or a DRU-based fixed pilot configuration scheme.

In a possible design, the location of the pilot subcarrier in the RRU pilot configuration information includes at least one of the following:
Locations of pilot subcarriers in the RRU pilot configuration information are locations of some or all pilot subcarriers in a fixed pilot configuration scheme allocated to the STA; or locations of pilot subcarriers in the RRU pilot configuration information do not include locations of all pilot subcarriers in a fixed pilot configuration scheme allocated to the STA, where the fixed pilot configuration scheme includes an RRU-based fixed pilot configuration scheme and/or a DRU-based fixed pilot configuration scheme.

In a possible design, the quantity of pilot subcarriers in the RRU pilot configuration information is an odd number greater than or equal to 1 and not greater than a total quantity of subcarriers in the RRU.

In a possible design, the quantity of pilot subcarriers in the RRU pilot configuration information is an even number greater than or equal to 0 and not greater than a total quantity of subcarriers in the RRU.

In a possible design, the quantity of pilot subcarriers in the DRU pilot configuration information is an odd number greater than or equal to 1 and not greater than a total quantity of subcarriers in the DRU.

In a possible design, the quantity of pilot subcarriers in the DRU pilot configuration information is an even number greater than or equal to 0 and not greater than a total quantity of subcarriers in the DRU.

According to a sixth aspect, this application provides a pilot configuration apparatus. The apparatus is a second AP or a chip in a second AP. The apparatus includes:
a transceiver module, configured to receive second indication information reported by a station (STA), where the second indication information is used to indicate state information of the STA; and
a processing module, configured to send fourth indication information to an associated first AP via the transceiver module, where the fourth indication information includes the state information of the STA.

In a possible design, the transceiver module is further configured to:
send third indication information to the STA, where the third indication information is used to indicate that the second AP has a capability of configuring a pilot subcarrier based on the state information of the STA.

In a possible design, the transceiver module is further configured to:
send fifth indication information to the STA, where the fifth indication information is used to indicate the STA to report the state information of the STA.

As an example, the fifth indication information may also be used to indicate that the second AP has a capability of configuring a pilot subcarrier based on the state information of the STA.

In a possible design, the transceiver module is further configured to:
receive sixth indication information sent by the first AP, where the sixth indication information is used to indicate the second AP to report acquired movement information of the STA to the first AP.

According to a seventh aspect, this application further provides an apparatus. The apparatus may perform the above method designs. The apparatus may be a chip or circuit capable of performing functions corresponding to the above method, or a device including the chip or circuit.

In a possible implementation, the apparatus includes: a memory, configured to store computer-executable program code; and a processor, where the processor is coupled to the memory. The program code stored in the memory includes instructions; and when the processor executes the instructions, the apparatus or a device installed with the apparatus is enabled to perform the method in any one of the above possible designs.

The apparatus may further include a communication interface. The communication interface may be a transceiver, or if the apparatus is a chip or circuit, the communication interface may be an input/output interface of the chip, such as an input/output pin.

In a possible design, the apparatus includes corresponding functional units, respectively configured to implement the steps in the above method. The functions may be implemented by hardware, or by hardware executing corresponding software. The hardware or software includes one or more units corresponding to the above functions.

According to an eighth aspect, this application provides a computer-readable storage medium. The computer-readable storage medium stores a computer program; and when the computer program is run on an apparatus, the method in any one of the above possible designs is performed.

According to a ninth aspect, this application provides a computer program product. The computer program product includes a computer program; and when the computer program is run on an apparatus, the method in any one of the above possible designs is performed.

According to a tenth aspect, this application provides a communication system. The communication system includes at least one AP and at least one STA. A first AP in the at least one AP performs the method in any one of the possible designs in the first aspect, and the STA performs the method in any one of the possible designs in the second aspect.

In a possible design, a second AP in the at least one AP performs the method in any one of the possible designs in the third aspect.

The implementations provided in the above aspects in this application may also be further combined to provide more implementations.

For technical effects brought by the fourth aspect to the tenth aspect, refer to the descriptions of beneficial effects of corresponding schemes in the first aspect to the third aspect. Details are not repeated herein again.

### BRIEF DESCRIPTION OF THE DRAWINGS

To describe the technical solutions in the embodiments of this application or related technologies more clearly, the accompanying drawings to be used in the descriptions of embodiments of this application or related technologies are briefly introduced below. Obviously, the accompanying drawings in the following descriptions are only some embodiments of this application. These accompanying drawings and text descriptions are not intended to limit the scope of this application in any way, but describe the concept of this application for persons skilled in the art by referring to specific embodiments. For persons of ordinary skill in the art, other drawings can also be acquired based on these drawings without creative efforts.
FIG. 1 is a schematic diagram of a network scenario according to an embodiment of this application;
FIG. 2A is a schematic diagram of an RRU pilot configuration in a related technology;
FIG. 2B is a schematic diagram of a DRU pilot configuration in a related technology;
FIG. 3 is a schematic flowchart of a pilot configuration method according to an embodiment of this application;
FIG. 4 is a schematic diagram of division of a 20 MHz RU according to an embodiment of this application;
FIG. 5 is a schematic diagram of an RRU pilot configuration according to an embodiment of this application;
FIG. 6 is a schematic diagram of an RRU pilot configuration according to an embodiment of this application;
FIG. 7 is a schematic diagram of an RRU pilot configuration according to an embodiment of this application;
FIG. 8 is a schematic diagram of an RRU pilot configuration according to an embodiment of this application;
FIG. 9 is a schematic diagram of an RRU pilot configuration according to an embodiment of this application;
FIG. 10 is a schematic diagram of an RRU pilot configuration according to an embodiment of this application;
FIG. 11 is a schematic diagram of an RRU pilot configuration according to an embodiment of this application;
FIG. 12 is a schematic diagram of an RRU pilot configuration according to an embodiment of this application;
FIG. 13 is a schematic diagram of an RRU pilot configuration according to an embodiment of this application;
FIG. 14 is a schematic diagram of an RRU pilot configuration according to an embodiment of this application;
FIG. 15 is a schematic diagram of an RRU pilot configuration according to an embodiment of this application;
FIG. 16 is a schematic diagram of an RRU pilot configuration according to an embodiment of this application;
FIG. 17 is a schematic diagram of an RRU pilot configuration according to an embodiment of this application;
FIG. 18 is a schematic diagram of an RRU pilot configuration according to an embodiment of this application;
FIG. 19 is a schematic diagram of an RRU pilot configuration according to an embodiment of this application;
FIG. 20 is a schematic diagram of an RRU pilot configuration according to an embodiment of this application;
FIG. 21 is a schematic diagram of an RRU pilot configuration according to an embodiment of this application;
FIG. 22 is a schematic diagram of an RRU pilot configuration according to an embodiment of this application;
FIG. 23 is a schematic diagram of an RRU pilot configuration according to an embodiment of this application;
FIG. 24 is a schematic diagram of an RRU pilot configuration according to an embodiment of this application;
FIG. 25 is a schematic diagram of an RRU pilot configuration according to an embodiment of this application;
FIG. 26 is a schematic diagram of an RRU pilot configuration according to an embodiment of this application;
FIG. 27 is a schematic diagram of an RRU pilot configuration according to an embodiment of this application;
FIG. 28 is a schematic diagram of an RRU pilot configuration according to an embodiment of this application;
FIG. 29 is a schematic diagram of an RRU pilot configuration according to an embodiment of this application;
FIG. 30 is a schematic diagram of an RRU pilot configuration according to an embodiment of this application;
FIG. 31 is a schematic diagram of division of a 40 MHz RU according to an embodiment of this application;
FIG. 32 is a schematic diagram of division of an 80 MHz RU according to an embodiment of this application;
FIG. 33 is a schematic diagram of a DRU pilot configuration according to an embodiment of this application;
FIG. 34 is a schematic diagram of a DRU pilot configuration according to an embodiment of this application;
FIG. 35 is a schematic diagram of a DRU pilot configuration according to an embodiment of this application;
FIG. 36 is a schematic diagram of a DRU pilot configuration according to an embodiment of this application;
FIG. 37 is a schematic diagram of a DRU pilot configuration according to an embodiment of this application;
FIG. 38 is a schematic diagram of a DRU pilot configuration according to an embodiment of this application;
FIG. 39 is a schematic diagram of a DRU pilot configuration according to an embodiment of this application;
FIG. 40 is a schematic diagram of a DRU pilot configuration according to an embodiment of this application;
FIG. 41 is a schematic diagram of a DRU pilot configuration according to an embodiment of this application;
FIG. 42 is a schematic diagram of a DRU pilot configuration according to an embodiment of this application;
FIG. 43 is a schematic diagram of a DRU pilot configuration according to an embodiment of this application;
FIG. 44 is a schematic diagram of a DRU pilot configuration according to an embodiment of this application;
FIG. 45 exemplarily shows a possible flowchart of a pilot configuration application method according to an embodiment of this application;
FIG. 46 exemplarily shows a possible flowchart of a pilot configuration application method according to an embodiment of this application;
FIG. 47 is a schematic diagram of a pilot configuration according to an embodiment of this application;
FIG. 48 exemplarily shows a possible flowchart of a pilot configuration application method according to an embodiment of this application;
FIG. 49 is a schematic diagram of a structure of a pilot configuration apparatus according to an embodiment of this application; and
FIG. 50 is a schematic diagram of a structure of an electronic device according to an embodiment of this application.

### DESCRIPTION OF EMBODIMENTS

Some technical terms involved in this application are explained in the following content.
(1) A subcarrier refers to a sub-resource. In an orthogonal frequency division multiplexing (OFDM) system, frequency domain resources are divided into several sub-resources, and each sub-resource in frequency domain may be referred to as one subcarrier. A subcarrier may also be understood as the minimum granularity of frequency domain resources.
(2) A pilot subcarrier or pilot tone (pilot tone or pilot tones) is used for phase tracking and parameter tracking, and for channel estimation.
(3) Bandwidth refers to a continuous bandwidth resource configured by a network side to a terminal device, and can implement flexible transmission bandwidth configuration on the network side and the terminal device side.
   The bandwidth consists of continuous resource units in frequency domain. The bandwidth is a subset of bandwidth of the terminal device. The minimum granularity of bandwidth in frequency domain is one resource unit (RU).
(4) Regular resource unit (RRU) refers to a resource unit with continuous tones.
(5) A distributed-tone resource unit (DRU) refers to a resource unit with discontinuous tones. For example, tones of a small-size resource unit (RU) are allocated to a large bandwidth, so that the tones for each station (STA) are discontinuous. Therefore, each tone can be transmitted at a higher power.
(6) A fixed pilot configuration scheme means that a quantity of pilot subcarriers and a location of a pilot subcarrier are fixed.

Exemplarily, the fixed pilot configuration scheme described in the embodiments of this application may be a pilot configuration scheme preset according to different RU division types. The quantity and locations of pilots corresponding to each RU division type are fixed, that is, the pilot configuration scheme is only associated with the RU division type. For example, the fixed pilot configuration scheme may adopt a pilot configuration scheme specified in related technologies or protocols. For example, in a 20 MHz scenario, one 26-tone RU consists of 24 data subcarriers and two pilot subcarriers, one 52-tone RU consists of 48 data subcarriers and four pilot subcarriers, one 106-tone RU consists of 102 data subcarriers and four pilot subcarriers, and so on.

Exemplarily, the fixed pilot configuration scheme described in the embodiments of this application may also serve as a special implementation case of this application, that is, only one quantity of pilot subcarriers and a location of a pilot subcarrier are provided in the pilot configuration scheme. For example, in some specific scenarios of the embodiments of this application, when a moving speed of an STA does not exceed a speed threshold, due to the limited quantity of subcarriers in the RU, the pilot configuration scheme is not adjusted along with a change in the moving speed of the STA. In this case, on the premise that the moving speed of the STA does not exceed the speed threshold, the quantity of pilot subcarriers and the location of the pilot subcarrier in the pilot configuration scheme remain fixed.

In the embodiments of this application, "at least one" means one or more, and "a plurality of" means two or more. "And/or" describes an association relationship of associated objects and indicates that three relationships may exist. For example, A and/or B may indicate: A exists alone, A and B exist simultaneously, or B exists alone, where A and B each may be in a singular form or a plural form. The character "/" generally indicates an "or" relationship between associated objects before and after the character. "At least one (item) of the following" or similar expressions refer to any combination of these items, including a single item (one) or any combination of a plurality of items (ones). For example, at least one (one) of a, b, or c may indicate: a, b, c, a and b, a and c, b and c, or a, b, and c, where each of a, b, c may be an element or a set containing one or more elements.

In this application, "exemplary", "in some embodiments", "in some other embodiments", and the like are used to give examples, illustrations, or explanations. Any embodiment or design scheme described as "exemplary" in this application should not be interpreted as being preferable or superior to other embodiments or design schemes. Specifically, the term "exemplary" is intended to present concepts in a specific form.

In this application, "of (of)", " relevant (relevant)", and "corresponding (corresponding)" may sometimes be used interchangeably. It should be noted that meanings they express are consistent when no distinction is emphasized. In the embodiments of this application, communication and transmission may sometimes be used interchangeably. It should be noted that meanings they express are consistent when no distinction is emphasized. For example, transmission may include sending and/or receiving, and may serve as a noun or a verb.

It should be noted that the terms "first", "second", and the like involved in the embodiments of this application are merely used for distinguishing descriptions, and should not be understood as indicating or implying relative importance, nor indicating or implying inherent order.

The embodiments of this application may be applicable to a local area network (LAN), in particular a wireless local area network (WLAN), such as a WLAN adopting any one of the protocols in the Institute of Electrical and Electronics Engineers (IEEE) 802.11 series, such as 802.11a/b/g, 802.11n, 802.11ac, 802.11ax, 802.11be, or a next-generation standard such as 802.11bn, or a further next-generation standard. Alternatively, the embodiments of this application may also be applicable to a wireless local area network such as an Internet of Things (IoT) network or a vehicle-to-everything (V2X) network. Certainly, the embodiments of this application may also be applicable to other possible communication systems, such as a long term evolution (LTE) communication system, an LTE frequency division duplex (FDD) communication system, an LTE time division duplex (TDD) communication system, a universal mobile telecommunication system (UMTS), a worldwide interoperability for microwave access (WiMAX) communication system, a fifth generation (5G) communication system, and a future evolved communication system.

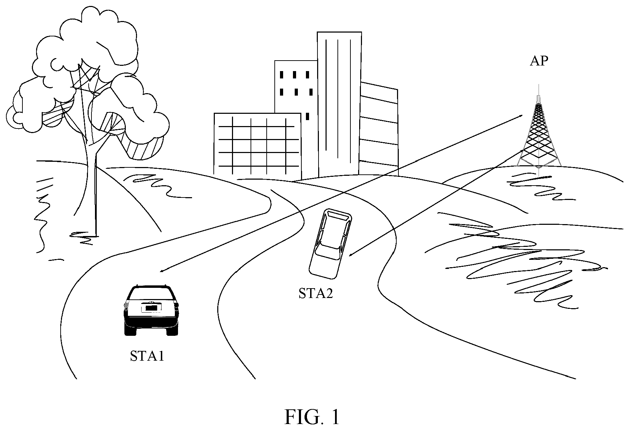

The following description uses a scenario in which the embodiments of this application may be applicable to a WLAN as an example. Referring to FIG. 1, FIG. 1 is a diagram of a WLAN network architecture applicable to the embodiments of this application. FIG. 1 uses an example in which the WLAN includes one access point (AP) and two STAs. An STA associated with the AP can receive data information sent by the AP and can also send data information to the AP. In addition, the embodiments of this application are also applicable to communication between APs. For example, APs may communicate with each other through a distributed system (DS). The embodiments of this application are also applicable to communication between STAs. The APs and STAs involved in the embodiments of this application may be APs and STAs that comply with the IEEE 802.11 system standard. It should be understood that quantities of APs and STAs in FIG. 1 are merely an example, and more or less APs and STAs may be deployed.

An STA involved in the embodiments of this application may be a wireless communication chip, a wireless sensor, a wireless communication terminal, or the like. For example, the STA may include various user terminals, vehicles, user devices, access devices, subscriber stations, subscriber units, mobile stations, user agents, user equipment, or other devices with a wireless communication function. The user terminal may include various handheld devices, vehicle-mounted devices, wearable devices, computing devices with a wireless communication function, or other processing devices connected to wireless modems, as well as various forms of user equipment (UE), mobile stations (MS), terminals (terminal), terminal devices (terminal equipment), portable communication devices, handheld devices, portable computing devices, entertainment devices, gaming devices or systems, global positioning system devices, or any other suitable device configured to perform network communication over a wireless medium. Herein, for ease of description, the above-mentioned devices are collectively referred to as a station or an STA. Optionally, the STA may support the 802.11be standard, or may also support multiple WLAN standards in the 802.11 series such as 802.11ax, 802.11ay, 802.11ac, 802.11n, 802.11g, 802.11b, 802.11a, 802.11be, and the next-generation 802.11bn standard.

An AP involved in the embodiments of this application may be a device deployed in a wireless communication network to provide wireless communication functions for associated STAs. The AP can serve as a hub of the communication system and acts as a bridge connecting a wired network and a wireless network. The main function of the AP is to connect various wireless network clients and then access the wireless network to an Ethernet. For example, the AP may be a communication device such as a base station, a router, a gateway, a repeater, a communication server, a switch, or a bridge, where the base station may include various forms of macro base stations, micro base stations, relay stations, and the like. Herein, for ease of description, the above-mentioned devices are collectively referred to as an AP. Optionally, the AP may be a device supporting the 802.11be standard, or may be a device supporting multiple WLAN standards in the 802.11 series such as 802.11ax, 802.11ay, 802.11ac, 802.11n, 802.11g, 802.11b, 802.11a, 802.11be, and the next-generation 802.11bn standard.

The network architecture and service scenarios described in the embodiments of this application are intended to clearly illustrate the technical solutions of the embodiments of this application and shall not constitute any limitation to the technical solutions provided in the embodiments of this application. Persons of ordinary skill in the art understand that as network architectures evolve and new service scenarios emerge, the technical solutions provided in the embodiments of this application are also applicable to similar technical problems.

In the embodiments of this application, description is given by taking interaction between a terminal device and a network device as an example. The method provided in the embodiments of this application may also be applicable to interactions between other execution subjects, for example, interaction between a chip or module of a terminal device and a chip or module of a network device. When the execution subject is a chip or module, reference may be made to the descriptions in the embodiments of this application, and details are not repeated herein.

When an AP communicates with an STA, the AP may allocate resources to the STA, and the STA performs data transmission and reception on the allocated resources. For example, orthogonal frequency division multiple access (OFDMA) or multi-user multiple-input multiple-output (MU-MIMO) technology may be adopted between the AP and the STA for wireless communication.

In OFDMA and MU-MIMO technologies, a WLAN protocol divides spectrum bandwidth into several resource units (RU). For example, bandwidth configurations supported by related art may include 20 MHz, 40 MHz, 80 MHz, 160 MHz, and 80+80 MHz. A difference between 160 MHz and 80+80 MHz lies in that the former is a continuous frequency band, while two 80 MHz parts in the latter may be separated, that is, the 160 MHz formed by 80+80 MHz is discontinuous.

According to different spectrum bandwidths, the spectrum bandwidth may be divided into multiple types of RUs, including 26-subcarrier RU, 52-subcarrier RU, 106-subcarrier RU, 242-subcarrier RU (maximum RU within 20 MHz bandwidth), 484-subcarrier RU (maximum RU within 40 MHz bandwidth), 996-subcarrier RU (maximum RU within 80 MHz bandwidth), and 2*996-subcarrier RU (maximum RU within 160 MHz bandwidth). For the maximum quantity of RUs in 20 MHz, 40 MHz, 80 MHz, 160 MHz, and 80+80 MHz, reference may be made to Table 1 below:

**Table 1. Maximum quantity of RUs under different bandwidths**

| RU type | CBW20 | CBW40 | CBW80 | CBW80+80 and CBW160 |
|---|---|---|---|---|
| 26-tone RU | 9 | 18 | 37 | 74 |
| 52-tone RU | 4 | 8 | 16 | 32 |
| 106-tone RU | 2 | 4 | 8 | 16 |
| 242-tone RU | 1 | 2 | 4 | 8 |
| 484-tone RU | N/A | 1 | 2 | 4 |
| 996-tone RU | N/A | N/A | 1 | 2 |
| 2×996 tone RU | N/A | N/A | N/A | 1 |

Each RU consists of continuous subcarriers. For example, a 26-subcarrier RU consists of 26 continuous subcarriers. In the following context, a 26-subcarrier RU is denoted as 26-tone RU, a 52-subcarrier RU as 52-tone RU, and so on. The entire bandwidth includes not only 26-tone RU, 52-tone RU, and the like used for data transmission, but also other subcarriers, such as one or more of guard subcarriers, null subcarriers, direct current (DC) subcarriers, and pilot subcarriers. During the communication transmission, an STA often needs to perform channel identification or assist in signal recognition based on pilot subcarriers within the spectrum bandwidth, so as to better ensure the smooth proceeding of communication transmission.

The following briefly describes the pilot configuration scheme for communication transmission between an AP and an STA in the related art:

Exemplarily, Table 2 below is an index table of data subcarriers and pilot subcarriers of each RRU for a 20 MHz EHT protocol data unit (PPDU).

**Table 2. Index table of data subcarriers and pilot subcarriers for each RRU of a 20 MHz EHT PPDU**

| RU type (type) | RRU index and subcarrier range (RU index and subcarrier range) | | | | |
|---|---|---|---|---|---|
| 26-tone RU | RRU 1 [-121: -96] | RRU 2 [-95: -70] | RRU 3 [-68: -43] | RRU 4 [-42: -17] | RRU 5 [-16: -4, 4: 16] |
| | RRU 6 [17: 42] | RRU 7 [43: 68] | RRU 8 [70: 95] | RRU 9 [96: 121] | |
| 52-tone RU | RRU 1 [-121: -70] | RRU 2 [-68: -17] | RRU 3 [17: 68] | RRU 4 [70: 121] | |
| 106-tone RU | RRU 1 [-122: -17] | | RRU 2 [17: 122] | | |
| 242-tone RU | RRU 1 [-122: -2, 2:122] | | | | |

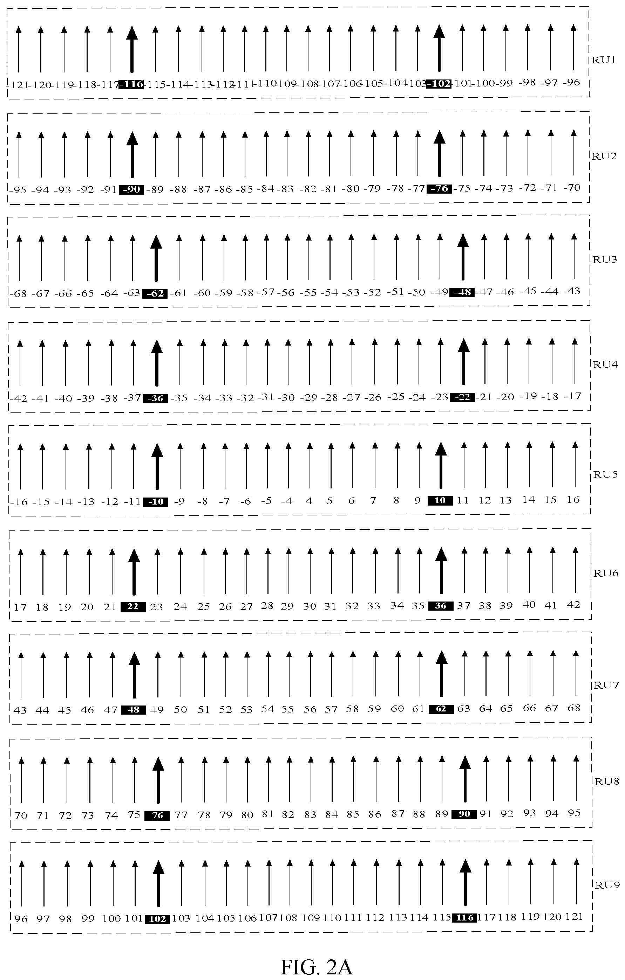

Taking the mapping of the 26-tone RRU in Table 2 as an example, as shown in FIG. 2A, the pilot subcarrier configuration scheme based on RRU in the related art is introduced. The quantity and locations of pilots configured based on RRU in the related art are fixed. For example, a 26-tone RRU consists of 24 data subcarriers and two pilot subcarriers. The locations of the pilot subcarriers in the RRU are {-116, -102}, {-90, -76}, {-62, -48}, {-36, -22}, {-10, 10}, {22, 36}, {48, 62}, {76, 90}, {102, 116}.

Similarly, the quantity and locations of pilots constructed by the 52-tone RRU in Table 2 are also fixed settings, for example, a 52-tone RRU consists of 48 data subcarriers and 4 pilot subcarriers, and the locations of the pilot subcarriers are {-116, -102, -90, -76}, {-62, -48, -36, -22}, {22, 36, 48, 62}, {76, 90, 102, 116}. The quantity and locations of pilots constructed by the 106-tone RRU in Table 2 are also fixed settings, for example, a 106-tone RRU consists of 102 data subcarriers and 4 pilot subcarriers. The locations of the pilot subcarriers are {-116, -90, -48, -22}, {22, 48, 90, 116}. The quantity and locations of pilots constructed by the 242-tone RRU in Table 2 are also fixed. For example, a 242-tone RRU consists of 234 data subcarriers and eight pilot subcarriers. The locations of the pilot subcarriers are {-116, -90, -48, -22, 22, 48, 90, 116}.

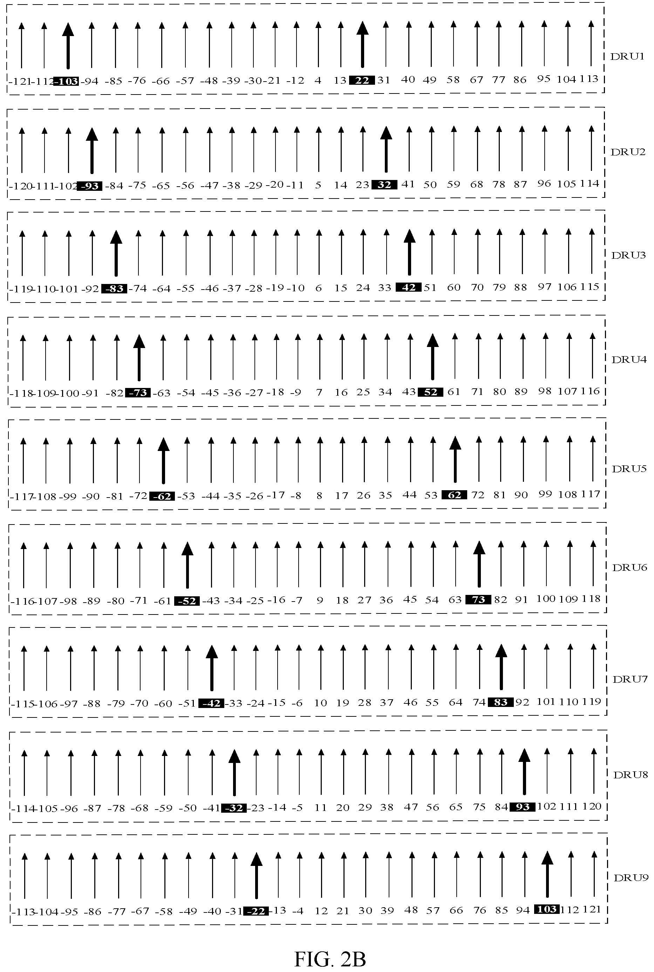

In addition, the quantity and locations of pilots configured based on DRU in the related art are also fixed, for example, as shown in FIG. 2B, in a 20 MHz case, a 26-tone DRU consists of 24 data subcarriers and two pilot subcarriers. The locations of the pilot subcarriers in the DRU are {-103, 22}, {-93, 32}, {-83, 42}, {-73, 52}, {-62, 62}, {-52, 73}, {-42, 83}, {-32, 93}, {-22, 103}.

Similarly, the quantity and locations of pilots for RRUs and DRUs under various division types in other bandwidths are also fixed. For brevity, details are not repeated herein.

However, due to the fixed quantity and locations of pilots, the pilot configuration schemes provided in the related art cannot be flexibly adjusted according to actual communication transmission scenarios, which often leads to problems such as low communication efficiency and poor communication performance. For example, when the STA is a running vehicle in a connected vehicle scenario, the state information of the STA changes, and in the related art, the AP directly performs communication transmission with the STA based on the fixed quantity and locations of pilots, which cannot adapt to the actual situation of uplink and downlink transmission of time-sensitive data for mobile connected vehicles, such as inability to adapt to more frequent channel estimation required for rapidly changing channels and/or channel estimation in more complex environments, resulting in low performance of the communication system and poor user experience.

To solve this problem, the embodiments of this application provide a pilot configuration method and a related apparatus, so as to provide a more flexible pilot configuration scheme, effectively adapt to the operating state of the STA, and improve overall performance of the data transmission system.

Based on the network system architecture shown in FIG. 1 above and the content introduced in the related art above, the embodiments of this application provide a pilot configuration method, where the method is executed by taking an AP and an STA as examples for introduction. In addition, it should be understood that the AP may also be replaced by a communication device with AP functions or a chip, unit, or module inside a communication device with AP functions. The STA may also be replaced by a communication device with an STA function, or a chip, unit, or module inside a communication device with an STA function.

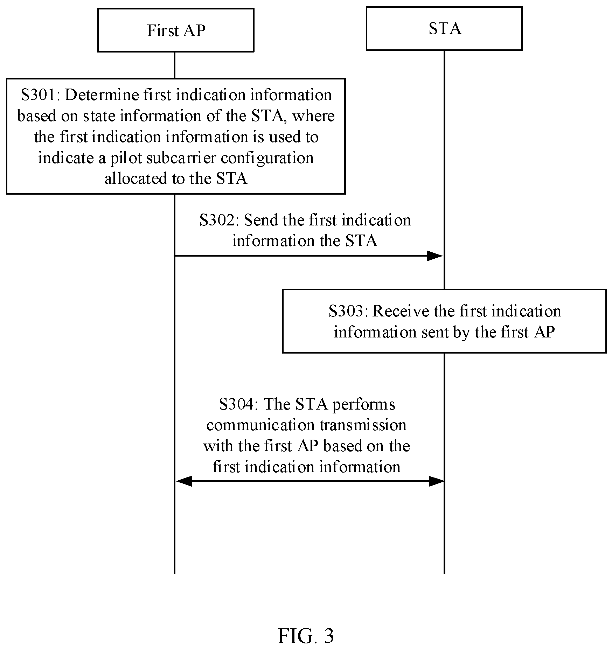

FIG. 3 exemplarily shows a possible flowchart of a pilot configuration method according to an embodiment of this application. As shown in FIG. 3, the method includes the following steps:
S301: A first access point (AP) determines first indication information based on state information of an STA, where the first indication information is used to indicate a pilot subcarrier configuration allocated to the STA.

As an example, in the embodiments of this application, the magnitude of a value of the state information of the STA or the magnitude of a value variation amplitude may be linearly positively correlated with the quantity of pilot subcarriers in the pilot subcarrier configuration. Alternatively, in the embodiments of this application, the magnitude of a value of the state information of the STA or the magnitude of a value variation amplitude may be positively and non-linearly correlated with the quantity of pilot subcarriers in the pilot subcarrier configuration.

The state information of the STA in the embodiments of this application may be one type or may be a plurality of types, and the state information of the STA includes but is not limited to a moving speed of the STA, a Doppler value of the STA, and a location of the STA.

For example, when the state information of the STA includes only the moving speed of the STA, the higher the moving speed of the STA, the larger quantity of pilot subcarriers in the first indication information configured by the first AP for the STA based on the state information of the STA. Alternatively, when the state information of the STA includes only the Doppler of the STA, the larger the Doppler value of the STA, the larger quantity of pilot subcarriers in the first indication information configured by the first AP for the STA based on the state information of the STA. Alternatively, when the state information of the STA includes only the location of the STA, the greater the location variation of the STA, the larger quantity of pilot subcarriers in the first indication information configured by the first AP for the STA based on the state information of the STA.

Further, when the state information of the STA acquired by the first AP includes a plurality of pieces of information, for example, the state information of the STA includes moving speed, Doppler value, and location variation, the first AP may perform pilot subcarrier configuration with reference to the information with the highest priority. Priorities of the three data of moving speed, Doppler value, and location variation may be preset, for instance, the priority of moving speed is higher than that of Doppler value, and the priority of Doppler value is higher than that of location variation. In this case, the first AP may perform pilot subcarrier configuration with reference to the moving speed of the STA. Alternatively, the first AP may randomly select one data from the three data of moving speed, Doppler value, and location variation as a reference for pilot subcarrier configuration. For example, the configuration can be determined only through the moving speed, or only through the Doppler value, or only through the location variation. Alternatively, the first AP may comprehensively consider the three data of moving speed, Doppler value, and location variation, and adopt them jointly as a reference for pilot subcarrier configuration. For example, a comprehensive value of state information can be calculated by means of weighting according to the moving speed, the Doppler value, and the location variation, and the pilot subcarrier configuration is then determined based on the comprehensive value of the state information.

As an example, in the embodiments of this application, the first AP may also determine the quantity of pilot subcarriers in the pilot subcarrier configuration according to a correspondence between a value range of the state information of the STA (referred to as the value range of the state information for short) and the quantity of pilot subcarriers.

For example, the embodiments of this application may preset a correspondence between a value range of state information and the quantity of pilot subcarriers for different RU division types under different bandwidths. Assume that in a 20 MHz 26-tone RU scenario, when the speed range in the state information is 0 km/h to 3 km/h, the recommended quantity of pilot subcarriers is 2; when the speed range is 3 km/h to 10 km/h, the recommended quantity of pilot subcarriers is 3; when the speed range is 10 km/h to 30 km/h, the recommended quantity of pilot subcarriers is 5 or the like.. Assume that in a 20 MHz 52-tone RU scenario, when the speed range in the state information is 0 km/h to 3 km/h, the recommended quantity of pilot subcarriers is 2; when the speed range is 3 km/h to 13 km/h, the recommended quantity of pilot subcarriers is 4; when the speed range is 13 km/h to 35 km/h, the recommended quantity of pilot subcarriers is 5 or the like.

It should be noted that this correspondence is merely an example and shall not constitute any limitation to the embodiments of this application. The embodiments of this application may set the correspondence between the value range of state information and the quantity of pilot subcarriers according to actual scenarios.

As an example, assume that the first AP in the embodiments of this application needs to acquire the state information of STA1, then the first AP in the embodiments of this application may acquire the state information of STA1 in multiple methods, specifically not limited to the following two types:
Acquisition method 1: The first AP receives second indication information sent by STA1, where the second indication information is used to indicate the state information of STA1.

The second indication information in the embodiments of this application may be acquired by the first AP from one or more signals in channel state information (CSI) feedback, block acknowledgment (BA), or location tracking notification frames (Location Tracking Notification frames) reported by STA1.

Further, before the STA1 sends the second indication information to the first AP in the embodiments of this application, the first AP may send third indication information to STA1, where the third indication information is used to indicate that the first AP has a capability of configuring a pilot subcarrier based on the state information of the STA, so that after receiving the third indication information, STA1 reports the second indication information to the first AP.

Optionally, if the STA1 in the embodiments of this application does not receive the third indication information sent by the first AP, STA1 may perform communication transmission with the first AP according to a fixed pilot configuration scheme allocated by the first AP to STA1.

The third indication information may be acquired by STA1 from one or more of a universal signaling (U-SIG) field, an extremely high throughput signaling (EHT-SIG) field, or an extended capability field sent by the first AP.

Acquisition method 2: The first AP receives the state information of STA1 sent by a second AP.

Exemplarily, at least one STA in the embodiments of this application may report the second indication information to the second AP, where the at least one STA includes STA1. After receiving the second indication information reported by the at least one STA, the second AP may generate fourth indication information based on the at least one second indication information, and send the fourth indication information to the first AP, where the fourth indication information includes the state information of STA1.

As an example, the fourth indication information in the embodiments of this application may include state information of one or more STAs, so that after receiving the fourth indication information, the first AP may acquire state information of a required STA from the state information of the one or more STAs included in the fourth indication information.

It may be understood that when the fourth indication information includes only the state information of STA1, the second AP may directly forward the received state information of STA1 to the first AP.

For example, the fourth indication information includes state information of STA1, state information of STA2, and state information of STA3. After the first AP receives the fourth indication information, the first AP may acquire the state information of STA1 from the fourth indication information according to needs.

As an example, before STA1 sends the second indication information to the second AP in the embodiments of this application, the second AP may send third indication information to STA1, where the third indication information is used to indicate that the second AP has a capability of configuring a pilot subcarrier based on the state information of the STA, so that after receiving the third indication information, STA1 reports the second indication information to the second AP.

It may be understood that the second AP in the embodiments of this application may also be an AP with a capability to configure pilot subcarriers based on the state information of the STA. In this case, the second AP can not only send the received state information of the STA to other APs, but also perform a pilot configuration for the corresponding STA based on the received state information of the STA. Alternatively, the second AP in the embodiments of this application may be an AP without a capability to configure pilot subcarriers based on the state information of the STA. In this case, the second AP may forward the received state information of the STA to other APs.

There are a plurality of situations in which the first AP in the embodiments of this application acquires the state information of STA1 through the second AP, specifically not limited to the following two types:
Scenario 1: When the first AP is a primary AP, the second AP is a secondary AP, and STA1 cannot directly access the first AP but only accesses the second AP, the first AP may send the first indication information to STA1 through the second AP. After receiving the first indication information, STA1 reports the state information of STA1 to the second AP, and the second AP notifies the first AP of the received state information of STA1.
Scenario 2: When STA1 roams from the second AP to the first AP, the second AP may notify the first AP of the acquired state information of STA1, so as to better implement seamless roaming.

The embodiments of this application do not limit the communication mode between the first AP and the second AP. The first AP may interact with the second AP in a wired manner or in a wireless manner.

For example, the second AP may broadcast the state information of STA1 to associated APs in a broadcast manner, where the associated APs include the first AP, so that the first AP can acquire the state information of STA1. For another example, the second AP may send the fourth indication information in a targeted directional transmission manner, assuming that first APs associated with the second AP include first AP1 to first AP3, the second AP may perform directional transmission to the first AP1, so that the AP1 can acquire the state information of STA1. As yet another example, assuming that the second AP is a secondary AP and the first AP is a primary AP, after acquiring the state information of STA1, the second AP may report the state information of STA1 to the corresponding primary AP, that is, report to the first AP.

S302: The first AP sends the first indication information to the STA.

As an example, the first indication information in the embodiments of this application includes various content, specifically not limited to the following types:
Content 1: The first indication information includes RRU pilot configuration information.

Exemplarily, the RRU pilot configuration information includes a quantity of pilot subcarriers and a location of a pilot subcarrier in an RRU allocated to the STA.

Locations of pilot subcarriers in the RRU pilot configuration information in the embodiments of this application may be indices respectively corresponding to the pilot subcarriers, so that the STA can determine the locations of the pilot subcarriers in the RRU based on the indices respectively corresponding to the pilot subcarriers. Alternatively, locations of pilot subcarriers in the RRU pilot configuration information may be offset values of the pilot subcarriers relative to a target subcarrier index, so that the STA can determine the locations of the pilot subcarriers in the RRU based on the index of the target subcarrier and the offset values of the respective pilot subcarriers relative to the target subcarrier.

The target subcarrier in the embodiments of this application may be a data subcarrier, or may be a pilot subcarrier or another type of subcarrier, which is not limited herein. In addition, the index of the target subcarrier in the embodiments of this application may be preset, or carried in the RRU pilot configuration information in the first indication information.

Content 2: The first indication information includes DRU pilot configuration information.

Exemplarily, the DRU pilot configuration information includes a quantity of pilot subcarriers and a location of a pilot subcarrier in a DRU allocated to the STA.

Locations of pilot subcarriers in the DRU pilot configuration information in the embodiments of this application may be indices respectively corresponding to the pilot subcarriers, so that the STA can determine the locations of the pilot subcarriers in the DRU based on the indices respectively corresponding to the pilot subcarriers. Alternatively, locations of pilot subcarriers in the DRU pilot configuration information may be offset values of the pilot subcarriers relative to a target subcarrier index, so that the STA can determine the locations of the pilot subcarriers in the DRU based on the index of the target subcarrier and the offset values of the respective pilot subcarrier relative to the target subcarrier.

The target subcarrier in the embodiments of this application may be a data subcarrier, or may be a pilot subcarrier or another type of subcarrier, which is not limited herein. In addition, the index of the target subcarrier in the embodiments of this application may be preset, or carried in the DRU pilot configuration information in the first indication information.

Content 3: The first indication information includes DRU pilot configuration information and RRU pilot configuration information.

Exemplarily, when the first indication information received by the STA includes DRU pilot configuration information and RRU pilot configuration information, the STA may select corresponding pilot configuration information for communication transmission according to actual scenarios. Alternatively, the STA may select pilot configuration information with higher priority for communication transmission based on priority levels of the DRU pilot configuration information and RRU pilot configuration information, where the priorities of the DRU pilot configuration information and RRU pilot configuration information may be set by the network side. For example, when the first indication information includes DRU pilot configuration information and RRU pilot configuration information, if the communication transmission scenario is long-distance transmission, the DRU pilot configuration information has a higher priority than the RRU pilot configuration information, and in this case, the STA may select the DRU pilot configuration information from the first indication information for communication transmission with the first AP; and if the communication transmission scenario is short-distance transmission, the RRU pilot configuration information has a higher priority than the DRU pilot configuration information, and in this case, the STA may select the RRU pilot configuration information from the first indication information for communication transmission with the first AP.

S303: The STA receives the first indication information sent by the first AP.

S304: The STA performs communication transmission with the first AP based on the first indication information.

The communication transmission in step S304 in the embodiments of this application may include uplink communication transmission from the STA to the first AP based on the first indication information, and/or may include downlink communication transmission from the first AP to the STA based on the first indication information, which is not limited herein.

Further, there are a plurality of scenarios in which the STA reports the second indication information to the first AP and/or the second AP in the embodiments of this application, specifically not limited to the following two types:
Reporting scenario 1: The STA reports the second indication information to the corresponding AP at an interval of a preset period.

Exemplarily, assuming that the preset period is 30 minutes in the embodiments of this application, the STA acquires its own state information every 30 minutes to generate the second indication information, and then sends the second indication information to the corresponding AP.

Reporting scenario 2: The second indication information reported by the STA when a variation of the state information exceeds a threshold.

Exemplarily, assuming that the third threshold in the embodiments of this application includes 3 km/h, when the moving speed of the STA at the previous moment is 5 km/h and the moving speed of the STA at the current moment is 9 km/h, and the variation of moving speed exceeds 3 km/h included in the third threshold, the STA is triggered to generate new second indication information based on its current state information, and then send the second indication information to the corresponding AP.

Reporting scenario 3: After receiving a state information reporting instruction sent by the AP, the STA is triggered to report the second indication information to the corresponding AP.

As an example, the state information reporting instruction in the embodiments of this application may be the third indication information introduced in the above content. That is, it is used to indicate that the AP has the capability to configure pilot subcarriers based on the state information of the STA, so that after receiving the third indication information, the STA reports the second indication information to the second AP; alternatively, the state information reporting instruction is merely used to indicate that the STA reports its own state information.

As an example, the state information reported by the STA in the embodiments of this application may be current state information, or may be state information for a future period of time. For example, when the STA is a vehicle, the vehicle may predict its future driving speed based on road conditions of subsequent road segments planned by map navigation, so that the STA reports state information for a future period of time. Accordingly, the AP can perform pilot configuration in advance based on the state information for the future period of time, which is more forward-looking.

With the above scheme, since the first AP can determine, based on the state information of the STA, the pilot subcarrier configuration allocated to the STA, different channel estimation effects can be implemented by increasing or decreasing the quantity of pilot subcarriers and adjusting the locations of the pilot subcarriers. Therefore, pilot subcarriers can be adjusted more flexibly according to actual communication conditions, so as to adapt to complex and variable communication scenarios. The solution features high flexibility and strong adaptability, and effectively improves overall system performance.

Further, to better understand the embodiments of this application, the embodiments of this application are introduced separately based on different resource construction scenarios based on the content described in FIG. 3 above, specifically not limited to the following two resource construction scenarios:
Resource construction scenario 1: An RRU pilot configuration is flexibly performed based on state information of the STA.

As an example, among the foregoing plurality of configuration manners, to better improve the overall communication transmission performance, the pilot subcarriers in the RRU pilot configuration information in the embodiments of this application are symmetrically arranged in the RRU, or approximately symmetrically arranged.

As an example, indices of pilot subcarriers in the RRU pilot configuration information in the foregoing plurality of configuration manners do not include indices corresponding to a direct current subcarrier, a guard subcarrier, and a null subcarrier within the RRU.

Further, based on the foregoing resource construction scenario 1 in the embodiments of this application, the first AP in the embodiments of this application may configure the transmit power of the pilot subcarrier in the RRU pilot configuration information. For example, the transmit power of the pilot subcarrier can be increased relative to the data subcarriers, so that the pilot subcarriers can be better received, and data demodulation performance is improved. In addition, to reduce power, in a process of increasing the transmit power of the pilot subcarriers, the difference between the transmit power of the pilot subcarriers and the transmit power of the data subcarriers in the RRU may be set not to exceed a second threshold. The transmit power of the pilot subcarriers in the RRU in the embodiments of this application may be equal to the transmit power of the data subcarriers in the RRU, that is, the second threshold is 0 in this case.

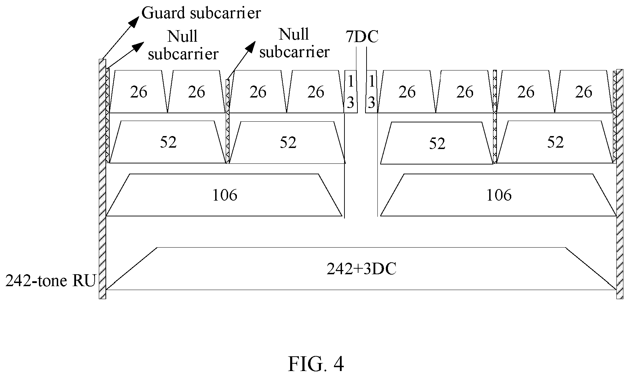

Based on this scenario 1, the embodiments of this application are described below with reference to FIG. 4 for a plurality of RRU division types based on a 20 MHz bandwidth scenario separately, specifically not limited to the following four types:
Division type 1: At a bandwidth of 20 MHz, RRUs are divided in a 26-subcarrier mode.

Referring to FIG. 4 above, when the bandwidth is 20 MHz, the entire bandwidth may consist of nine 26-tone RUs. The entire bandwidth further includes one or more of guard subcarriers, null subcarriers, direct current subcarriers, and pilot subcarriers.

Based on this division type 1, the first AP has a plurality of manners to perform an RRU pilot configuration based on the state information of the STA, specifically not limited to the following types:
(1) Configuration manner 1: The quantity of pilot subcarriers in the RRU pilot configuration information is an odd number greater than or equal to 1 and not greater than the total quantity of subcarriers in the RRU.

Exemplarily, the quantity of pilot subcarriers configured in an RRU may be 1, 3, 5, 7..., or the like, with a maximum value not exceeding the total quantity of subcarriers in the RRU.

For example, when the first AP determines that the moving speed of the STA is extremely slow based on the state information of the STA, efficient communication transmission can be achieved without configuring excessive pilot subcarriers. Therefore, the first AP in the embodiments of this application may configure one pilot subcarrier to better reduce the system overhead.

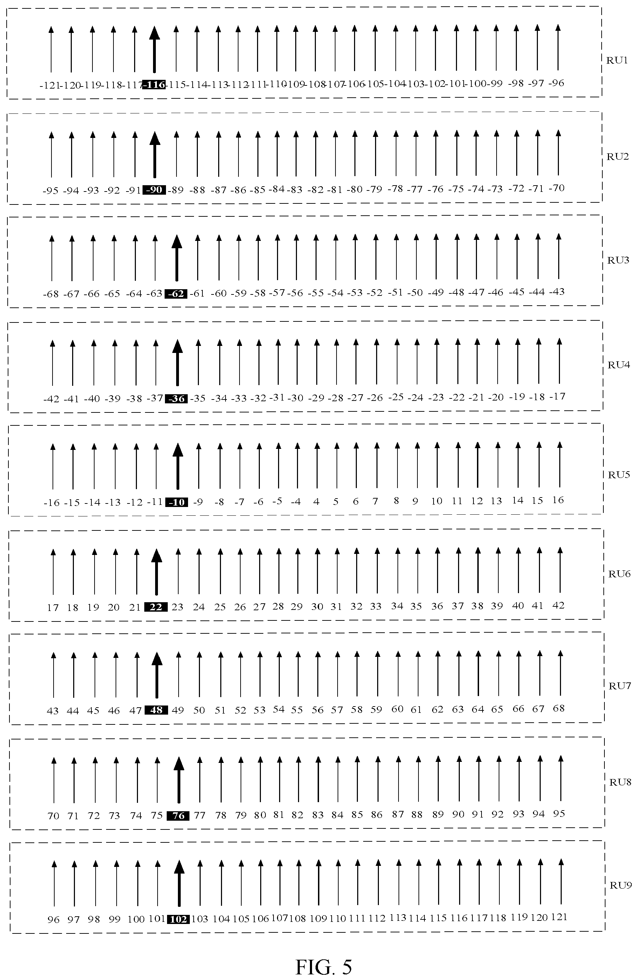

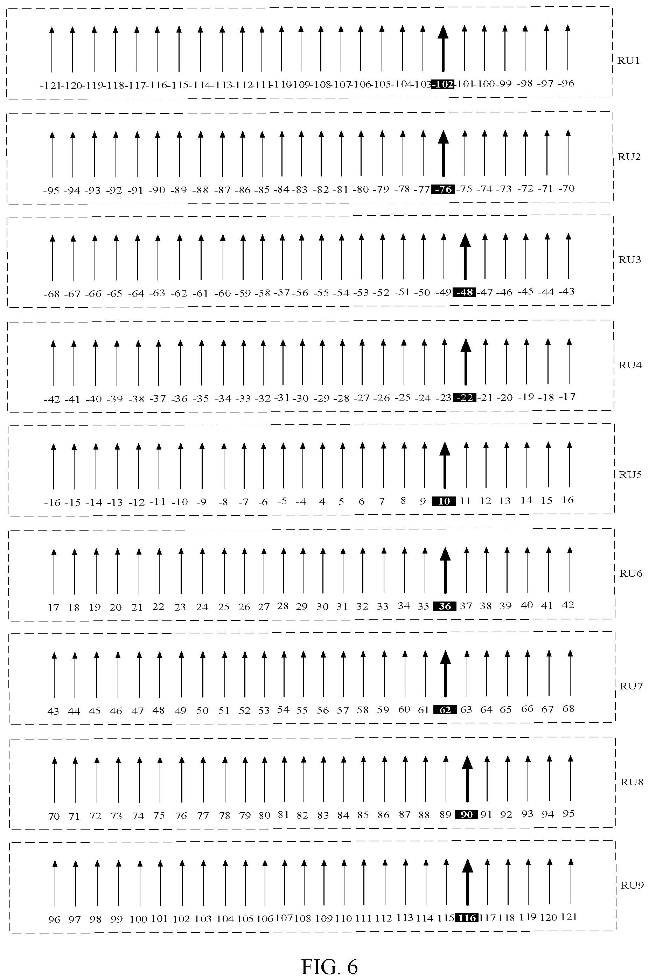

The pilot subcarrier in the embodiments of this application may be acquired by reducing one pilot subcarrier from the original two pilot subcarriers, that is, indices of pilot subcarriers in the RRU pilot configuration information include indices of some original pilot subcarriers in the RRU. For example, as shown in FIG. 5, the quantity of pilot subcarriers is 1, and the locations are {-116}, {-90}, {-62}, {-36}, {-10}, {22}, {48}, {76}, {102}; alternatively, as shown in FIG. 6, the quantity of pilot subcarriers is 1, and the locations are {-102}, {-76}, {-48}, {-22}, {10}, {36}, {62}, {90}, {116}.

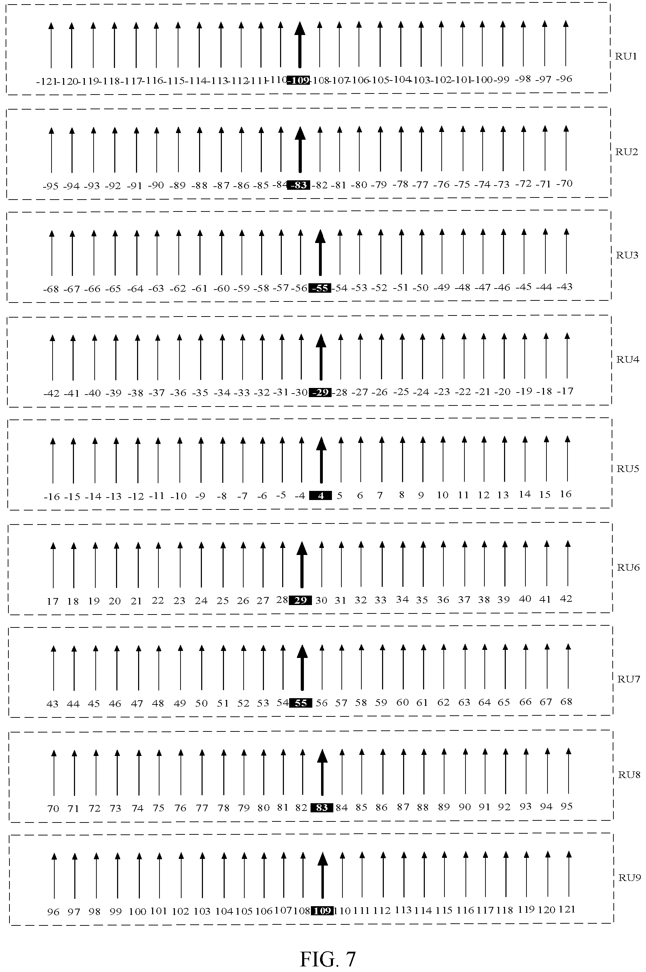

The pilot subcarrier in the embodiments of this application may also be a newly configured pilot subcarrier, that is, indices of pilot subcarriers in the RRU pilot configuration information in the embodiments of this application do not include indices of all pilot subcarriers in an RRU-based fixed pilot configuration scheme allocated to the STA by the AP side. For example, as shown in FIG. 7, the quantity of pilot subcarriers is 1, and the locations are {-109}, {-83}, {-55}, {-29}, {4}, {29}, {55}, {83}, {109}.

As another example, when the first AP determines that the moving speed of the STA is relatively high based on the state information of the STA, for example, the moving speed of the STA is 20 km/h, the quantity of pilot subcarriers may be increased to better adapt to the current state information of the STA. Therefore, the first AP in the embodiments of this application may configure three pilot subcarriers to better adapt to the current transmission scenario.

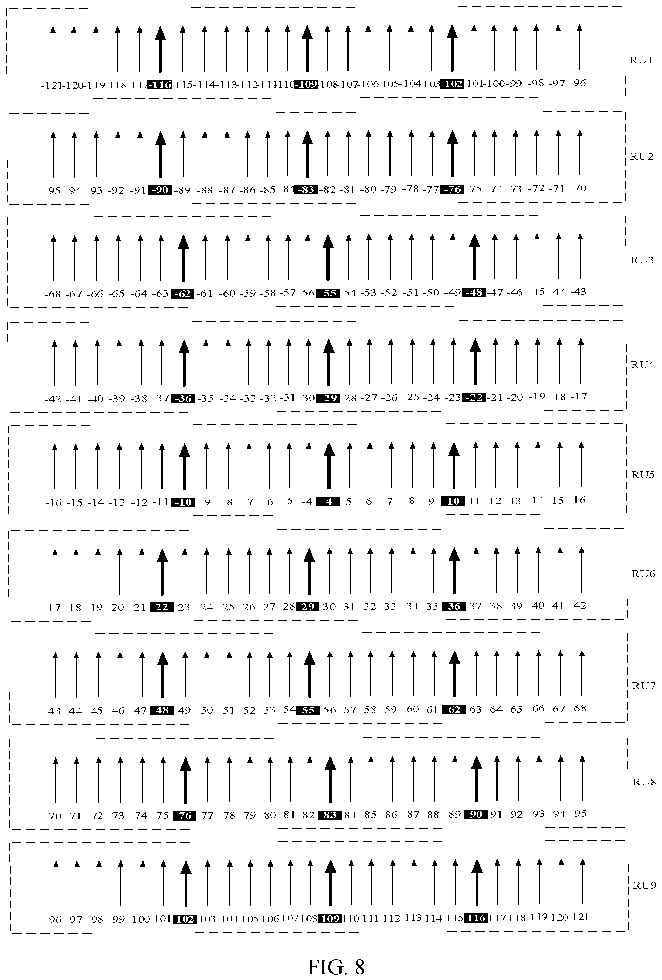

As shown in FIG. 8, the pilot subcarrier in the embodiments of this application may be acquired by adding one pilot subcarrier to the original two pilot subcarriers under this division type, that is, indices of pilot subcarriers in the RRU pilot configuration information include indices of all pilot subcarriers in an RRU-based fixed pilot configuration scheme allocated to the STA by the AP side. For example, the quantity of pilot subcarriers is 3, and the locations are {-116, -109, -102}, {-90, -83, - 76}, {-62, -55, -48}, {-36, -29, -22}, {-10, 4, 10}, {22, 29, 36}, {48, 55, 62}, {76, 83, 90}, {102, 109, 116}.

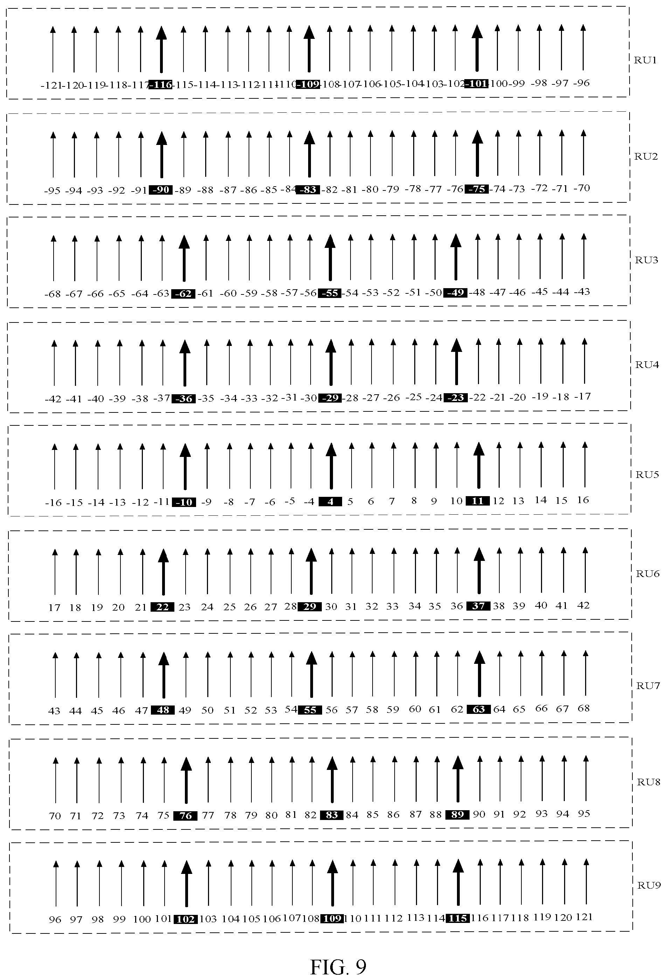

As shown in FIG. 9, indices of pilot subcarriers in the RRU pilot configuration information in the embodiments of this application may also include indices of some pilot subcarriers in an RRU-based fixed pilot configuration scheme allocated to the STA by the AP side. For example, the quantity of pilot subcarriers is 3, and the locations are {-116, -109, -101}, {-90, -83, -75}, {-62, -55, -49}, {-36, -29, - 23}, {-10, 4, 11}, {22, 29, 37}, {48, 55, 63}, {76, 83, 89}, {102, 109, 115}.

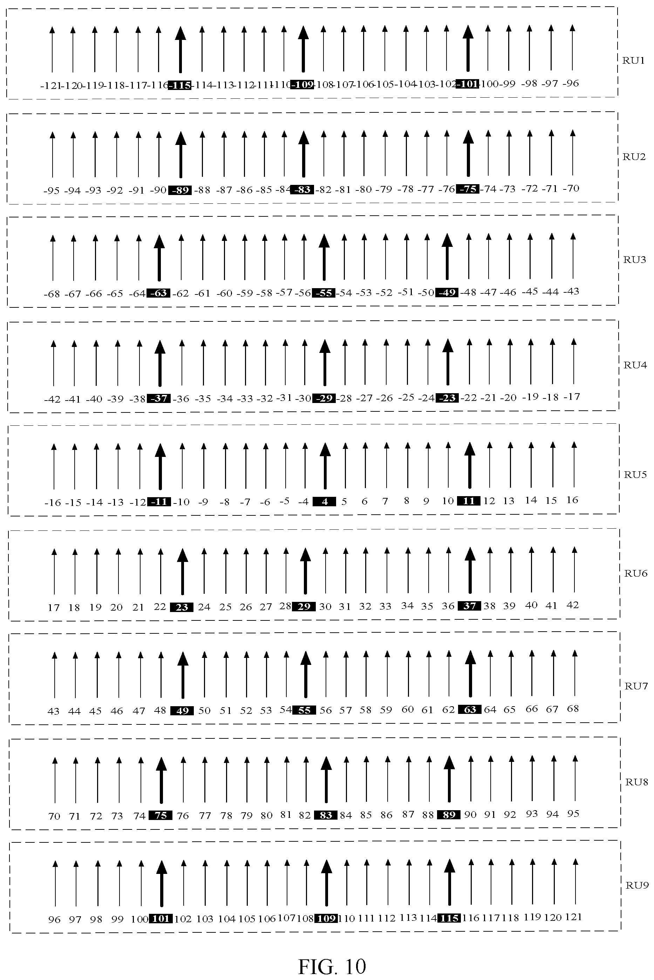

As shown in FIG. 10, indices of pilot subcarriers in the RRU pilot configuration information in the embodiments of this application may also exclude indices of all pilot subcarriers in an RRU-based fixed pilot configuration scheme allocated to the STA by the AP side. For example, the quantity of pilot subcarriers is 3, and the locations are {-115, -109, -101}, {-89, -83, -75}, {-63, -55, -49}, {-37, -29, - 23}, {-11, 4, 11}, {23, 29, 37}, {49, 55, 63}, {75, 83, 89}, {101, 109, 115}.

The first AP in the embodiments of this application may use a fixed pilot scheme as a reference and perform adaptive adjustment based on the fixed pilot scheme to acquire a new pilot scheme. By this means, the configuration time of the AP can be saved, and a suitable pilot configuration scheme can be determined more rapidly.

As another example, when the first AP determines that the moving speed of the STA is very high based on the state information of the STA, for example, the moving speed of the STA is 30 km/h, more pilot subcarriers may be configured to better adapt to the current state information of the STA. Therefore, the first AP in the embodiments of this application may configure five pilot subcarriers to better adapt to the current transmission scenario.

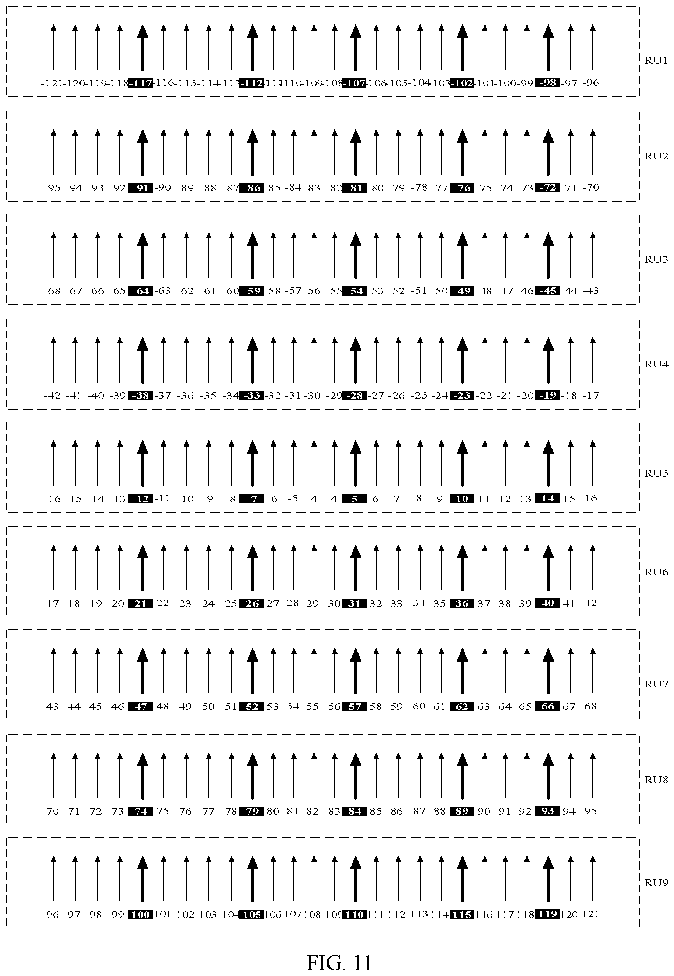

As shown in FIG. 11, the quantity of pilot subcarriers in the embodiments of this application is 5, and the locations are {-117, -112, -107, -102, -98}, {-91, -86, - 81, -76, -72}, {-64, -59, -54, -49, -45}, {-38, -33, -28, -23, -19}, {-12, -7, 5, 10, 14}, {21, 26, 31, 36, 40}, {47, 52, 57, 62, 66}, {74, 79, 84, 89, 93}, {100, 105, 110, 115, 119}.

Similarly, when the quantity of pilot subcarriers configured in the RRU in the embodiments of this application is 5 or another larger odd number, indices of pilot subcarriers in the RRU pilot configuration information in the embodiments of this application may include indices of some or all pilot subcarriers in an RRU-based fixed pilot configuration scheme allocated to the STA by the AP side; alternatively, indices of pilot subcarriers in the RRU pilot configuration information in the embodiments of this application may exclude indices of all pilot subcarriers in an RRU-based fixed pilot configuration scheme allocated to the STA by the AP side. For brevity, reference may be made to the content introduction in the above configuration manner 1, and details are not repeated herein.

(2) Configuration manner 2: The quantity of pilot subcarriers in the RRU pilot configuration information is an even number greater than or equal to 1 and not greater than the total quantity of subcarriers in the RRU.

As an example, a 26-tone RU may consist of 26-2x data subcarriers and 2x pilot subcarriers, where x=0, 1, 2, ..., 13. That is, the AP flexibly configures the quantity of pilot subcarriers in one RU to be a multiple of 2.

Exemplarily, the quantity of pilot subcarriers configured in the RRU may be 0, 2, 4, 6..., or the like, with a maximum value not exceeding the total quantity of subcarriers in the RRU.

For example, when the first AP determines that the STA is stationary or has an extremely small movement amplitude based on the state information of the STA, no pilot subcarriers need to be configured. Therefore, the quantity of pilot subcarriers in the RRU pilot configuration information configured by the first AP in the embodiments of this application may be 0, so as to better reduce the system overhead.

As another example, when the first AP determines that the moving speed of the STA is slightly high based on the state information of the STA, for example, the moving speed of the STA is 5 km/h, the first AP in the embodiments of this application may configure two pilot subcarriers to better adapt to the current transmission scenario.

The pilot subcarrier in the embodiments of this application may continue to adopt the original pilot subcarriers based on the RRU, that is, indices of pilot subcarriers in the RRU pilot configuration information include indices of all pilot subcarriers in an RRU-based fixed pilot configuration scheme allocated to the STA by the AP side.

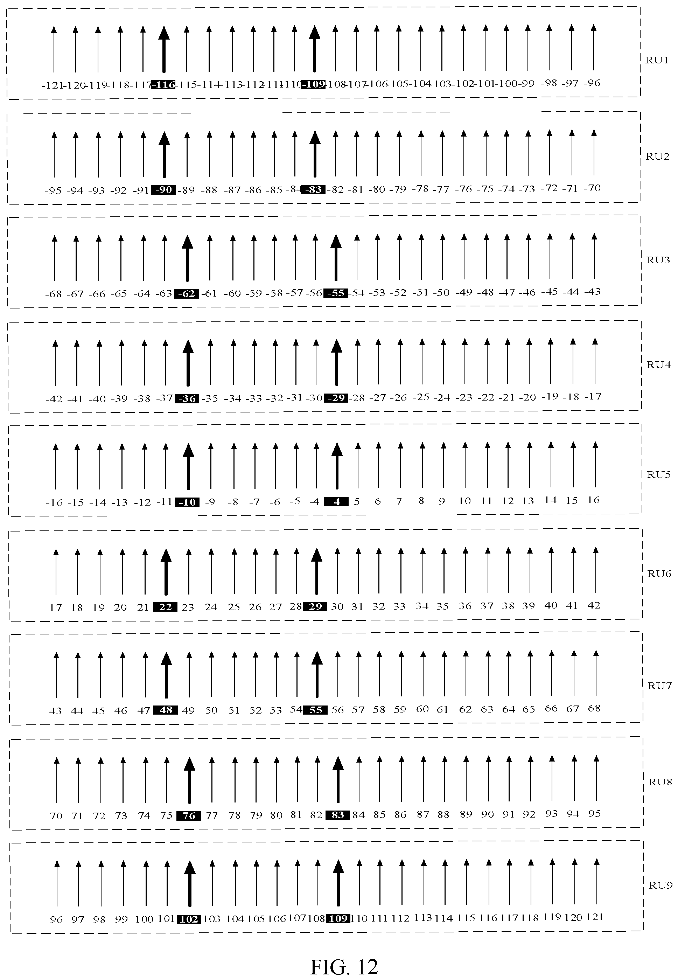

As shown in FIG. 12, indices of pilot subcarriers in the RRU pilot configuration information in the embodiments of this application may also include indices of some pilot subcarriers in an RRU-based fixed pilot configuration scheme allocated to the STA by the AP side. For example, the quantity of pilot subcarriers is 2, and the locations are {-116, -109}, {-90, -83}, {-62, -55}, {-36, -29}, {-10, 4}, {22, 29}, {48, 55}, {76, 83}, {102, 109}.

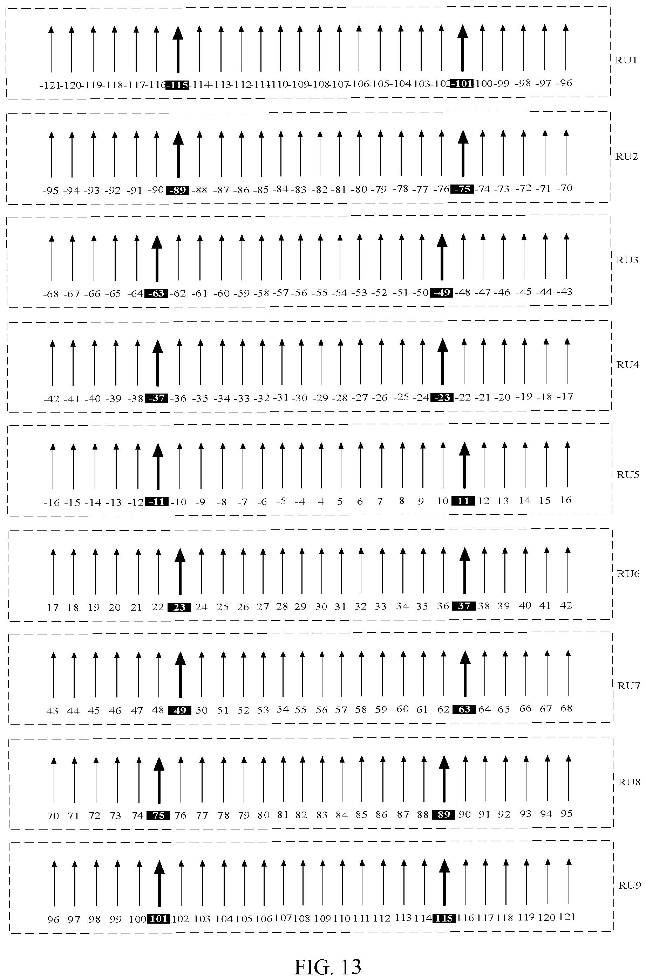

As shown in FIG. 13, indices of pilot subcarriers in the RRU pilot configuration information in the embodiments of this application may also exclude indices of all pilot subcarriers in an RRU-based fixed pilot configuration scheme allocated to the STA by the AP side. For example, the quantity of pilot subcarriers is 2, and the locations are {-115, -101}, {-89, -75}, {-63, -49}, {-37, -23}, {-11, 11}, {23, 37}, {49, 63}, {75, 89}, {101, 115}.

As another example, when the first AP determines that the moving speed of the STA is very high based on the state information of the STA, for example, the moving speed of the STA is 30 km/h, more pilot subcarriers may be configured to better adapt to the current state information of the STA. Therefore, the first AP in the embodiments of this application may configure four pilot subcarriers to better adapt to the current transmission scenario.

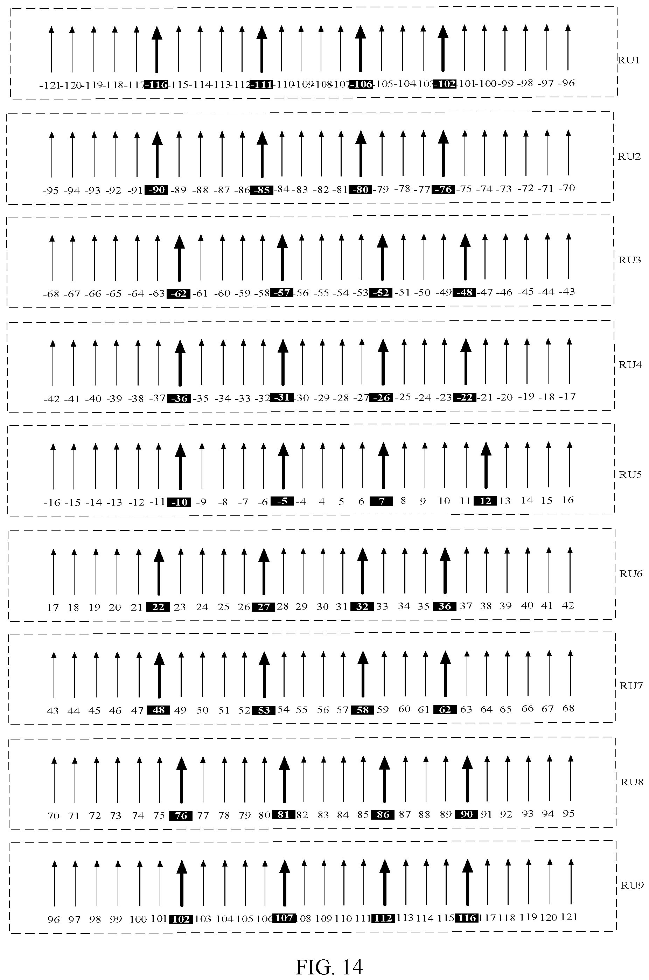

As shown in FIG. 14, the quantity of pilot subcarriers in the embodiments of this application is 4, and the locations are {-116, -111, -106, -102}, {-90, -85, -80, - 76}, {-62, -57, -52, -48}, {-36, -31, -26, -22}, {-10, -5, 7, 12}, {22, 27, 32, 36}, {48, 53, 58, 62}, {76, 81, 86, 90}, {102, 107, 112, 116}.

Similarly, when the quantity of pilot subcarriers configured in the RRU in the embodiments of this application is 4 or another larger even number, indices of pilot subcarriers in the RRU pilot configuration information may include indices of some or all pilot subcarriers in an RRU-based fixed pilot configuration scheme allocated to the STA by the AP side; alternatively, indices of pilot subcarriers in the RRU pilot configuration information in the embodiments of this application may exclude indices of all pilot subcarriers in an RRU-based fixed pilot configuration scheme allocated to the STA by the AP side. For brevity, reference may be made to the content introduction in the above configuration manner 2, and details are not repeated herein.

(3) Configuration manner 3: The quantity of pilot subcarriers in the RRU pilot configuration information is a natural number not greater than the total quantity of subcarriers in the RRU.

As an example, a 26-tone RU may consist of 26-y data subcarriers and y pilot subcarriers, where y=0, 1, 2, ..., 26. That is, the AP flexibly configures the quantity of pilot subcarriers in one RU to be a multiple of 1.

Exemplarily, the quantity of pilot subcarriers configured in the RRU may be 0, 1, 2, 3, 4..., or the like, with a maximum value not exceeding the total quantity of subcarriers in the RRU. For brevity, the configuration scheme for the quantity of pilot subcarriers and indices in this configuration manner 3 may specifically refer to the content introduction in the above configuration manners 1 and 2, and details are not repeated herein.

It may be understood that the above introduction in the embodiments of this application for determining the quantity of pilot subcarriers and indices based on the moving speed of the STA is merely an example and does not constitute as a limitation to the embodiments of this application. The embodiments of this application may determine the corresponding quantity of pilot subcarriers and indices based on the moving speed of the STA according to actual scenarios.

Further, in the above configuration manners in the embodiments of this application, a larger quantity of pilot subcarriers leads to higher system overhead, fewer data subcarriers used for transmission leads to a lower resource utilization rate. Therefore, the maximum quantity of pilot subcarriers in the RRU in the embodiments of this application may also be configured not to exceed a first preset proportion of the total quantity of subcarriers in the RRU. For example, assuming that the total quantity of subcarriers in the RRU is 26, and that the first preset proportion is 50%, the quantity of pilot subcarriers in the RRU does not exceed 13. The minimum quantity of pilot subcarriers in the RRU may also be configured according to actual scenarios, for example, the minimum quantity of pilot subcarriers in the RRU is not less than 2, and the first AP may perform flexible adjustment according to actual scenarios, which is not limited herein.

Division manner 2: At the bandwidth of 20 MHz, division is performed in a 52-subcarrier mode.

Referring to FIG. 4 above, when the bandwidth is 20 MHz, the entire bandwidth may consist of four 52-tone RUs. The entire bandwidth further includes one or more of guard subcarriers, null subcarriers, direct current subcarriers, and pilot subcarriers.

Based on this division type 2, the first AP has a plurality of manners to perform an RRU pilot configuration based on the state information of the STA, specifically not limited to the following types:
(1) Configuration manner 1: The quantity of pilot subcarriers in the RRU pilot configuration information is an odd number greater than or equal to 1 and not greater than the total quantity of subcarriers in the RRU.

Exemplarily, the quantity of pilot subcarriers configured in the RRU may be 1, 3, 5, 7..., or the like, with a maximum value not exceeding the total quantity of subcarriers in the RRU.

For example, when the first AP determines that the moving speed of the STA is relatively slow based on the state information of the STA, efficient communication transmission can be achieved without configuring excessive pilot subcarriers, therefore, the first AP in the embodiments of this application may configure three pilot subcarriers to better reduce the system overhead.

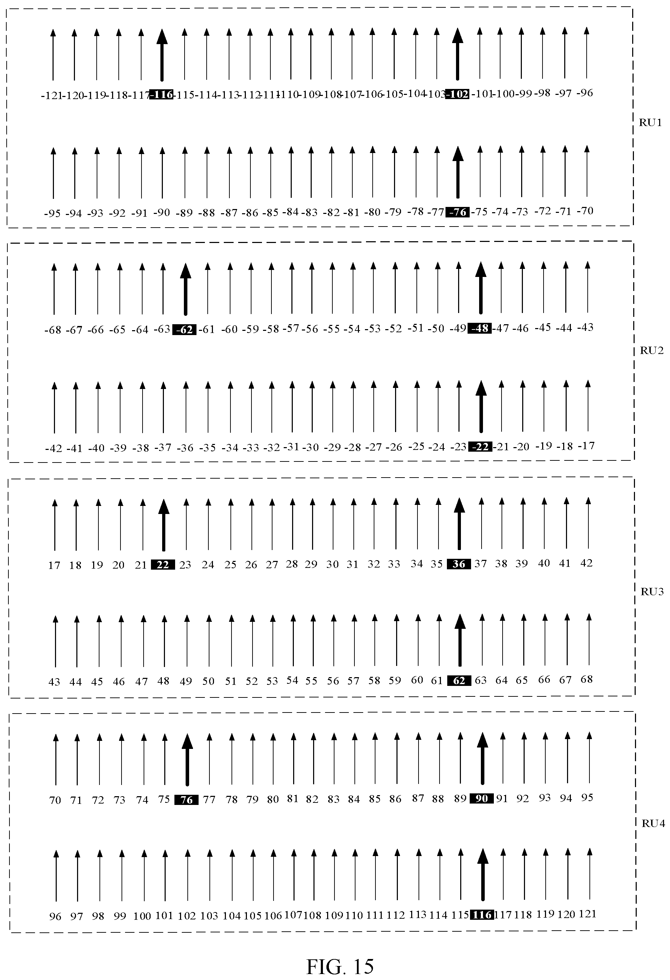

The pilot subcarrier in the embodiments of this application may be acquired by reducing one pilot subcarrier from the original four pilot subcarriers under this division type, that is, indices of pilot subcarriers in the RRU pilot configuration information include indices of some pilot subcarriers in an RRU-based fixed pilot configuration scheme allocated to the STA by the AP side. For example, as shown in FIG. 15, the quantity of pilot subcarriers is 3, and the locations are {-116, -102, -76}, {-62, -48, -22}, {22, 36, 62}, {76, 90, 116}.

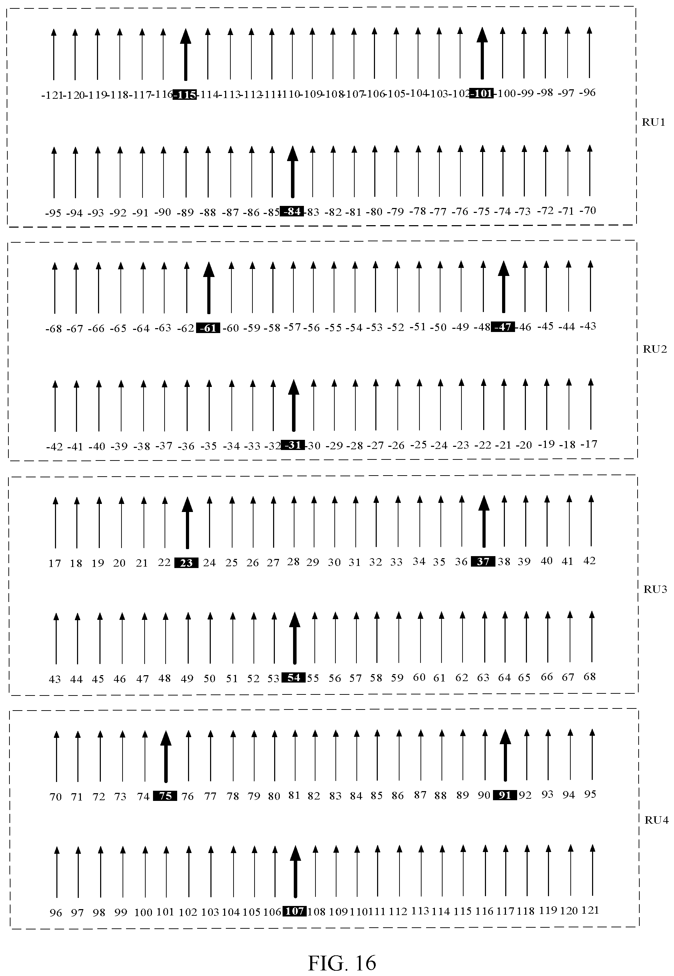

The pilot subcarrier in the embodiments of this application may also be a newly configured pilot subcarrier, that is, indices of pilot subcarriers in the RRU pilot configuration information in the embodiments of this application do not include indices of all pilot subcarriers in an RRU-based fixed pilot configuration scheme allocated to the STA by the AP side. For example, as shown in FIG. 16, the quantity of pilot subcarriers is 3, and the locations are {-115, -101, -84}, {-61, -47, -31}, {23, 37, 54}, {75, 91, 107}.

As another example, when the first AP determines that the moving speed of the STA is relatively high based on the state information of the STA, for example, the moving speed of the STA is 20 km/h, the quantity of pilot subcarriers may be increased to better adapt to the current state information of the STA. Therefore, the first AP in the embodiments of this application may configure five pilot subcarriers to better adapt to the current transmission scenario.

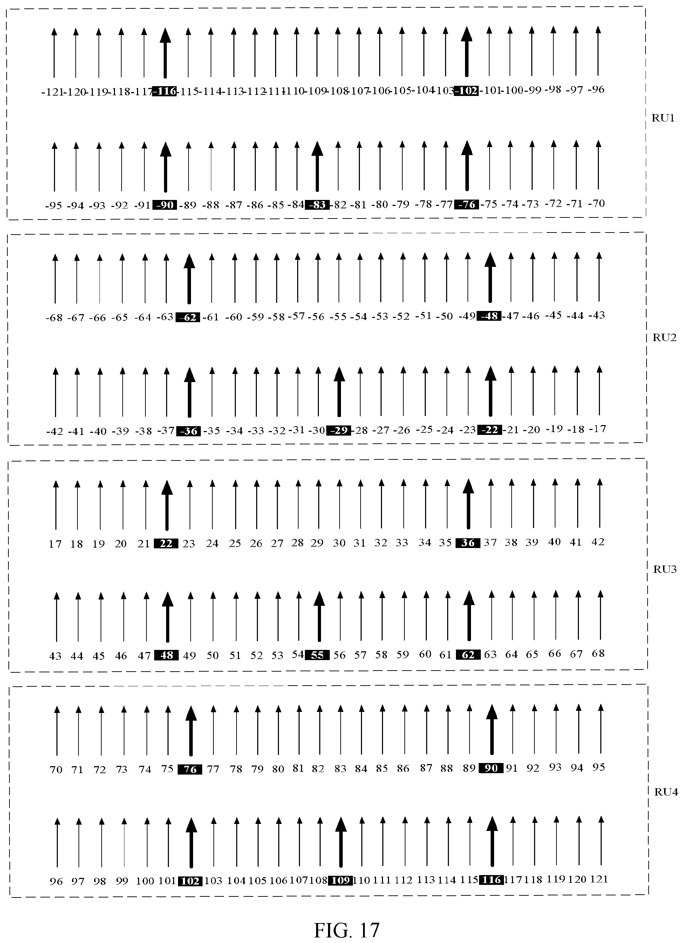

As shown in FIG. 17, the pilot subcarrier in the embodiments of this application may be acquired by adding one pilot subcarrier to the original four pilot subcarriers under this division type, that is, indices of pilot subcarriers in the RRU pilot configuration information include indices of all pilot subcarriers in an RRU-based fixed pilot configuration scheme allocated to the STA by the AP side. For example, the quantity of pilot subcarriers is 5, and the locations are {-116, -102, -90, -83, -76}, {-62, -48, -36, -29, -22}, {22, 36, 48, 55, 62}, {76, 90, 102, 109, 116}.

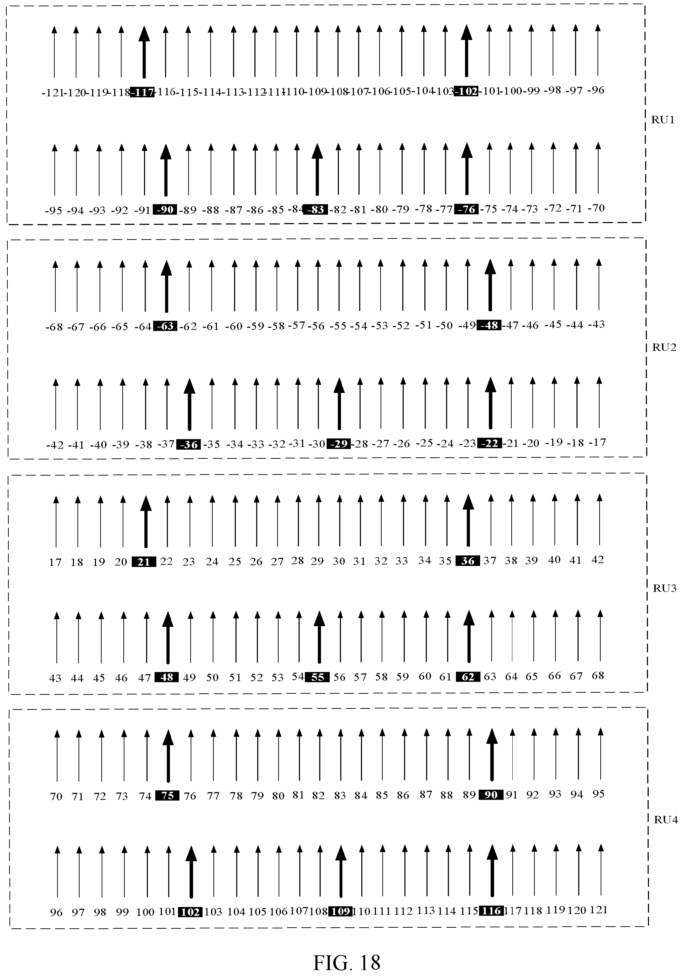

As shown in FIG. 18, indices of pilot subcarriers in the RRU pilot configuration information in the embodiments of this application may also include indices of some pilot subcarriers in an RRU-based fixed pilot configuration scheme allocated to the STA by the AP side. For example, the quantity of pilot subcarriers is 5, and the locations are {-117, -102, -90, -83, -76}, {-63, -48, -36, -29, -22}, {21, 36, 48, 55, 62}, {75, 90, 102, 109, 116}.

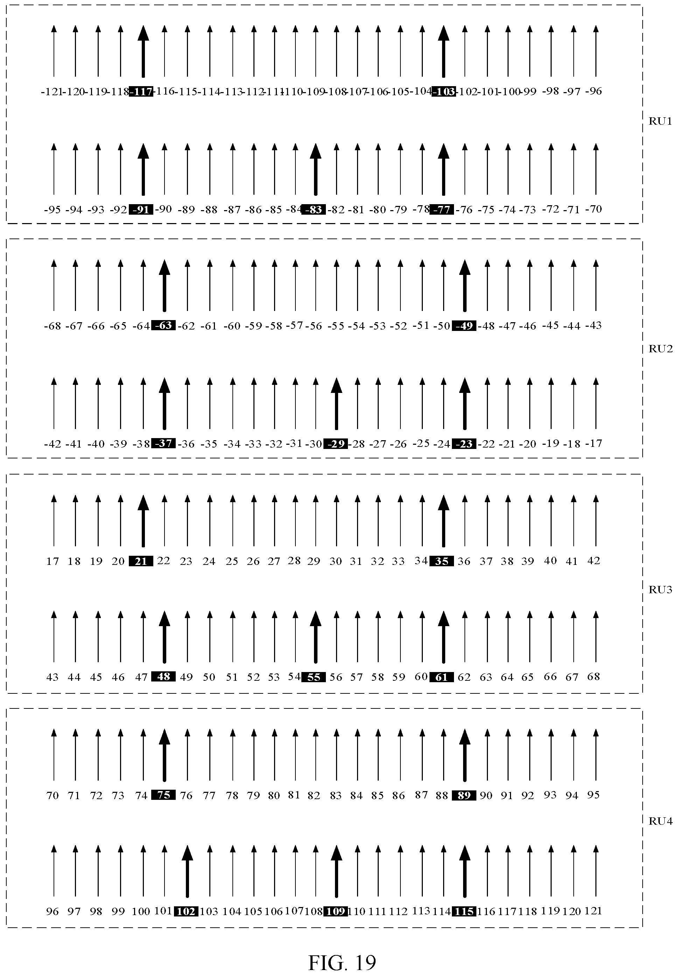

As shown in FIG. 19, indices of pilot subcarriers in the RRU pilot configuration information in the embodiments of this application may also exclude indices of all pilot subcarriers in an RRU-based fixed pilot configuration scheme allocated to the STA by the AP side. For example, the quantity of pilot subcarriers is 5, and the locations are {-117, -103, -91, -83, -77}, {-63, -49, -37, -29, -23}, {21, 35, 49, 55, 61}, {75, 89, 103, 109, 115}.

As another example, when the first AP determines that the moving speed of the STA is very high based on the state information of the STA, for example, the moving speed of the STA is 30 km/h, more pilot subcarriers may be configured to better adapt to the current state information of the STA. Therefore, the first AP in the embodiments of this application may configure seven pilot subcarriers to better adapt to the current transmission scenario.

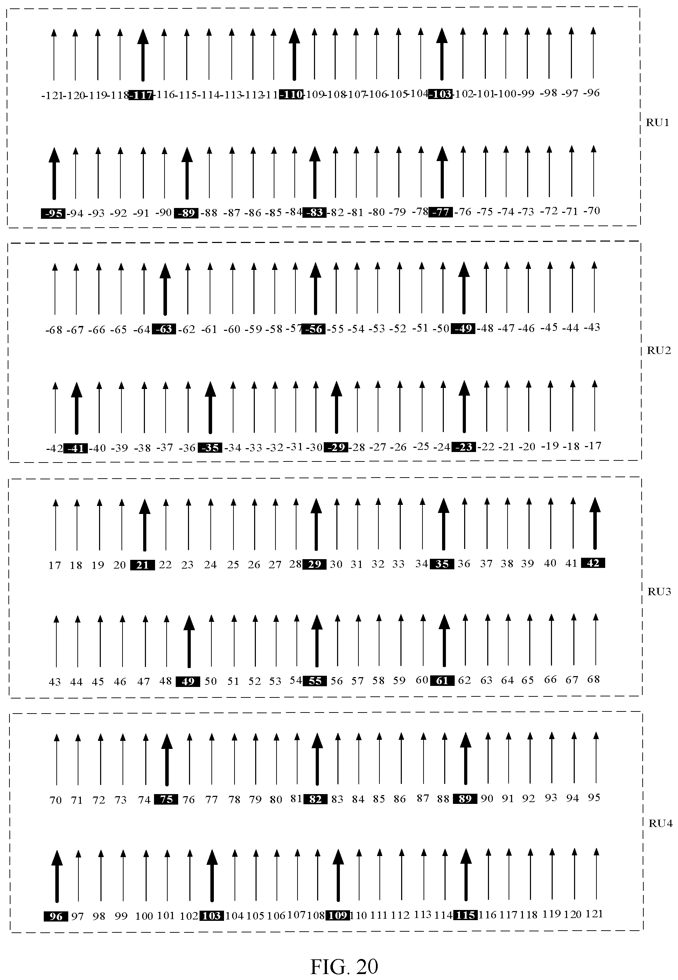

As shown in FIG. 20, the quantity of pilot subcarriers in the embodiments of this application is 7, and the locations are {-117, -110, -103, -95, -89, -83, -77}, {-63, -56, -49, -41, -35, -29, -23}, {21, 29, 35, 42, 49, 55, 61}, {75, 82, 89, 96, 103, 109, 115}.

Similarly, when the quantity of pilot subcarriers configured in the RRU in the embodiments of this application is 7 or another larger odd number, indices of pilot subcarriers in the RRU pilot configuration information in the embodiments of this application may include indices of some or all original pilot subcarriers in an RRU-based fixed pilot configuration scheme allocated to the STA by the AP side; alternatively, indices of pilot subcarriers in the RRU pilot configuration information in the embodiments of this application may exclude indices of all pilot subcarriers in an RRU-based fixed pilot configuration scheme allocated to the STA by the AP side. For brevity, reference may be made to the content introduction in the above configuration manner 1, and details are not repeated herein.

(2) Configuration manner 2: The quantity of pilot subcarriers in the RRU pilot configuration information is an even number greater than or equal to 1 and not greater than the total quantity of subcarriers in the RRU.

As an example, a 52-tone RU may consist of 52-2x data subcarriers and 2x pilot subcarriers, where x=0, 1, 2, ..., 26. That is, the AP flexibly configures the quantity of pilot subcarriers in one RU to be a multiple of 2.

Exemplarily, the quantity of pilot subcarriers configured in the RRU may be 0, 2, 4, 6..., or the like, with a maximum value not exceeding the total quantity of subcarriers in the RRU.

For example, when the first AP determines that the moving speed of the STA is relatively slow based on the state information of the STA, efficient communication transmission can be achieved without configuring excessive pilot subcarriers. Therefore, the first AP in the embodiments of this application may configure two pilot subcarriers to better reduce the system overhead.

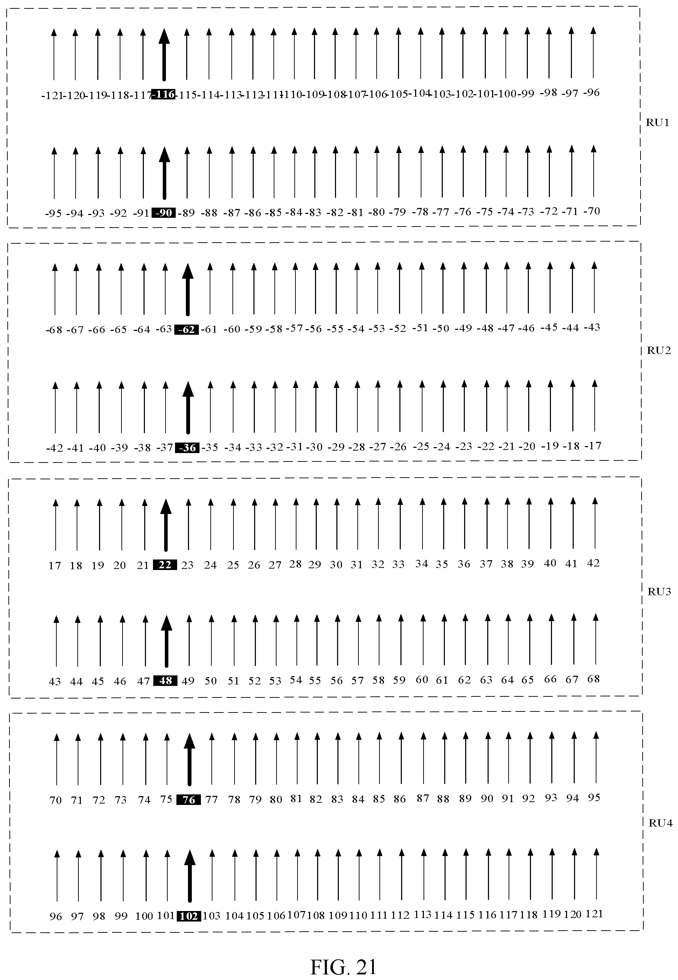

The pilot subcarrier in the embodiments of this application may be acquired by reducing two pilot subcarriers from the original four pilot subcarriers under this division type, that is, indices of pilot subcarriers in the RRU pilot configuration information include indices of some pilot subcarriers in the fixed pilot subcarriers based on the RRU allocated to the STA by the AP side. For example, as shown in FIG. 21, the quantity of pilot subcarriers is 2, and the locations are {-116, -90}, {-62, -36}, {22, 48}, {76, 102}.

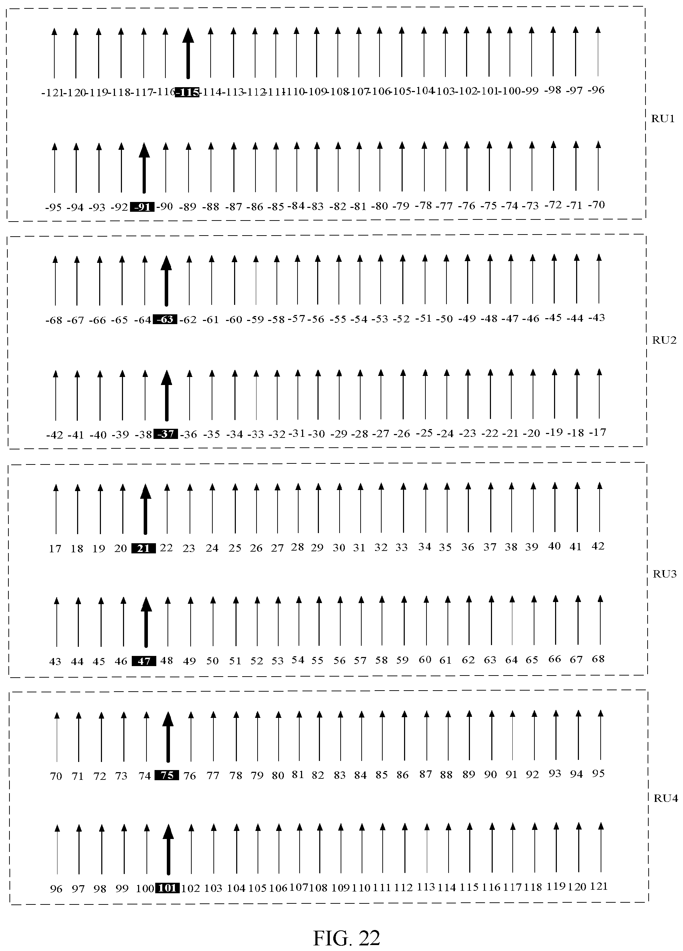

The pilot subcarrier in the embodiments of this application may also be a newly configured pilot subcarrier, that is, indices of pilot subcarriers in the RRU pilot configuration information in the embodiments of this application do not include indices of all pilot subcarriers in an RRU-based fixed pilot configuration scheme allocated to the STA by the AP side. For example, as shown in FIG. 22, the quantity of pilot subcarriers is 2, and the locations are {-115, -91}, {-63, -37}, {21, 47}, {75, 101}.

As another example, when the first AP determines that the moving speed of the STA is relatively high based on the state information of the STA, for example, the moving speed of the STA is 20 km/h, the first AP in the embodiments of this application may configure four pilot subcarriers to better adapt to the current transmission scenario.

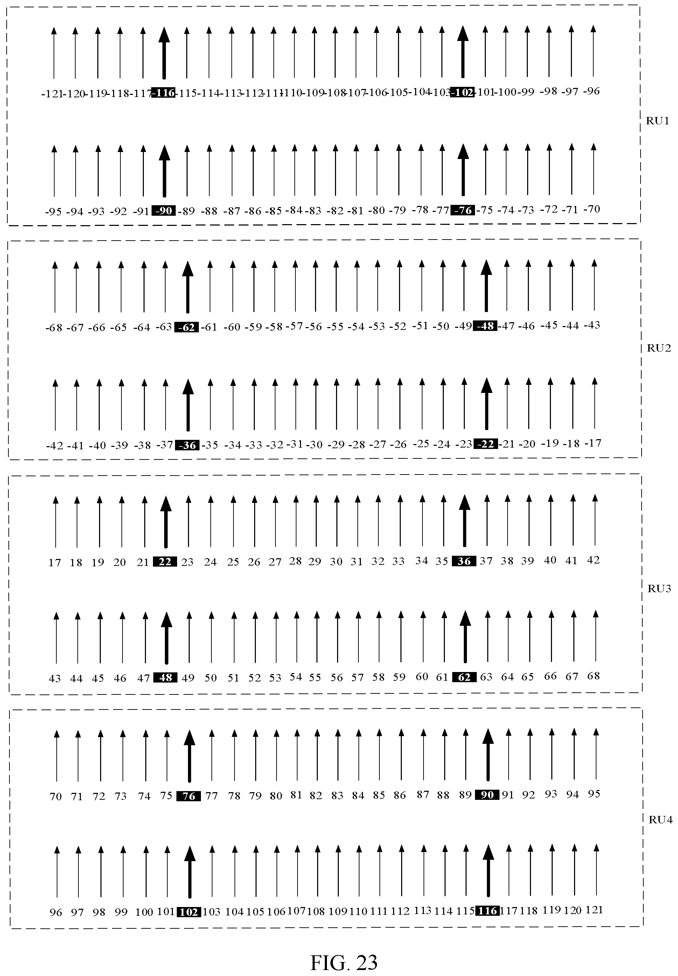

As shown in FIG. 23, the pilot subcarrier in the embodiments of this application may be the original four pilot subcarriers under this division type, that is, indices of pilot subcarriers in the RRU pilot configuration information include indices of all pilot subcarriers in an RRU-based fixed pilot configuration scheme allocated to the STA by the AP side. For example, the quantity of pilot subcarriers is 4, and the locations are {-116, -102, -90, -76}, {-62, -48, -36, -22}, {22, 36, 48, 62}, {76, 90, 102, 116}.

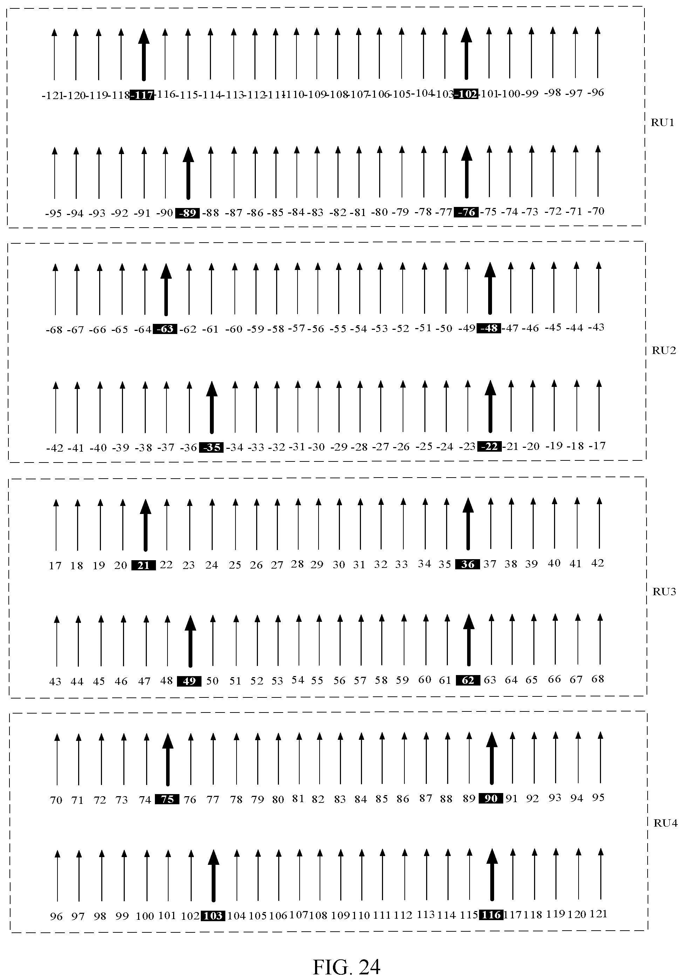

As shown in FIG. 24, indices of pilot subcarriers in the RRU pilot configuration information in the embodiments of this application may also include indices of some pilot subcarriers in an RRU-based fixed pilot configuration scheme allocated to the STA by the AP side. For example, the quantity of pilot subcarriers is 4, and the locations are {-117, -102, -89, -76}, {-63, -48, -35, -22}, {21, 36, 49, 62}, {75, 90, 103, 116}.

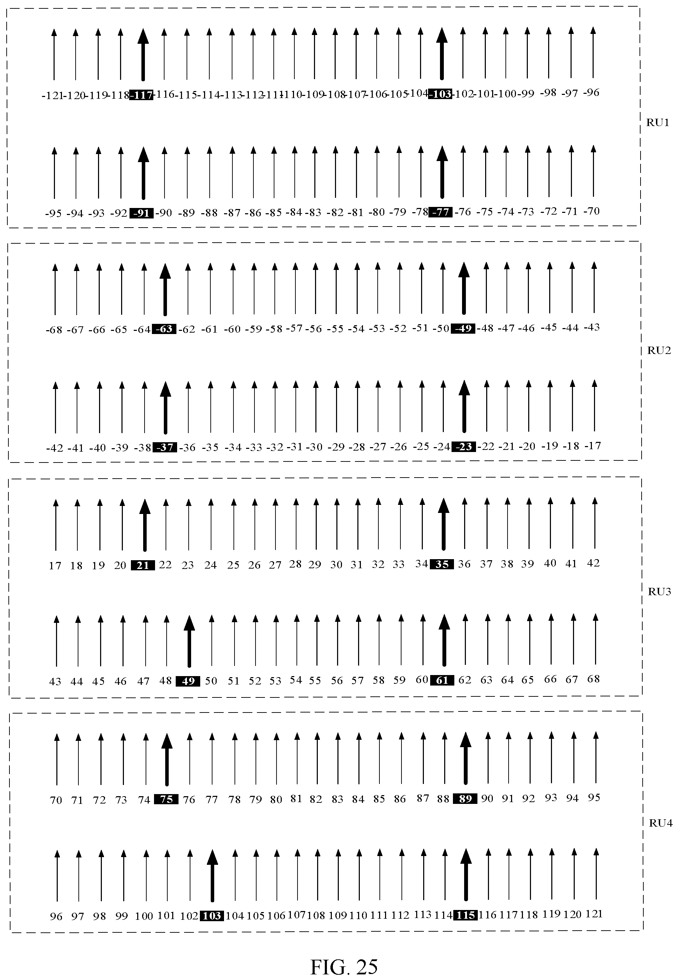

As shown in FIG. 25, indices of pilot subcarriers in the RRU pilot configuration information in the embodiments of this application may also exclude indices of all original pilot subcarriers in an RRU-based fixed pilot configuration scheme allocated to the STA by the AP side. For example, the quantity of pilot subcarriers is 4, and the locations are {-117, -103, -91, -77}, {-63, -49, -37, -23}, {21, 35, 49, 61}, {75, 89, 103, 115}.

As another example, when the first AP determines that the moving speed of the STA is very high based on the state information of the STA, for example, the moving speed of the STA is 30 km/h, more pilot subcarriers may be configured to better adapt to the current state information of the STA. Therefore, the first AP in the embodiments of this application may configure six pilot subcarriers to better adapt to the current transmission scenario.

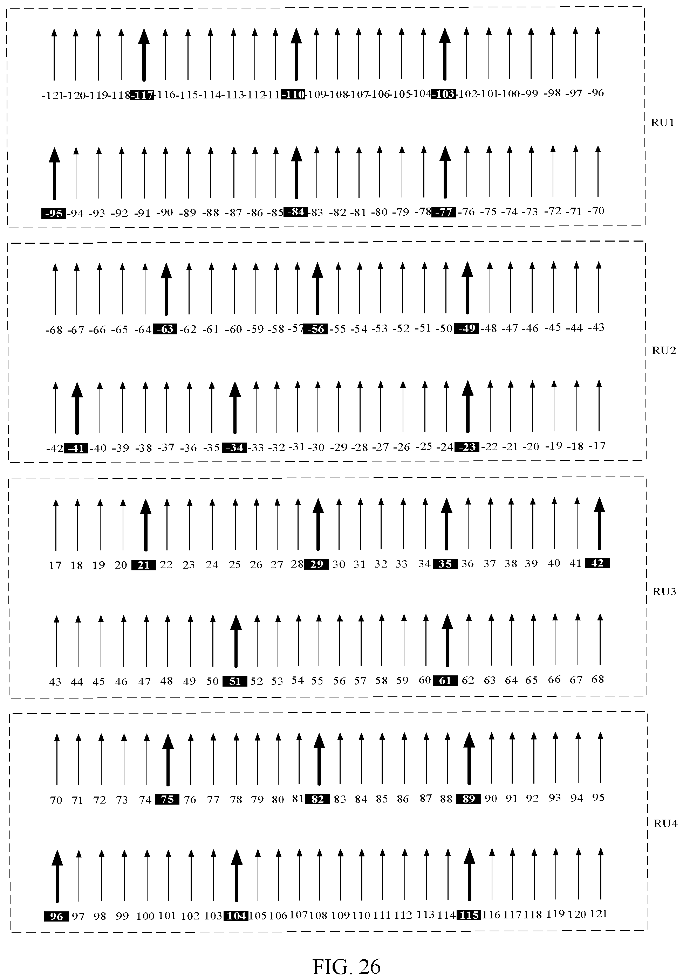

As shown in FIG. 26, the quantity of pilot subcarriers in the embodiments of this application is 6, and the locations are {-117, -110, -103, -95, -84, -77}, {-63, - 56, -49, -41, -34, -23}, {21, 29, 35, 42, 51, 61}, {75, 82, 89, 96, 104, 115}.

Similarly, when the quantity of pilot subcarriers configured in the RRU in the embodiments of this application is 6 or another larger even number, indices of pilot subcarriers in the RRU pilot configuration information in the embodiments of this application may include indices of some or all pilot subcarriers in an RRU-based fixed pilot configuration scheme allocated to the STA by the AP side; alternatively, indices of pilot subcarriers in the RRU pilot configuration information in the embodiments of this application may exclude indices of all pilot subcarriers in an RRU-based fixed pilot configuration scheme allocated to the STA by the AP side. For brevity, reference may be made to the content introduction in the above configuration manner 2, and details are not repeated herein.

(3) Configuration manner 3: The quantity of pilot subcarriers in the RRU pilot configuration information is a natural number not greater than the total quantity of subcarriers in the RRU.

As an example, a 52-tone RU may consist of 52-y data subcarriers and y pilot subcarriers, where y=0, 1, 2, ..., 52. That is, the AP flexibly configures the quantity of pilot subcarriers in one RU to be a multiple of 1.

Exemplarily, the quantity of pilot subcarriers configured in the RRU may be 0, 1, 2, 3, 4..., or the like, with a maximum value not exceeding the total quantity of subcarriers in the RRU. For brevity, the configuration scheme for the quantity of pilot subcarriers and indices in this configuration manner 3 may specifically refer to the content introduction in the above configuration manners 1 and 2, and details are not repeated herein.

It may be understood that the above introduction in the embodiments of this application for determining the quantity of pilot subcarriers and indices based on the moving speed of the STA is merely an example and does not constitute as a limitation to the embodiments of this application. The embodiments of this application may determine the corresponding quantity of pilot subcarriers and indices based on the moving speed of the STA according to actual scenarios.

Further, in the above configuration manners in the embodiments of this application, the maximum quantity of pilot subcarriers in the RRU may also be configured not to exceed a first preset proportion of the total quantity of subcarriers in the RRU. For example, assuming that the total quantity of subcarriers in the RRU is 52, and that the first preset proportion is 50%, the quantity of pilot subcarriers in the RRU does not exceed 26. The minimum quantity of pilot subcarriers in the RRU may also be configured according to actual scenarios, for example, the minimum quantity of pilot subcarriers in the RRU is not less than 4, and the first AP may perform flexible adjustment according to actual scenarios, which is not limited herein.

Division manner 3: At the bandwidth of 20 MHz, division is performed in a 106-subcarrier mode.

Referring to FIG. 4 above, when the bandwidth is 20 MHz, the entire bandwidth may consist of two 106-tone RUs. The entire bandwidth further includes one or more of guard subcarriers, null subcarriers, direct current subcarriers, and pilot subcarriers.

Based on this division type 3, the first AP has a plurality of manners to perform an RRU pilot configuration based on the state information of the STA, for example, the quantity of pilot subcarriers in the RRU pilot configuration information is an odd number greater than or equal to 1 and not greater than the total quantity of subcarriers in the RRU; as another example, the quantity of pilot subcarriers in the RRU pilot configuration information is an even number not greater than the total quantity of subcarriers in the RRU; as yet another example, the quantity of pilot subcarriers in the RRU pilot configuration information is a natural number not greater than the total quantity of subcarriers in the RRU.

Under this division type 3, indices of pilot subcarriers in the RRU pilot configuration information generated by the AP based on the state information of the STA may include indices of some or all pilot subcarriers in an RRU-based fixed pilot configuration scheme allocated to the STA by the AP side; alternatively, indices of pilot subcarriers in the RRU pilot configuration information generated by the AP based on the state information of the STA may exclude indices of all pilot subcarriers in an RRU-based fixed pilot configuration scheme allocated to the STA by the AP side, which is not limited herein.

For brevity, two pilot configuration examples are listed below as references, specific content may refer to the configuration designs in the above division types 1 and 2, and details are not repeated herein.

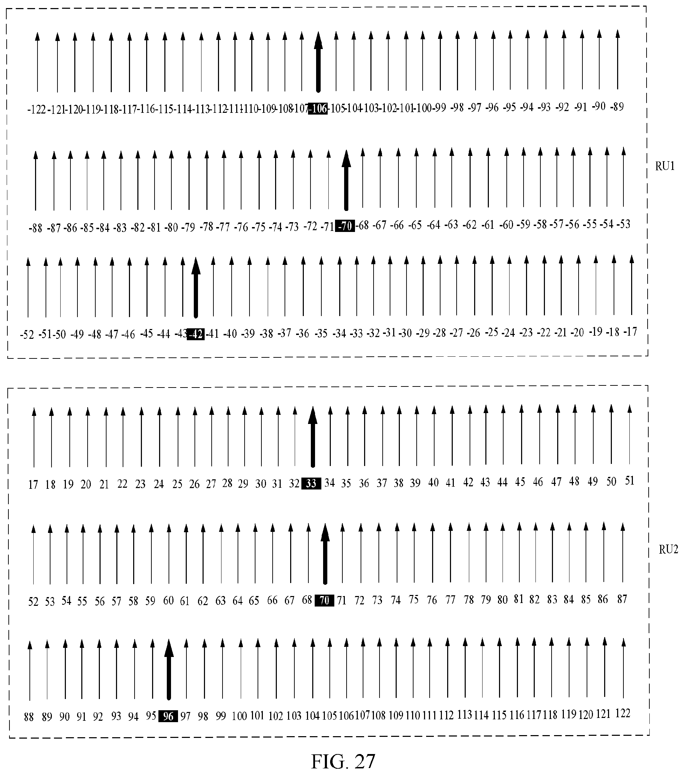

Exemplarily, when the first AP determines that the moving speed of the STA is relatively slow based on the state information of the STA, efficient communication transmission can be achieved without configuring excessive pilot subcarriers. Therefore, the first AP in the embodiments of this application may configure three pilot subcarriers to better reduce the system overhead. For example, as shown in FIG. 27, the quantity of pilot subcarriers is 3, and the locations are {-106, -70, -42}, {33, 70, 96}.

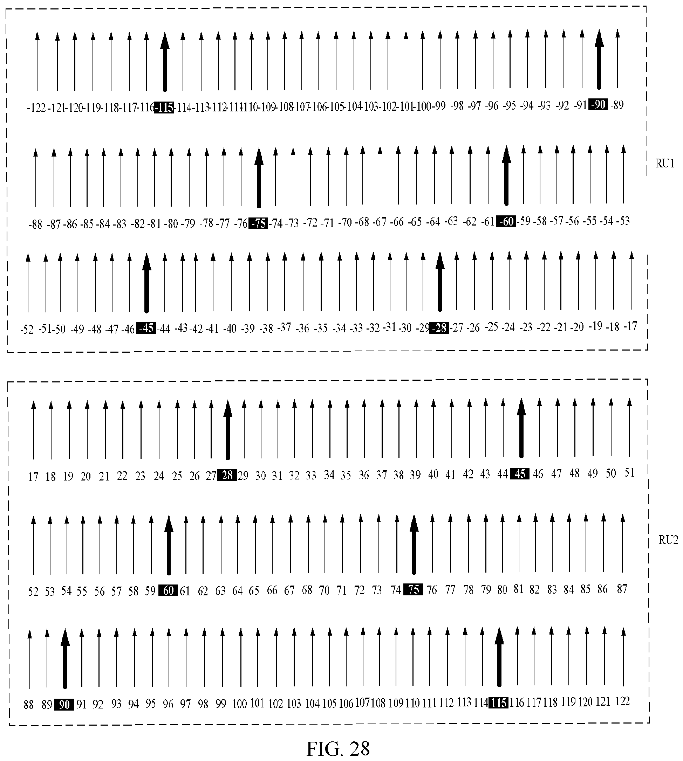

Exemplarily, when the first AP determines that the moving speed of the STA is very high based on the state information of the STA, for example, the moving speed of the STA is 30 km/h, more pilot subcarriers may be configured to better adapt to the current state information of the STA. Therefore, the first AP in the embodiments of this application may configure six pilot subcarriers to better adapt to the current transmission scenario. As shown in FIG. 28, the quantity of pilot subcarriers in the embodiments of this application is 6, and the locations are {-115, -90, -75, -60, -45, - 28}, {28, 45, 60, 75, 90, 115}.

It may be understood that the above introduction in the embodiments of this application for determining the quantity of pilot subcarriers and indices based on the moving speed of the STA is merely an example and does not constitute as a limitation to the embodiments of this application. The embodiments of this application may determine the corresponding quantity of pilot subcarriers and indices based on the moving speed of the STA according to actual scenarios.

Further, in the above configuration manners in the embodiments of this application, the maximum quantity of pilot subcarriers in the RRU may also be configured not to exceed a first preset proportion of the total quantity of subcarriers in the RRU. For example, assuming that the total quantity of subcarriers in the RRU is 106, and that the first preset proportion is 50%, the quantity of pilot subcarriers in the RRU does not exceed 53. The minimum quantity of pilot subcarriers in the RRU may also be configured according to actual scenarios, for example, the minimum quantity of pilot subcarriers in the RRU is not less than 4, and the first AP may perform flexible adjustment according to actual scenarios, which is not limited herein.

Division manner 4: At the bandwidth of 20 MHz, division is performed in a 242-subcarrier mode.

Referring to FIG. 4 above, when the bandwidth is 20 MHz, the entire bandwidth may consist of one 242-tone RU. The entire bandwidth further includes one or more of guard subcarriers, null subcarriers, direct current subcarriers, and pilot subcarriers.

Based on this division type 4, the first AP has a plurality of manners to perform an RRU pilot configuration based on the state information of the STA, for example, the quantity of pilot subcarriers in the RRU pilot configuration information is an odd number greater than or equal to 1 and not greater than the total quantity of subcarriers in the RRU; as another example, the quantity of pilot subcarriers in the RRU pilot configuration information is an even number not greater than the total quantity of subcarriers in the RRU; as yet another example, the quantity of pilot subcarriers in the RRU pilot configuration information is a natural number not greater than the total quantity of subcarriers in the RRU.

Under this division type 4, indices of pilot subcarriers in the RRU pilot configuration information generated by the AP based on the state information of the STA may include indices of some or all pilot subcarriers in an RRU-based fixed pilot configuration scheme allocated to the STA by the AP side; alternatively, indices of pilot subcarriers in the RRU pilot configuration information generated by the AP based on the state information of the STA may exclude indices of all pilot subcarriers in an RRU-based fixed pilot configuration scheme allocated to the STA by the AP side, which is not limited herein.

For brevity, two pilot configuration examples are listed below as references, specific content may refer to the configuration designs in the above division types 1 and 2, and details are not repeated herein.

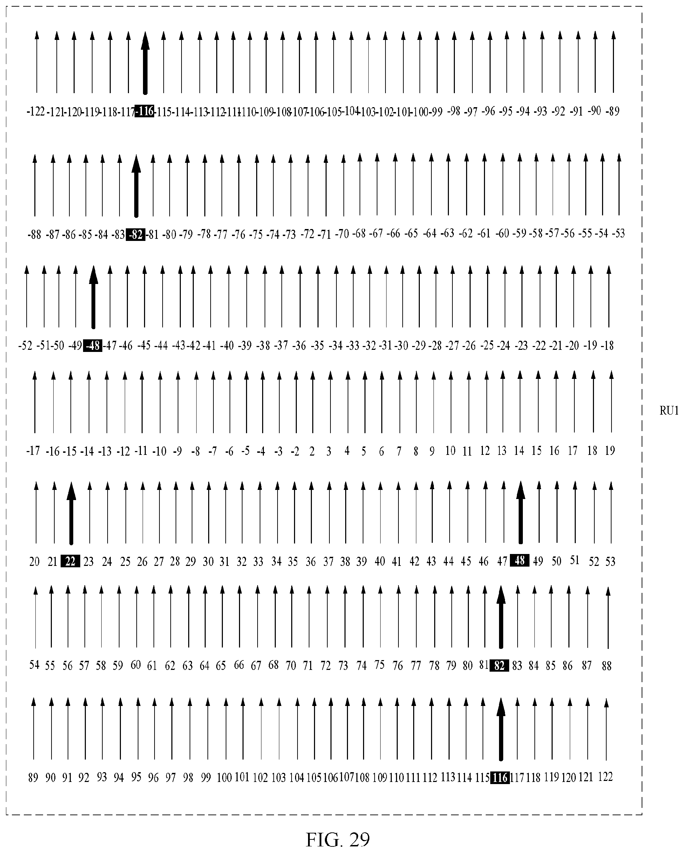

Exemplarily, when the first AP determines that the moving speed of the STA is relatively slow based on the state information of the STA, efficient communication transmission can be achieved without configuring excessive pilot subcarriers. Therefore, the first AP in the embodiments of this application may configure seven pilot subcarriers to better reduce the system overhead. For example, as shown in FIG. 29, the quantity of pilot subcarriers is 7, and the locations are {-116, -82, -48, 22, 48, 82, 116}.

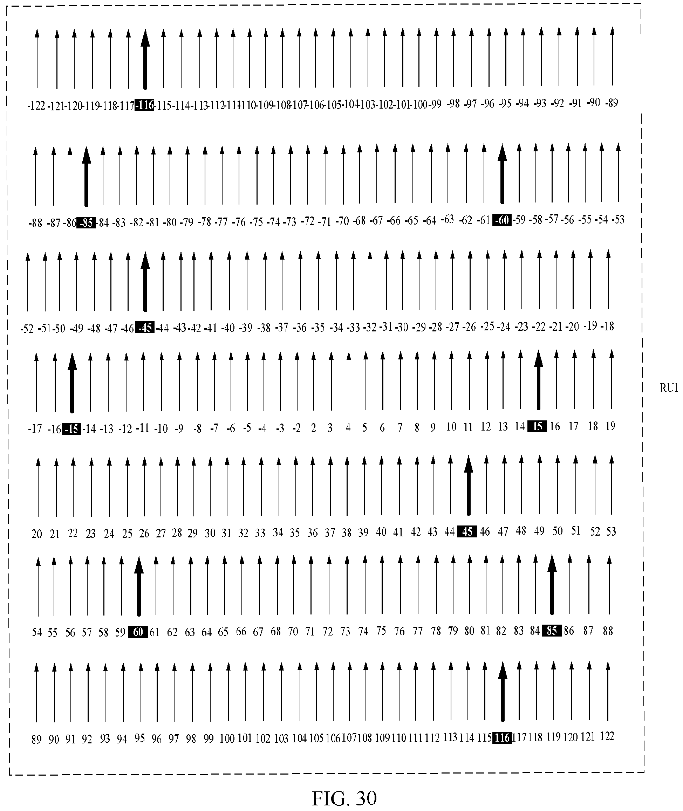

Exemplarily, when the first AP determines that the moving speed of the STA is very high based on the state information of the STA, for example, the moving speed of the STA is 30 km/h, more pilot subcarriers may be configured to better adapt to the current state information of the STA. Therefore, the first AP in the embodiments of this application may configure 10 pilot subcarriers to better adapt to the current transmission scenario. As shown in FIG. 30, the quantity of pilot subcarriers in the embodiments of this application is 10, and the locations are {-116, -85, -60, -45, -15, 15, 45, 60, 85, 116}.

It may be understood that the above introduction in the embodiments of this application for determining the quantity of pilot subcarriers and indices based on the moving speed of the STA is merely an example and does not constitute as a limitation to the embodiments of this application. The embodiments of this application may determine the corresponding quantity of pilot subcarriers and indices based on the moving speed of the STA according to actual scenarios.

Further, in the above configuration manners in the embodiments of this application, the maximum quantity of pilot subcarriers in the RRU may also be configured not to exceed a first preset proportion of the total quantity of subcarriers in the RRU. For example, assuming that the total quantity of subcarriers in the RRU is 242, and that the first preset proportion is 50%, the quantity of pilot subcarriers in the RRU does not exceed 121. The minimum quantity of pilot subcarriers in the RRU may also be configured according to actual scenarios, for example, the minimum quantity of pilot subcarriers in the RRU is not less than 8, and the first AP may perform flexible adjustment according to actual scenarios, which is not limited herein.

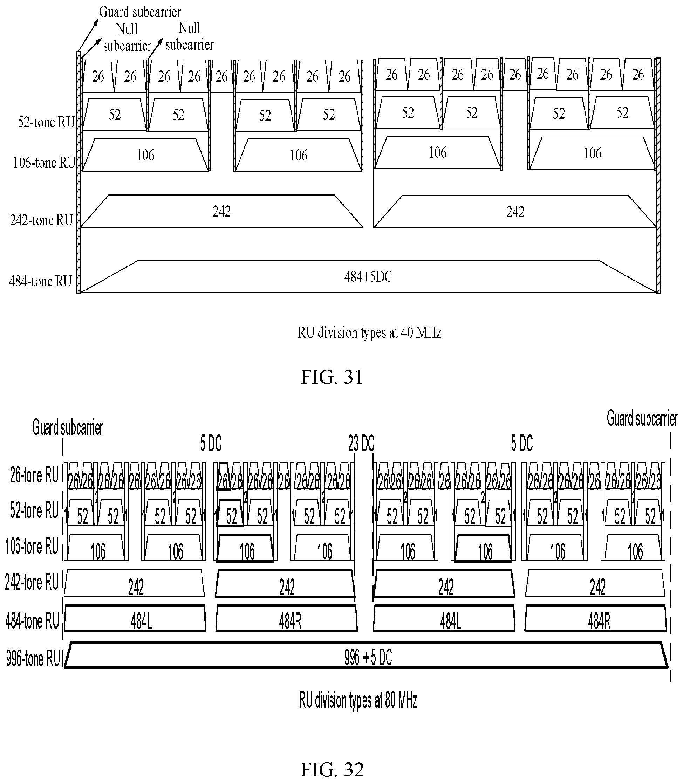

It should be noted that embodiments of this application may also perform corresponding pilot subcarrier configuration for different RRU division types in other bandwidth scenarios such as 40 MHz shown in FIG. 31 and 80 MHz shown in FIG. 32. The specific configuration scheme is similar to the pilot configuration scheme for RRU in the above 20 MHz bandwidth scenario. The AP may perform flexible adjustment on the corresponding quantity of pilots and locations based on the state information of the STA. For brevity, the specific configuration scheme may refer to the introduction content in the above 20 MHz bandwidth scenario, and details are not repeated herein.

In addition, the above pilot configuration scheme based on RRU is only introduced as an example and does not limit this configuration scenario 1 in the embodiments of this application. Any scheme for flexibly configuring pilots or adjusting pilots based on the state information of the STA falls within the protection scope of the embodiments of this application.

With the above resource construction scenario 1, the pilot subcarrier configuration scheme can better adapt to the current widespread application of RRUs and the complex and variable transmission scenarios of RRU-based communication transmission. This scheme can better flexibly adjust the pilot subcarriers based on actual communication conditions, features strong adaptability, and effectively improves overall system performance.

Resource construction scenario 2: A DRU pilot configuration is flexibly performed based on state information of the STA.

As an example, among the foregoing plurality of configuration manners, to better improve the overall communication transmission performance, the pilot subcarriers in the DRU pilot configuration information in the embodiments of this application are symmetrically arranged in the DRU, or approximately symmetrically arranged.

As an example, among the foregoing plurality of configuration manners, indices of pilot subcarriers in the DRU pilot configuration information do not include indices corresponding to a DC subcarrier, a band-edge subcarrier, and a null subcarrier within the DRU.

Further, based on the foregoing resource construction scenario 2 in the embodiments of this application, the difference between the transmit power of the pilot subcarrier in the DRU pilot configuration information generated by the first AP in the embodiments of this application and the transmit power of the data subcarriers in the DRU does not exceed a first threshold. The transmit power of the pilot subcarriers in the DRU in the embodiments of this application may be equal to the transmit power of the data subcarriers in the DRU, that is, the first threshold is 0 in this case.

Based on this scenario 2, the embodiments of this application provide an introduction to division examples of different DRU types based on a 20 MHz bandwidth scenario, where the manner of dividing the 20 MHz resource unit in the following content introduction is merely an example, that is, indices of subcarriers in the following DRUs are merely an example and do not constitute as a limitation to the embodiments of this application. The embodiments of this application are also applicable to subcarrier indices of other DRUs.

Division type 1: At the bandwidth of 20 MHz, DRU is divided in a 26-subcarrier mode.

When the bandwidth is 20 MHz, the entire bandwidth may consist of nine 26-tone DRUs. The entire bandwidth further includes one or more of guard subcarriers, null subcarriers, direct current subcarriers, and pilot subcarriers.

Based on this division type 1, the first AP has a plurality of manners to perform a DRU pilot configuration based on the state information of the STA, specifically not limited to the following types:
(1) Configuration manner 1: The quantity of pilot subcarriers in the DRU pilot configuration information is an odd number greater than or equal to 1 and not greater than the total quantity of subcarriers in the DRU.

Exemplarily, the quantity of pilot subcarriers configured in the DRU may be 1, 3, 5, 7..., or the like, with a maximum value not exceeding the total quantity of subcarriers in the DRU.

For example, when the first AP determines that the moving speed of the STA is extremely slow based on the state information of the STA, efficient communication transmission can be achieved without configuring excessive pilot subcarriers. Therefore, the first AP in the embodiments of this application may configure one pilot subcarrier to better reduce the system overhead.

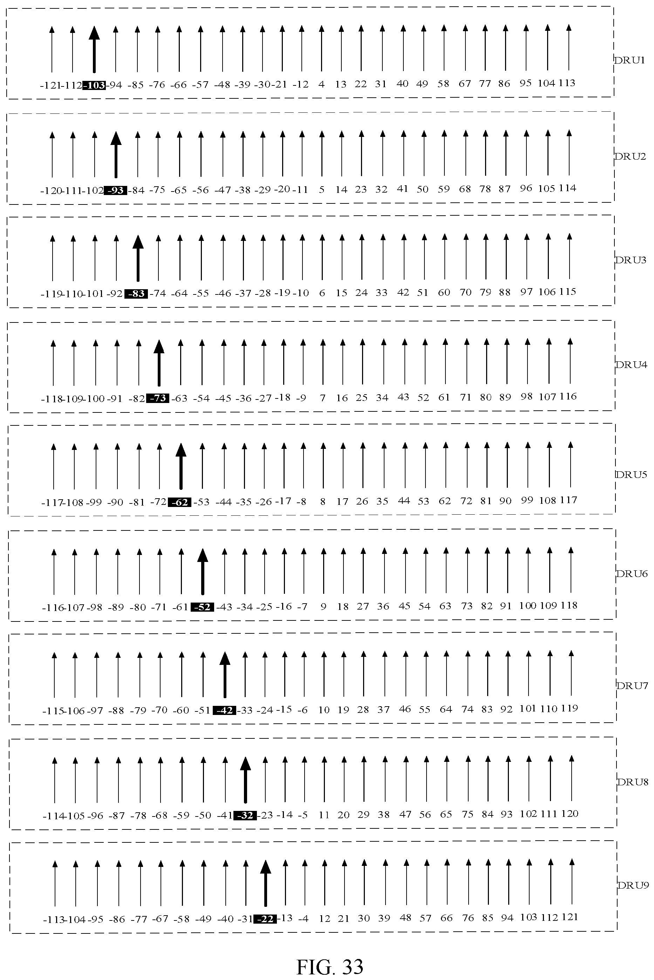

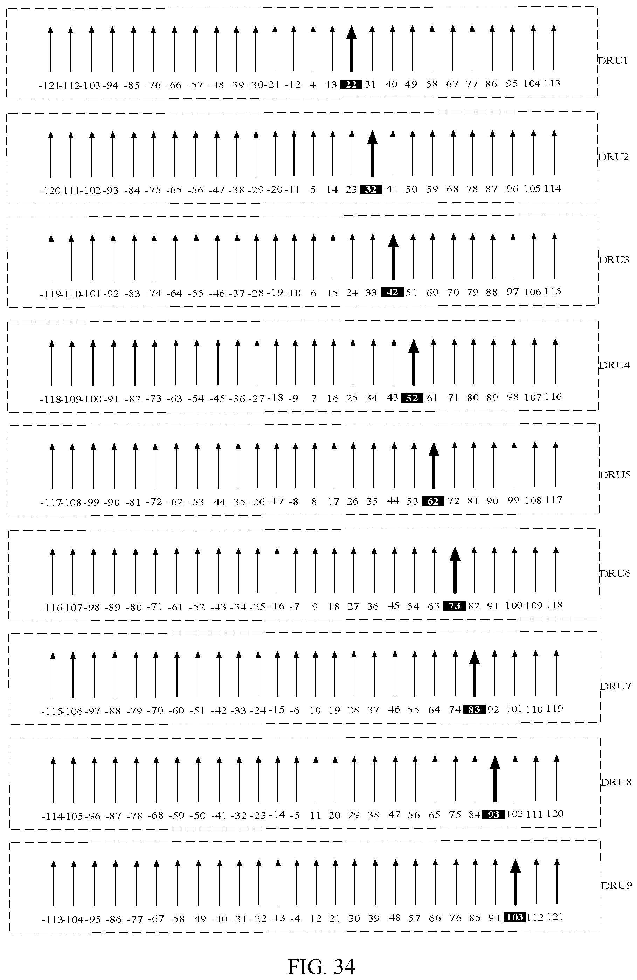

The pilot subcarrier in the embodiments of this application may be acquired by reducing one pilot subcarrier from the original two pilot subcarriers, that is, indices of pilot subcarriers in the DRU pilot configuration information include indices of some original pilot subcarriers in the DRU. For example, as shown in FIG. 33, the quantity of pilot subcarriers is 1, and the locations are {-103}, {-93}, {-83}, {-73}, {-62}, {-52}, {-42}, {-32}, {-22}; alternatively, as shown in FIG. 34, the quantity of pilot subcarriers is 1, and the locations are {22}, {32}, {42}, {52}, {62}, {73}, {83}, {93}, {103}.

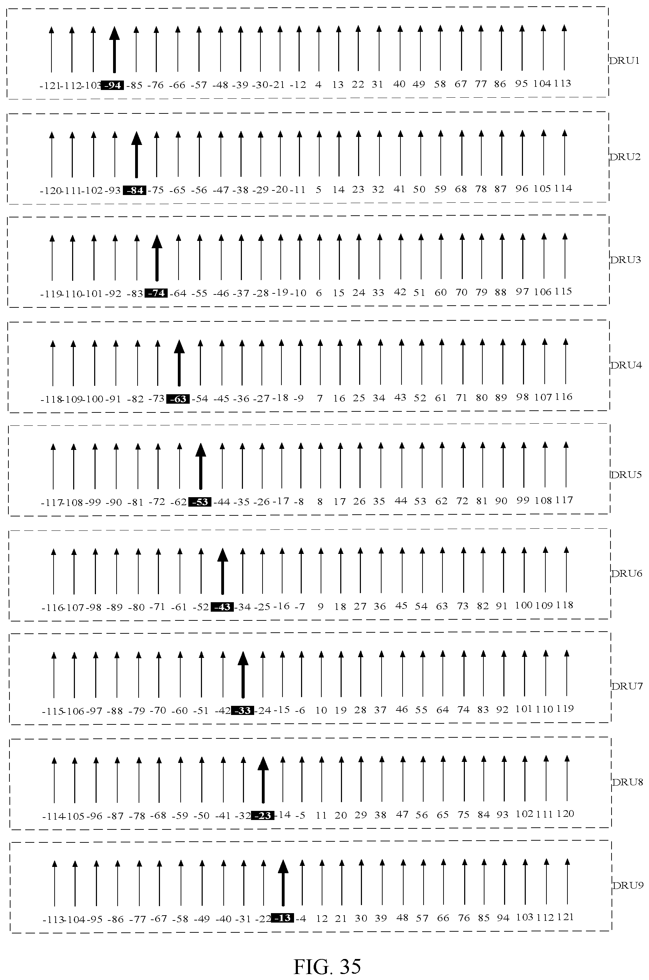

The pilot subcarrier in the embodiments of this application may also be a newly configured pilot subcarrier, that is, indices of pilot subcarriers in the DRU pilot configuration information do not include indices of all original pilot subcarriers in the DRU. For example, as shown in FIG. 35, the quantity of pilot subcarriers is 1, and the locations are {-94}, {-84}, {-74}, {-63}, {-53}, {-43}, {-33}, {-23}, {-13}.

As another example, when the first AP determines that the moving speed of the STA is relatively high based on the state information of the STA, for example, the moving speed of the STA is 20 km/h, the quantity of pilot subcarriers may be increased to better adapt to the current state information of the STA. Therefore, the first AP in the embodiments of this application may configure three pilot subcarriers to better adapt to the current transmission scenario.

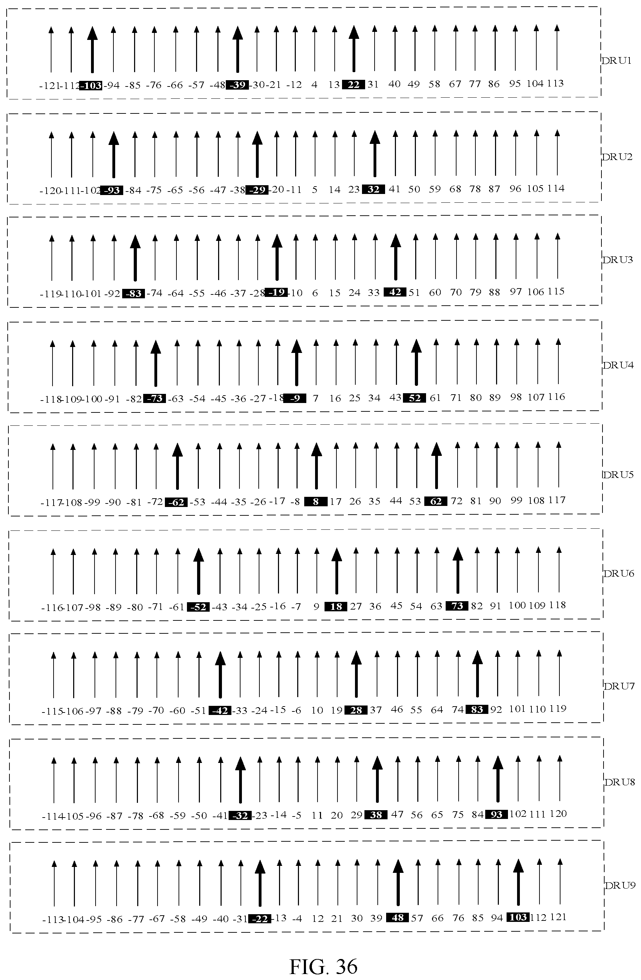

As shown in FIG. 36, the pilot subcarrier in the embodiments of this application may be acquired by adding one pilot subcarrier to the original two pilot subcarriers under this division type, that is, indices of pilot subcarriers in the DRU pilot configuration information include indices of all pilot subcarriers in a DRU-based fixed pilot configuration scheme allocated to the STA by the AP side. For example, the quantity of pilot subcarriers is 3, and the locations are {-103, -39, 22}, {-93, -29, 32}, {-83, -19, 42}, {-73, -9, 52}, {-62, 8, 62}, {-52, 18, 73}, {-42, 28, 83}, {-32, 38, 93}, {-22, 48, 103}.

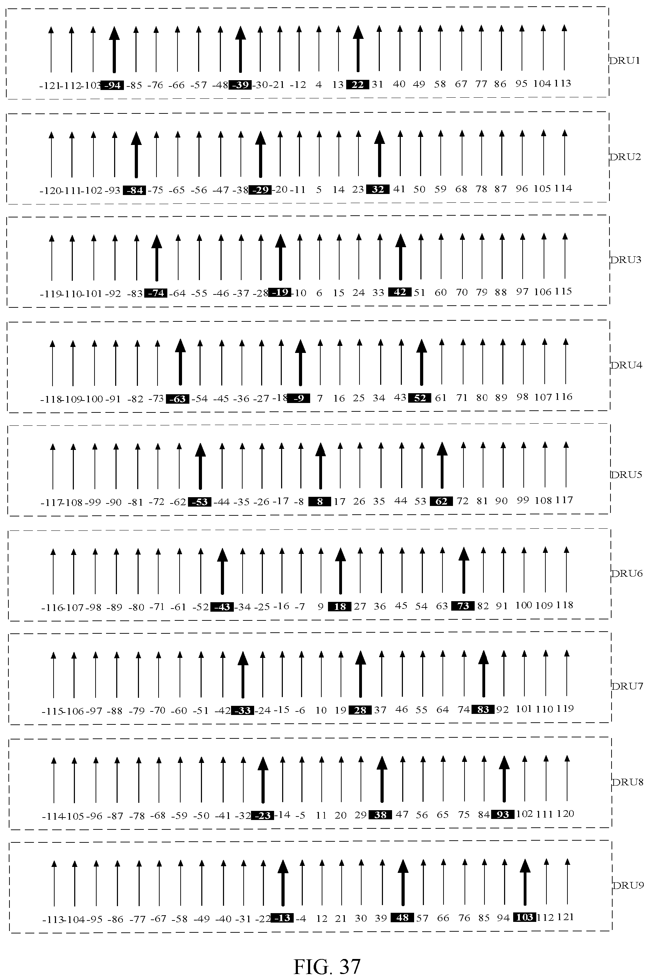

As shown in FIG. 37, indices of pilot subcarriers in the DRU pilot configuration information in the embodiments of this application may also include indices of some pilot subcarriers in a DRU-based fixed pilot configuration scheme allocated to the STA by the AP side. For example, the quantity of pilot subcarriers is 3, and the locations are {-94, -39, 22}, {-84, -29, 32}, {-74, -19, 42}, {-63, -9, 52}, {-53, 8, 62}, {-43, 18, 73}, {-33, 28, 83}, {-23, 38, 93}, {-13, 48, 103}.

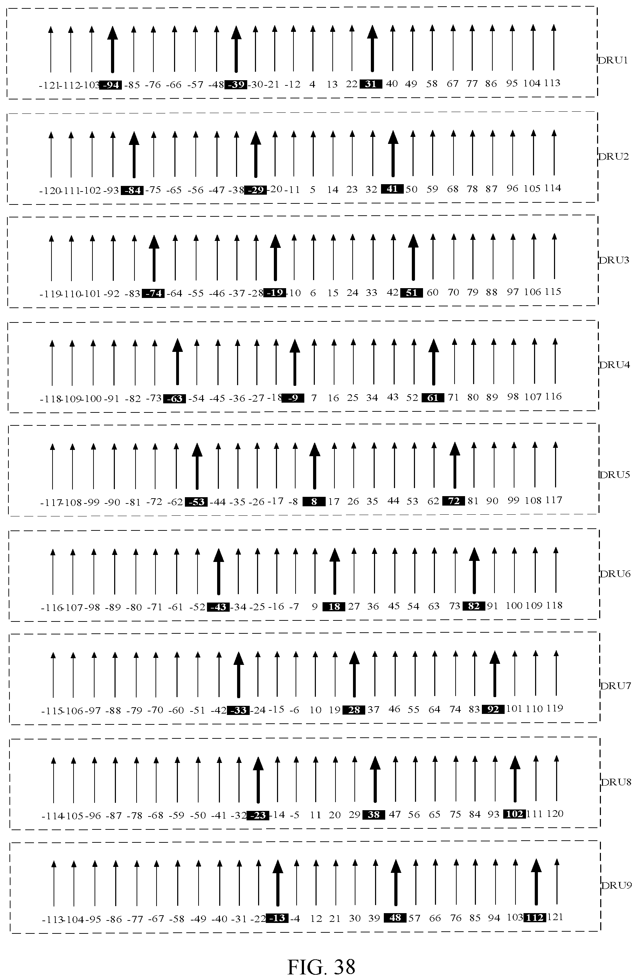

As shown in FIG. 38, indices of pilot subcarriers in the DRU pilot configuration information in the embodiments of this application may also exclude indices of all pilot subcarriers in a DRU-based fixed pilot configuration scheme allocated to the STA by the AP side. For example, the quantity of pilot subcarriers is 3, and the locations are {-94, -39, 31}, {-84, -29, 41}, {-74, -19, 51}, {-63, -9, 61}, {-53, 8, 72}, {-43, 18, 82}, {-33, 28, 92}, {-23, 38, 102}, {-13, 48, 112}.

For another example, when the first AP determines that the moving speed of the STA is very high based on the state information of the STA, for example, the moving speed of the STA is 30 km/h, the quantity of pilot subcarriers may be increased to better adapt to the current state information of the STA. Therefore, the first AP in the embodiments of this application may configure five pilot subcarriers to better adapt to the current transmission scenario.

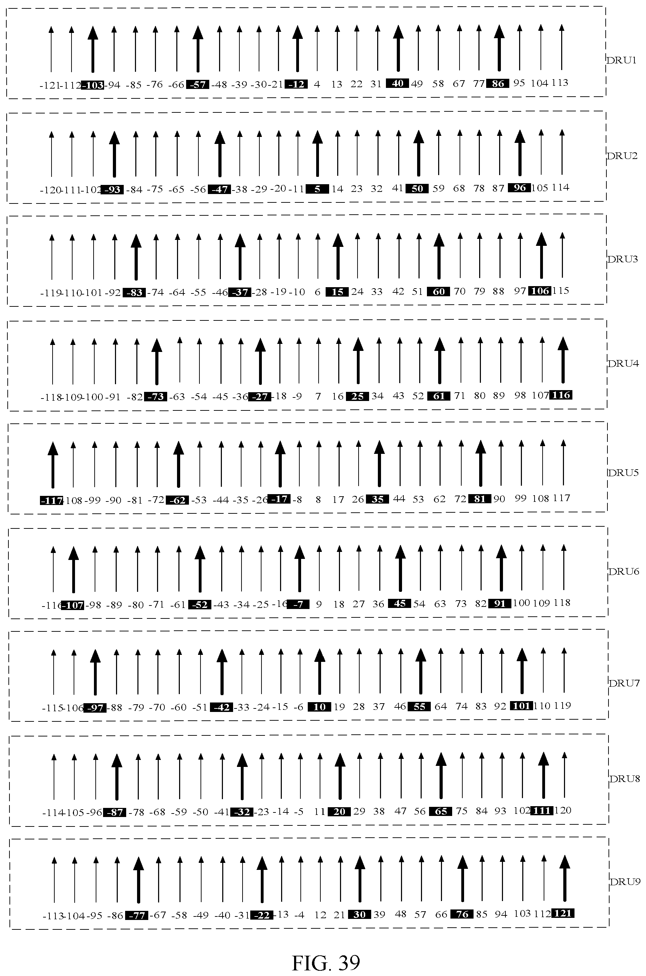

As shown in FIG. 39, the quantity of pilot subcarriers in the embodiments of this application is 5, and the locations are {-103, -57, -12, 40, 86}, {-93, -47, 5, 50, 96}, {-83, -37, 15, 60, 106}, {-73, -27, 25, 61, 116}, {-62, -17, 35, 81, -117}, {-52, -7, 45, 91, -107}, {-42, 10, 55, 101, -97}, {-32, 20, 65, 111, -87}, {-22, 30, 76, 121, -77}.

Similarly, when the quantity of pilot subcarriers configured in the DRU in the embodiments of this application is 5 or another larger odd number, indices of pilot subcarriers in the DRU pilot configuration information in the embodiments of this application may include indices of some or all pilot subcarriers in a DRU-based fixed pilot configuration scheme allocated to the STA by the AP side; alternatively, indices of pilot subcarriers in the DRU pilot configuration information in the embodiments of this application may exclude indices of all pilot subcarriers in a DRU-based fixed pilot configuration scheme allocated to the STA by the AP side. For brevity, reference may be made to the content introduction in the above configuration manner 1, and details are not repeated herein.

(2) Configuration manner 2: The quantity of pilot subcarriers in the DRU pilot configuration information is an even number greater than or equal to 1 and not greater than a total quantity of subcarriers in the DRU.

As an example, a 26-tone RU may consist of 26-2x data subcarriers and 2x pilot subcarriers, where x=0, 1, 2, ..., 13. That is, the AP flexibly configures the quantity of pilot subcarriers in one RU to be a multiple of 2.

Exemplarily, the quantity of pilot subcarriers configured in the DRU may be 0, 2, 4, 6..., or the like, with a maximum value not exceeding the total quantity of subcarriers in the DRU.

For example, when the first AP determines that the STA is stationary or has an extremely small movement amplitude based on the state information of the STA, no pilot subcarriers need to be configured. Therefore, the quantity of pilot subcarriers in the DRU pilot configuration information configured by the first AP in the embodiments of this application may be 0, so as to better reduce the system overhead.

For another example, when the first AP determines that the moving speed of the STA is slightly high based on the state information of the STA, for example, the moving speed of the STA is 5 km/h, the first AP in the embodiments of this application may configure two pilot subcarriers to better adapt to the current transmission scenario.

The pilot subcarrier in the embodiments of this application may continue to adopt the original pilot subcarrier based on the DRU, that is, indices of pilot subcarriers in the DRU pilot configuration information include indices of all pilot subcarriers in a DRU-based fixed pilot configuration scheme allocated to the STA by the AP side.

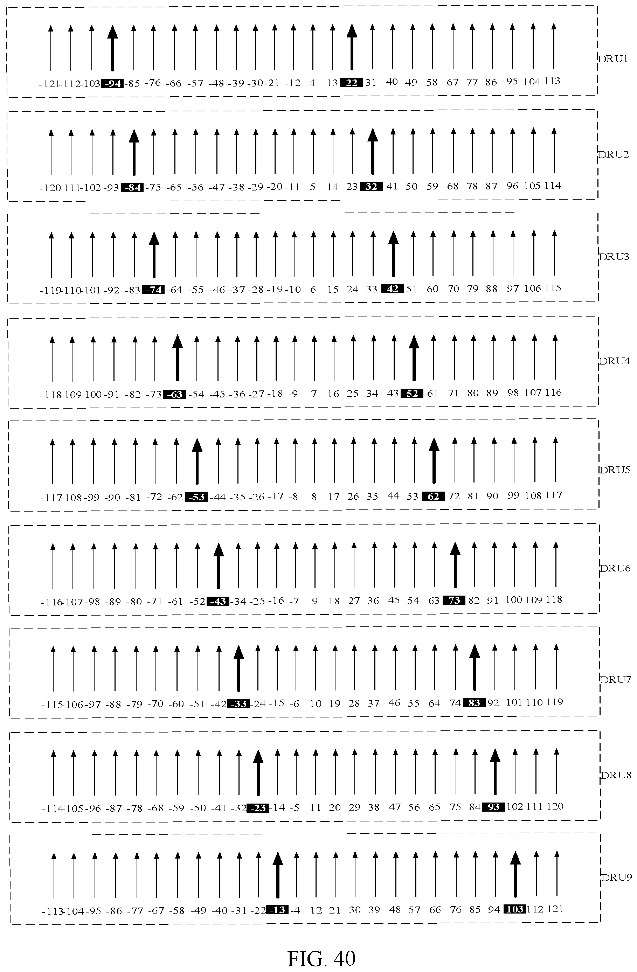

As shown in FIG. 40, indices of pilot subcarriers in the DRU pilot configuration information in the embodiments of this application may also include indices of some pilot subcarriers in a DRU-based fixed pilot configuration scheme allocated to the STA by the AP side. For example, the quantity of pilot subcarriers is 2, and the locations are {-94, 22}, {-84, 32}, {-74, 42}, {-63, 52}, {-53, 62}, {-43, 73}, {-33, 83}, {-23, 93}, {-13, 103}.

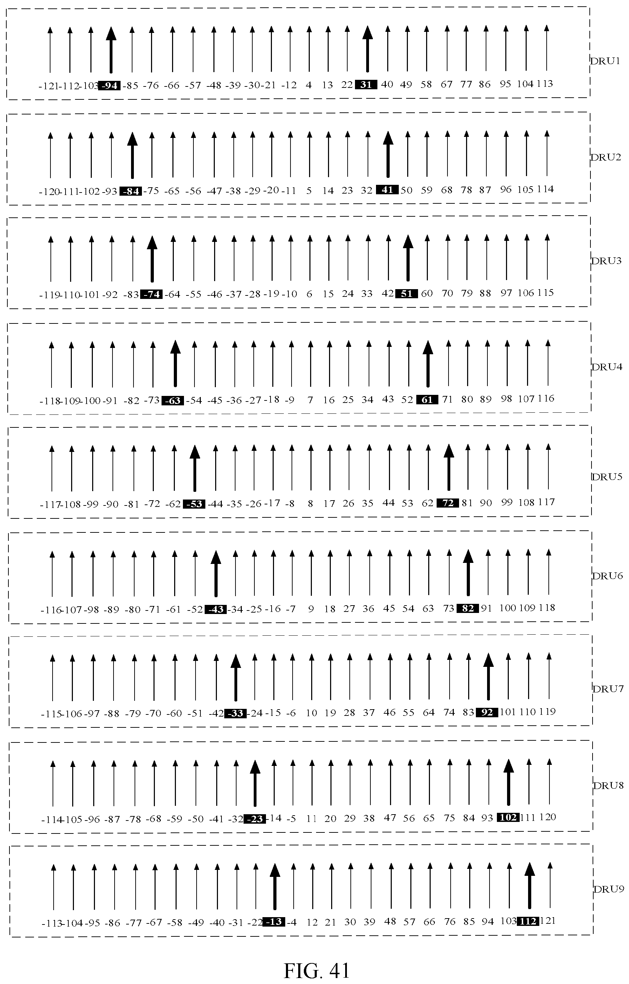

As shown in FIG. 41, indices of pilot subcarriers in the DRU pilot configuration information in the embodiments of this application may also exclude indices of all pilot subcarriers in a DRU-based fixed pilot configuration scheme allocated to the STA by the AP side. For example, the quantity of pilot subcarriers is 2, and the locations are {-94, 31}, {-84, 41}, {-74, 51}, {-63, 61}, {-53, 72}, {-43, 82}, {-33, 92}, {-23, 102}, {-13, 112}.

As another example, when the first AP determines that the moving speed of the STA is very high based on the state information of the STA, for example, the moving speed of the STA is 30 km/h, the quantity of pilot subcarriers may be increased to better adapt to the current state information of the STA. Therefore, the first AP in the embodiments of this application may configure four pilot subcarriers to better adapt to the current transmission scenario.

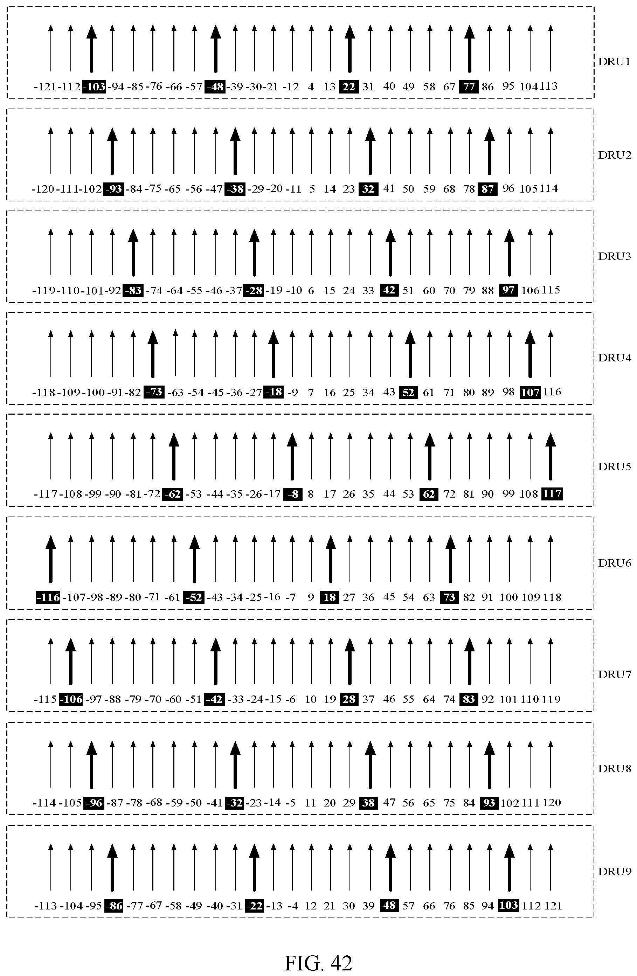

As shown in FIG. 42, the quantity of pilot subcarriers in the embodiments of this application is 4, and the locations are {-103, -48, 22, 77}, {-93, -38, 32, 87}, {-83, -28, 42, 97}, {-73, -18, 52, 107}, {-62, -8, 62, 117}, {-116, -52, 18, 73}, {-106, -42, 28, 83}, {-96, -32, 38, 93}, {-86, -22, 48, 103}.

Similarly, when the quantity of pilot subcarriers configured in the DRU in the embodiments of this application is 4 or another larger even number, indices of pilot subcarriers in the DRU pilot configuration information in the embodiments of this application may include indices of some or all pilot subcarriers in a DRU-based fixed pilot configuration scheme allocated to the STA by the AP side; alternatively, indices of pilot subcarriers in the DRU pilot configuration information in the embodiments of this application may exclude indices of all pilot subcarriers in a DRU-based fixed pilot configuration scheme allocated to the STA by the AP side. For brevity, reference may be made to the content introduction in the above configuration manner 2, and details are not repeated herein.

(3) Configuration manner 3: The quantity of pilot subcarriers in the DRU pilot configuration information is a natural number not greater than the total quantity of subcarriers in the DRU.

As an example, a 26-tone RU may consist of 26-y data subcarriers and y pilot subcarriers, where y=0, 1, 2, ..., 26. That is, the AP flexibly configures the quantity of pilot subcarriers in one RU to be a multiple of 1.

Exemplarily, the quantity of pilot subcarriers configured in the DRU may be 0, 1, 2, 3, 4..., or the like, with a maximum value not exceeding the total quantity of subcarriers in the DRU. For brevity, the configuration scheme for the quantity of pilot subcarriers and indices in this configuration manner 3 may specifically refer to the content introduction in the above configuration manners 1 and 2, and details are not repeated herein.

It may be understood that the above introduction in the embodiments of this application for determining the quantity of pilot subcarriers and indices based on the moving speed of the STA is merely an example and does not constitute as a limitation to the embodiments of this application. The embodiments of this application may determine the corresponding quantity of pilot subcarriers and indices based on the moving speed of the STA according to actual scenarios.

Further, in the above configuration manners in the embodiments of this application, the maximum quantity of pilot subcarriers in the DRU may also be configured not to exceed a first preset proportion of the total quantity of subcarriers in the DRU. For example, assuming that the total quantity of subcarriers in the DRU is 26, and that the first preset proportion is 50%, the quantity of pilot subcarriers in the DRU does not exceed 13. The minimum quantity of pilot subcarriers in the DRU may also be configured according to actual scenarios, for example, the minimum quantity of pilot subcarriers in the DRU is not less than 2, and the first AP may perform flexible adjustment according to actual scenarios, which is not limited herein.

Division manner 2: At the bandwidth of 20 MHz, division is performed in a 52-subcarrier mode.

When the bandwidth is 20 MHz, the entire bandwidth may consist of four 52-tone DRUs. The entire bandwidth further includes one or more of guard subcarriers, null subcarriers, direct current subcarriers, and pilot subcarriers.

Based on this division type 2, the first AP has a plurality of manners to perform a DRU pilot configuration based on the state information of the STA, for example, the quantity of pilot subcarriers in the DRU pilot configuration information is an odd number greater than or equal to 1 and not greater than the total quantity of subcarriers in the DRU; as another example, the quantity of pilot subcarriers in the DRU pilot configuration information is an even number not greater than the total quantity of subcarriers in the DRU; as yet another example, the quantity of pilot subcarriers in the DRU pilot configuration information is a natural number not greater than the total quantity of subcarriers in the DRU.

Under this division type 2, indices of pilot subcarriers in the DRU pilot configuration information generated by the AP based on the state information of the STA in the embodiments of this application may include indices of some or all pilot subcarriers in a DRU-based fixed pilot configuration scheme allocated to the STA by the AP side; alternatively, indices of pilot subcarriers in the DRU pilot configuration information generated by the AP based on the state information of the STA in the embodiments of this application may exclude indices of all pilot subcarriers in a DRU-based fixed pilot configuration scheme allocated to the STA by the AP side, which is not limited herein.

For brevity, two pilot configuration examples are listed below as references, specific content may refer to the configuration designs in the above division type 1, and details are not repeated herein.

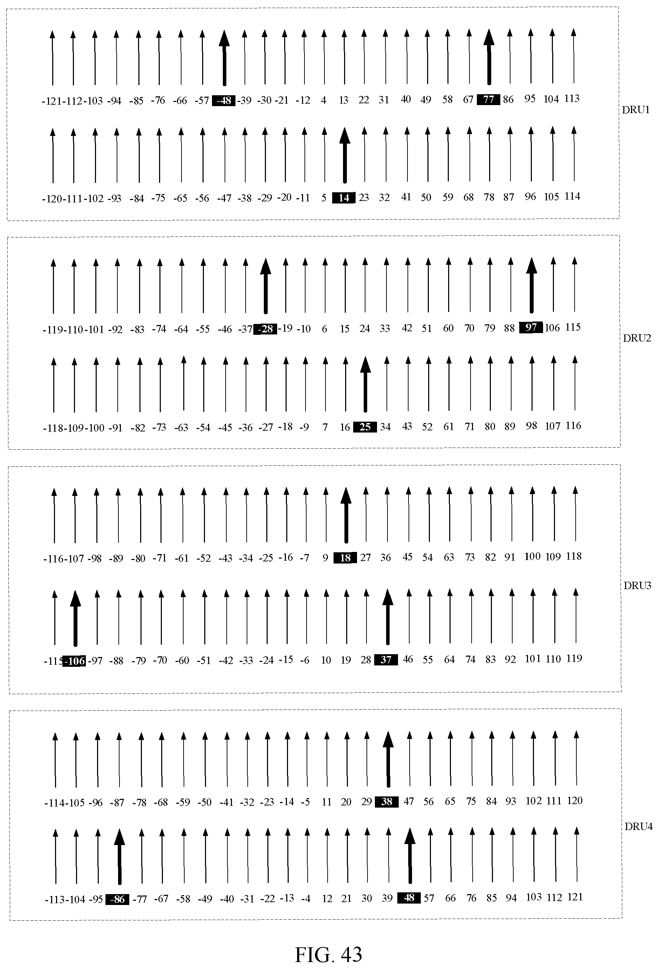

Exemplarily, when the first AP determines that the moving speed of the STA is relatively slow based on the state information of the STA, efficient communication transmission can be achieved without configuring excessive pilot subcarriers in the DRU. Therefore, the first AP in the embodiments of this application may configure three pilot subcarriers to better reduce the system overhead. For example, as shown in FIG. 43, the quantity of pilot subcarriers is 3, and the locations are {-48, -77, 14}, {-28, 97, 25}, {18, 106, 37}, {38, -86, 48}.

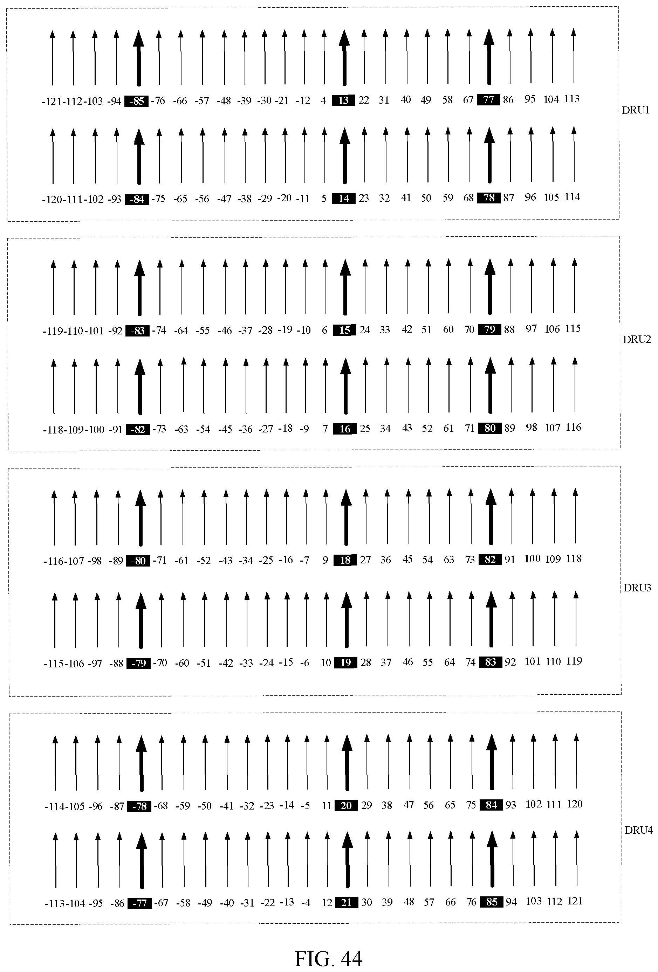

Exemplarily, when the first AP determines that the moving speed of the STA is very high based on the state information of the STA, for example, the moving speed of the STA is 30 km/h, the quantity of pilot subcarriers in the DRU may be increased to better adapt to the current state information of the STA. Therefore, the first AP in the embodiments of this application may configure six pilot subcarriers to better adapt to the current transmission scenario. As shown in FIG. 44, the quantity of pilot subcarriers in the embodiments of this application is 6, and the locations are {-85, 13, 77, -84, 14, 78}, {-83, 15, 79, -82, 16, 80}, {-80, 18, 82, -79, 19, 83}, {-78, 20, 84, -77, 21, 85}.

It may be understood that the above introduction in the embodiments of this application for determining the quantity of pilot subcarriers and indices based on the moving speed of the STA is merely an example and does not constitute as a limitation to the embodiments of this application. The embodiments of this application may determine the corresponding quantity of pilot subcarriers and indices based on the moving speed of the STA according to actual scenarios.

Further, in the above configuration manners in the embodiments of this application, the maximum quantity of pilot subcarriers in the DRU may also be configured not to exceed a first preset proportion of the total quantity of subcarriers in the DRU. For example, assuming that the total quantity of subcarriers in the DRU is 106, and that the first preset proportion is 50%, the quantity of pilot subcarriers in the DRU does not exceed 53. The minimum quantity of pilot subcarriers in the DRU may also be configured according to actual scenarios, for example, the minimum quantity of pilot subcarriers in the DRU is not less than 4, and the first AP may perform flexible adjustment according to actual scenarios, which is not limited herein.

It should be noted that embodiments of this application may also flexibly perform corresponding DRU pilot configurations in other DRU division types based on 20 MHz, as well as in other bandwidth scenarios such as 40 MHz and 80 MHz. The specific configuration scheme is similar to the pilot configuration scheme for DRU in the above 20 MHz bandwidth scenario, and the AP may perform flexible adjustment on the corresponding quantity of pilots and locations based on the state information of the STA. For brevity, the specific configuration scheme may refer to the introduction content in the above 20 MHz bandwidth scenario, and details are not repeated herein.

In addition, the above pilot configuration scheme is merely introduced as an example and shall not be construed as a limitation to resource construction scenario 2 in the embodiments of this application. Any scheme for flexibly configuring pilots or adjusting pilots based on the state information of the STA falls within the protection scope of the embodiments of this application.

Since the first AP can determine, based on the state information of the STA, the pilot subcarrier configuration allocated to the STA, more flexible adaptive adjustment on the pilot subcarriers is achieved. This is more adaptable to complex and variable communication scenarios, features high flexibility and strong adaptability, and effectively improves overall system performance.

By adopting the foregoing resource construction scenario 2, since the DRU can achieve coverage extension and enhancement of range versus rate (RvR) by overcoming the limitation of power spectral density (PSD), it has higher transmit power compared with the RRU, can cover a longer distance range, is more adaptable to long-distance transmission scenarios, and the like. Therefore, the embodiments of this application flexibly configure the pilot configuration scheme for the DRU through the state information of the STA, which can better compensate for the lower transmit power of the RRU, is more applicable to complex and variable transmission scenarios, features strong adaptability, and effectively improves overall system performance.

Further, the pilot configuration scheme provided in the embodiments of this application has a plurality of application manners, which are specifically not limited to the following three types:
It should be noted that in the following three application manners, the first indication information sent by the first AP to the STA may be based on RRU pilot configuration information and/or based on DRU pilot configuration information, which is not limited herein.

Application manner 1: During communication transmission between the first AP and the STA based on a fixed pilot configuration scheme, after determining that a switching condition is satisfied, the pilot configuration scheme provided in the embodiments of this application is executed.

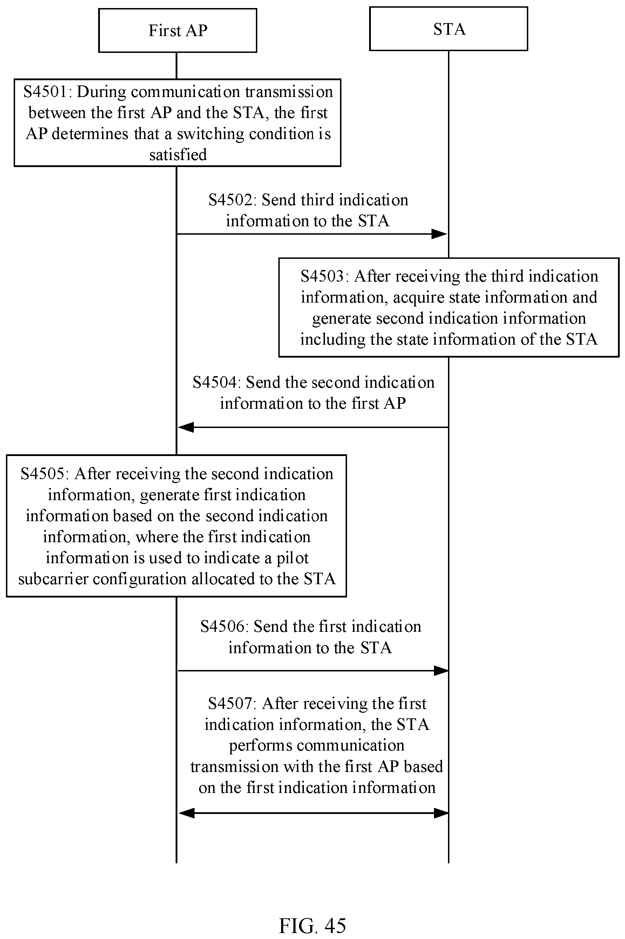

FIG. 45 exemplarily shows a possible flowchart of a pilot configuration method according to an embodiment of this application. As shown in FIG. 45, the method includes the following steps:
S4501: During communication transmission between the first AP and the STA, the first AP determines that a switching condition is satisfied, where the switching condition is used to indicate switching of the pilot configuration scheme.

As an example, the pilot configuration scheme applied by the first AP and the STA before determining that the switching condition is satisfied in step S4501 may be a fixed pilot configuration scheme allocated to the STA by the AP side indicated in the related art. The pilot configuration scheme allocated after the switching condition is satisfied may be a pilot configuration scheme flexibly configured by the AP based on the state information of the STA in the embodiments of this application.

As an example, the switching condition in the embodiments of this application includes but is not limited to: a communication failure rate exceeds a failure rate threshold, a received energy or signal-to-noise ratio is lower than an energy or signal-to-noise ratio threshold, a carrier frequency offset (CFO) exceeds a frequency offset threshold, and the like.

S4502: The first AP sends third indication information to the STA, where the third indication information is used to indicate that the first AP has a capability of configuring a pilot subcarrier based on the state information of the STA.

S4503: After receiving the third indication information, the STA acquires its own state information and generates second indication information including the state information of the STA.

S4504: The STA sends the second indication information to the first AP.

S4505: After receiving the second indication information, the first AP generates first indication information based on the second indication information, where the first indication information is used to indicate a pilot subcarrier configuration allocated to the STA.

S4506: The first AP sends the first indication information to the STA.

S4507: After receiving the first indication information, the STA performs communication transmission with the first AP based on the first indication information.

It should be noted that the execution sequence of the flowchart steps in FIG. 45 shall not be construed as a limitation to the embodiments of this application. The embodiments of this application may adjust the flowchart according to actual scenarios. For example, step S4502 may be omitted, that is, the STA may actively report the second indication information to the first AP.

Application manner 2: An AP receives second indication information reported by different STAs and performs a pilot configuration for them separately.

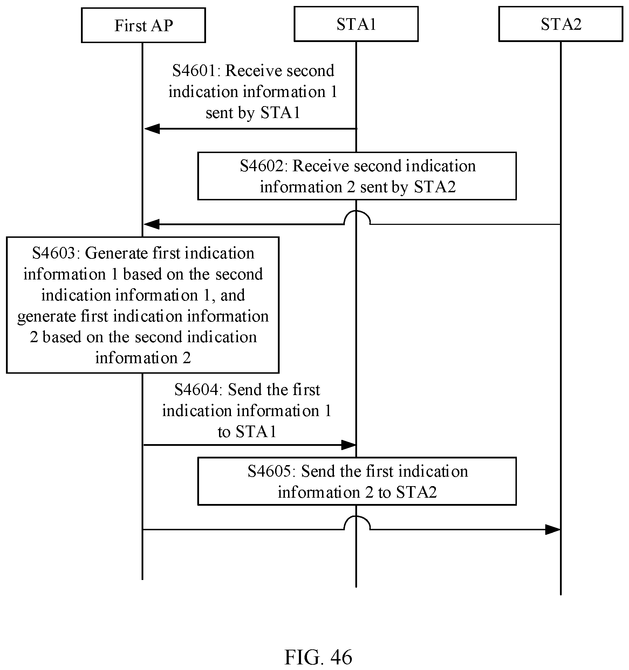

FIG. 46 exemplarily shows a possible flowchart of a pilot configuration method according to an embodiment of this application. As shown in FIG. 46, the method includes the following steps:
S4601: The first AP receives second indication information 1 sent by STA1.
S4602: The first AP receives second indication information 2 sent by STA2.
S4603: The first AP generates first indication information 1 based on the second indication information 1, and generates first indication information 2 based on the second indication information 2.
S4604: The first AP sends the first indication information 1 to STA1.
S4605: The first AP sends the first indication information 2 to STA2.

As an example, in the embodiments of this application, when a bandwidth resource is allocated to a plurality of STAs, the pilot subcarriers configured by the first AP for DRUs or RRUs in the segment of bandwidth resources may be the same or different, which is not limited herein.

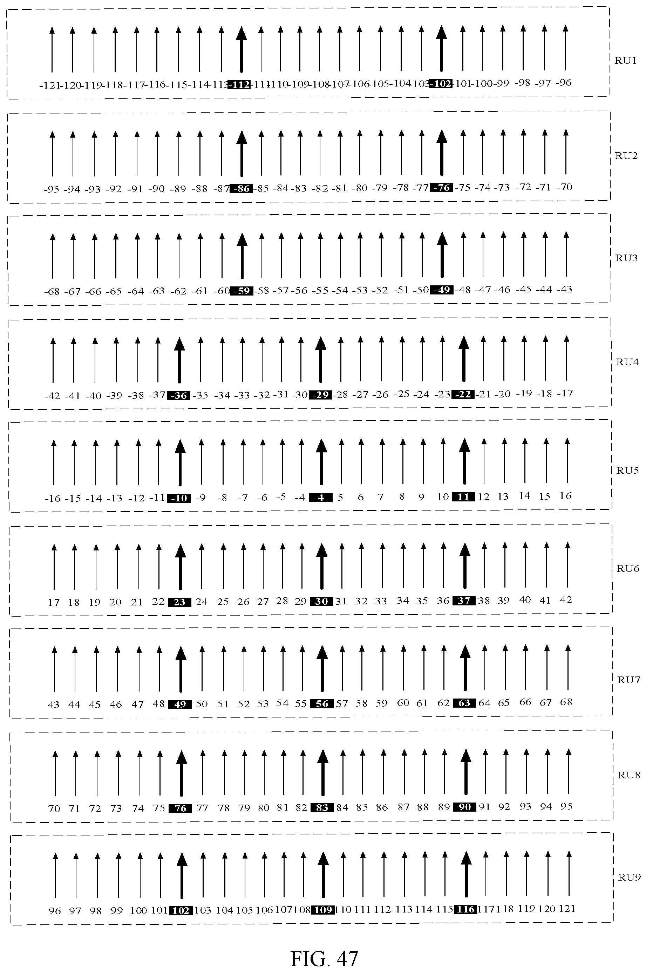

Exemplarily, the embodiments of this application take the configuration mode with different pilot subcarrier quantities as an example for description. Under the 20 MHz bandwidth and the RRU-based 26-subcarrier division mode, this bandwidth resources may be divided into nine resource units from RRU1 to RRU9. Assuming that the first AP allocates RRU1 to RRU3 to STA1 and RRU4 to RRU9 to STA2, where the moving speed of STA1 is relatively slow at 2 km/h, and the moving speed of STA2 is relatively high at 20 km/h, then as shown in FIG. 47, based on the state information of STA1 and STA2, the quantity of pilot subcarriers configured by the first AP for STA1 may be 2, and the quantity of pilot subcarriers configured for STA2 may be 3.

It should be noted that the execution sequence of the flowchart steps in FIG. 46 shall not be construed as a limitation to the embodiments of this application, and the embodiments of this application may adjust the flowchart according to actual scenarios.

Application manner 3: The first AP acquires the state information of a target STA from a second AP, and flexibly performs a pilot configuration for the target STA based on the state information of the target STA.

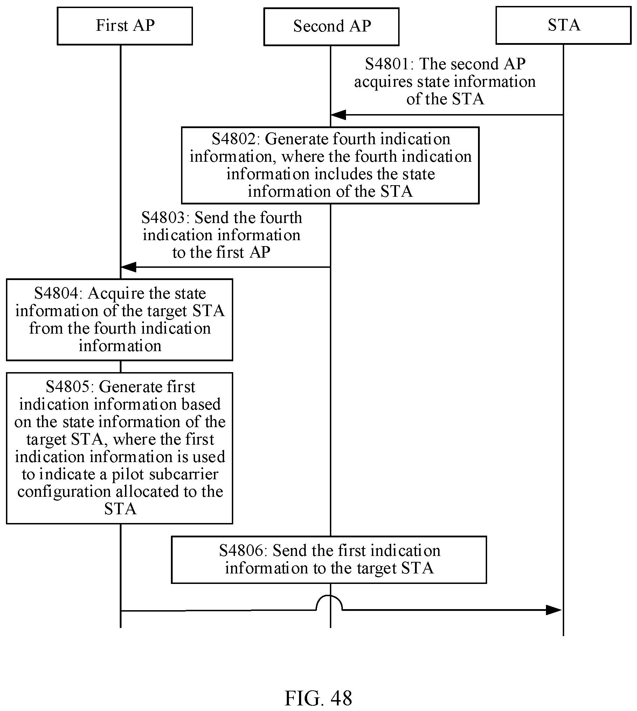

FIG. 48 exemplarily shows a possible flowchart of a pilot configuration method according to an embodiment of this application. As shown in FIG. 48, the method includes the following steps:
S4801: The second AP acquires state information of the STA.

The state information of the STA acquired by the second AP may be actively reported by the STA, or triggered by the STA to report after the second AP sends a state information reporting notification to the STA.

S4802: The second AP generates fourth indication information, where the fourth indication information includes the state information of the STA.

The fourth indication information may also include state information of other STAs.

S4803: The second AP sends the fourth indication information to the first AP.

S4804: The first AP acquires the state information of the target STA from the fourth indication information.

S4805: The first AP generates first indication information based on the state information of the target STA, where the first indication information is used to indicate a pilot subcarrier configuration allocated to the STA.

S4806: The first AP sends the first indication information to the target STA.

It should be noted that the execution sequence of the flowchart steps in FIG. 48 shall not be construed as a limitation to the embodiments of this application, and the embodiments of this application may adjust the flowchart according to actual scenarios.

It may be understood that to implement the functions of the foregoing embodiments, each of the foregoing access points is provided with corresponding hardware structures and/or software modules for executing various functions. Persons skilled in the art should easily realize that, in combination with the units and method steps described in the examples disclosed in this application, this application can be implemented in the form of hardware or a combination of hardware and computer software. Whether a certain function is executed by hardware or computer software driving hardware depends on the specific application and design constraints of the technical solution.

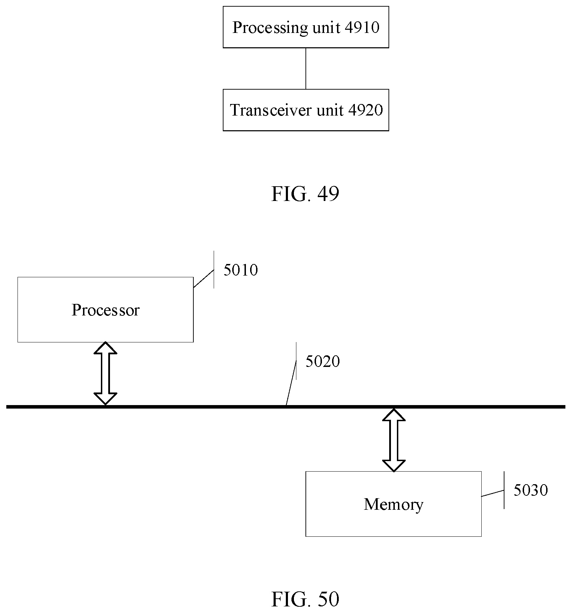

FIG. 49 and FIG. 50 are schematic diagrams of structures of possible communication apparatuses provided by embodiments of this application. These communication apparatuses may be used to implement functions of the above first AP, STA, or second AP in the above method embodiments, and thus can also achieve beneficial effects of the above method embodiments. In the embodiments of this application, the communication apparatus may be the first AP, STA, or second AP introduced in the above content, or may be a module (such as a chip) used in the first AP, STA, or second AP.

As shown in FIG. 49, a communication apparatus 4900 includes a processing unit 4910 and a transceiver unit 4920. The communication apparatus 4900 is configured to implement functions of the first AP in the above method embodiments, or to implement functions of the STA in the above method embodiments, or to implement functions of the second AP in the above method embodiments.

When the communication apparatus 4900 is configured to implement the functions of the first AP,
the processing unit 4910 calls the transceiver unit 4920 to perform the following steps:
determining first indication information based on state information of an STA, where the first indication information is used to indicate a pilot subcarrier configuration allocated to the STA; and sending the first indication information to the STA.

In a possible design, the first indication information includes DRU pilot configuration information and/or RRU pilot configuration information; where the DRU pilot configuration information includes a quantity of pilot subcarriers and a location of a pilot subcarrier in a DRU allocated to the STA for uplink and/or downlink communication transmission; and the RRU pilot configuration information includes a quantity of pilot subcarriers and a location of a pilot subcarrier in an RRU allocated to the STA for uplink and/or downlink communication transmission.

In a possible design, the quantity of pilot subcarriers is determined by using at least one of the following methods:
the quantity of pilot subcarriers is linearly positively correlated with a value of the state information of the STA; or
the quantity of pilot subcarriers is positively and non-linearly correlated with a value of the state information of the STA; or
the quantity of pilot subcarriers is determined by the first AP from a correspondence between a value range of the state information and the quantity of pilot subcarriers based on the correspondence and a range in which the value of the state information of the STA falls.

In a possible design, indices of pilot subcarriers in the DRU pilot configuration information do not include indices corresponding to a DC subcarrier, a band-edge subcarrier, and a null subcarrier within the DRU.

In a possible design, indices of pilot subcarriers in the RRU pilot configuration information do not include indices corresponding to a DC subcarrier, a band-edge subcarrier, and a null subcarrier within the RRU.

In a possible design, the pilot subcarriers in the DRU pilot configuration information are symmetrically arranged in the DRU.

It may be understood that the symmetric arrangement of the pilot subcarriers in the DRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, the pilot subcarriers in the RRU pilot configuration information are symmetrically arranged in the RRU.

Similarly, the symmetric arrangement of the pilot subcarriers in the RRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, a difference between a transmit power of the pilot subcarrier in the DRU pilot configuration information and a transmit power of a data subcarrier in the DRU does not exceed a first threshold.

In a possible design, a difference between a transmit power of the pilot subcarrier in the RRU pilot configuration information and a transmit power of a data subcarrier in the RRU does not exceed a second threshold.

In a possible design, the location of the pilot subcarrier in the DRU pilot configuration information includes at least one of the following:
locations of pilot subcarriers in the DRU pilot configuration information are locations of some or all pilot subcarriers in a fixed pilot configuration scheme allocated to the STA; or
locations of pilot subcarriers in the DRU pilot configuration information do not include locations of all pilot subcarriers in a fixed pilot configuration scheme allocated to the STA.

The fixed pilot configuration scheme includes an RRU-based fixed pilot configuration scheme and/or a DRU-based fixed pilot configuration scheme.

In a possible design, the location of the pilot subcarrier in the RRU pilot configuration information includes at least one of the following:
locations of pilot subcarriers in the RRU pilot configuration information are locations of some or all pilot subcarriers in a fixed pilot configuration scheme allocated to the STA; or
locations of pilot subcarriers in the RRU pilot configuration information do not include locations of all pilot subcarriers in a fixed pilot configuration scheme allocated to the STA.

The fixed pilot configuration scheme includes an RRU-based fixed pilot configuration scheme and/or a DRU-based fixed pilot configuration scheme.

In a possible design, the quantity of pilot subcarriers in the RRU pilot configuration information is an odd number greater than or equal to 1 and not greater than a total quantity of subcarriers in the RRU.

In a possible design, the quantity of pilot subcarriers in the RRU pilot configuration information is an even number greater than or equal to 0 and not greater than a total quantity of subcarriers in the RRU.

In a possible design, the quantity of pilot subcarriers in the DRU pilot configuration information is an even number greater than or equal to 0 and not greater than a total quantity of subcarriers in the DRU.

In a possible design, the processing unit 4910 is further configured to:
receive second indication information reported by the STA, where the second indication information is used to indicate the state information of the STA.

In a possible design, the state information of the STA includes one or more of: a moving speed of the STA, a Doppler value of the STA, and an orientation of the STA.

In a possible design, the second indication information is configured in one or more of the following information reported by the STA: channel state information, block acknowledgment information, or location tracking notification frame information.

In a possible design, the transceiver unit 4920 is specifically configured to:
receive, at an interval of a preset period, second indication information reported by the STA; or
receive second indication information reported by the STA after a variation of the state information exceeds a threshold.

In a possible design, the transceiver unit 4920 is further configured to:
send third indication information to the STA, where the third indication information is used to indicate that the first AP has a capability of configuring a pilot subcarrier based on the state information of the STA.

In a possible design, the third indication information is configured in one or more of the following fields sent by the first AP to the STA: a universal signaling (U-SIG) field, an extremely high throughput signaling (EHT-SIG) field, or an extended capability field.

In a possible design, the transceiver unit 4920 is further configured to:
receive fourth indication information sent by a second AP, where the fourth indication information includes the state information of the STA.

In a possible design, the transceiver unit 4920 is further configured to:
perform data transmission to the STA via the transceiver module based on the first indication information; or
receive, via the transceiver module, data transmitted by the STA based on the first indication information.

When the communication apparatus 4900 is configured to implement the functions of the STA,
the processing unit 4910 calls the transceiver unit 4920 to perform the following steps:
receiving first indication information sent by a first AP, where the first indication information is determined by the first AP based on state information of the STA, and the first indication information is used to indicate a pilot subcarrier configuration allocated to the STA; and performing data transmission to the first AP via the transceiver module based on the first indication information.

In a possible design, the first indication information includes DRU pilot configuration information and/or RRU pilot configuration information; where the DRU pilot configuration information includes a quantity of pilot subcarriers and a location of a pilot subcarrier in a DRU allocated to the STA for uplink and/or downlink communication transmission; and the RRU pilot configuration information includes a quantity of pilot subcarriers and a location of a pilot subcarrier in an RRU allocated to the STA for uplink and/or downlink communication transmission.

In a possible design, the transceiver unit 4920 is further configured to:
report second indication information to the first AP, where the second indication information is used to indicate the state information of the STA.

In a possible design, the transceiver unit 4920 is further configured to:
report the second indication information to a second AP, so that the second AP sends, to the first AP, the state information of the STA acquired based on the second indication information.

In a possible design, the second indication information is carried in one or more of the following signals reported by the STA to the first AP and/or the second AP: a CSI feedback signal, a block acknowledgment (BA) signal, or a location tracking notification frame signal.

In a possible design, the second indication information is reported by the STA to the first AP and/or the second AP at an interval of a preset period; or
the second indication information is reported by the STA to the first AP and/or the second AP after the STA determines that a variation of a value of the state information of the STA exceeds a threshold.

In a possible design, the transceiver unit 4920 is further configured to:
receive third indication information sent by the first AP, where the third indication information is used to indicate that the first AP has a capability of configuring a pilot subcarrier based on the state information of the STA.

In a possible design, the processing unit 4910 is further configured to:
if the third indication information sent by the first AP is not received, perform uplink and/or downlink communication transmission with the first AP based on a fixed pilot configuration scheme allocated by the first AP to the STA, where the fixed pilot configuration scheme includes an RRU-based fixed pilot configuration scheme and/or a DRU-based fixed pilot configuration scheme.

In a possible design, the third indication information is carried in one or more of the following fields sent by the first AP to the STA: a universal signaling (U-SIG), field an extremely high throughput signaling (EHT-SIG) field, or an extended capability field.

In a possible design, indices of pilot subcarriers in the DRU pilot configuration information do not include indices corresponding to a DC subcarrier, a band-edge subcarrier, and a null subcarrier within the DRU.

In a possible design, indices of pilot subcarriers in the RRU pilot configuration information do not include indices corresponding to a DC subcarrier, a band-edge subcarrier, and a null subcarrier within the RRU.

In a possible design, the pilot subcarriers in the DRU pilot configuration information are symmetrically arranged in the DRU.

It may be understood that the symmetric arrangement of the pilot subcarriers in the DRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, the pilot subcarriers in the RRU pilot configuration information are symmetrically arranged in the RRU.

Similarly, the symmetric arrangement of the pilot subcarriers in the RRU in this embodiment of this application is not strictly limited to completely symmetric arrangement, and the symmetric arrangement in this embodiment of this application may further make, based on an actual quantity of pilot subcarriers, locations of the pilot subcarriers approximately symmetrically arranged.

In a possible design, a difference between a transmit power of the pilot subcarrier in the DRU pilot configuration information and a transmit power of a data subcarrier in the DRU does not exceed a first threshold.

In a possible design, a difference between a transmit power of the pilot subcarrier in the RRU pilot configuration information and a transmit power of a data subcarrier in the RRU does not exceed a second threshold.

In a possible design, the location of the pilot subcarrier in the DRU pilot configuration information includes at least one of the following:
locations of pilot subcarriers in the DRU pilot configuration information are locations of some or all pilot subcarriers in a fixed pilot configuration scheme allocated to the STA; or
locations of pilot subcarriers in the DRU pilot configuration information do not include locations of all pilot subcarriers in a fixed pilot configuration scheme allocated to the STA.

The fixed pilot configuration scheme includes an RRU-based fixed pilot configuration scheme and/or a DRU-based fixed pilot configuration scheme.

In a possible design, the location of the pilot subcarrier in the RRU pilot configuration information includes at least one of the following:
location of pilot subcarriers in the RRU pilot configuration information are locations of some or all pilot subcarriers in a fixed pilot configuration scheme allocated to the STA; or
location of pilot subcarriers in the RRU pilot configuration information do not include locations of all pilot subcarriers in a fixed pilot configuration scheme allocated to the STA.

The fixed pilot configuration scheme includes an RRU-based fixed pilot configuration scheme and/or a DRU-based fixed pilot configuration scheme.

In a possible design, the quantity of pilot subcarriers in the RRU pilot configuration information is an odd number greater than or equal to 1 and not greater than a total quantity of subcarriers in the RRU.

In a possible design, the quantity of pilot subcarriers in the RRU pilot configuration information is an even number greater than or equal to 0 and not greater than a total quantity of subcarriers in the RRU.

In a possible design, the quantity of pilot subcarriers in the DRU pilot configuration information is an odd number greater than or equal to 1 and not greater than a total quantity of subcarriers in the DRU.

In a possible design, the quantity of pilot subcarriers in the DRU pilot configuration information is an even number greater than or equal to 0 and not greater than a total quantity of subcarriers in the DRU.

When the communication apparatus 4900 is configured to implement the functions of the second AP,
the processing unit 4910 calls the transceiver unit 4920 to perform the following steps:
receiving second indication information reported by a station (STA), where the second indication information is used to indicate state information of the STA; and sending fourth indication information to an associated first AP via the transceiver module, where the fourth indication information includes the state information of the STA.

In a possible design, the transceiver unit 4920 is further configured to:
send third indication information to the STA, where the third indication information is used to indicate that the second AP has a capability of configuring a pilot subcarrier based on the state information of the STA.

In a possible design, the transceiver unit 4920 is further configured to:
send fifth indication information to the STA, where the fifth indication information is used to indicate the STA to report the state information of the STA.

As an example, the fifth indication information may also be used to indicate that the second AP has a capability of configuring a pilot subcarrier based on the state information of the STA.

In a possible design, the transceiver unit 4920 is further configured to:
receive sixth indication information sent by the first AP, where the sixth indication information is used to indicate the second AP to report acquired movement information of the STA to the first AP. For more detailed descriptions of the above processing unit 4910 and transceiver unit 4920, refer to the relevant descriptions in the above method embodiments.

As shown in FIG. 50, a communication apparatus 5000 includes a processor 5010 and an interface circuit 5020. The processor 5010 and the interface circuit 5020 are coupled to each other. It may be understood that the interface circuit 5020 may be a transceiver or an input/output interface. Optionally, the communication apparatus 5000 may further include a memory 5030, configured to store instructions executed by the processor 5010 or store input data required for running instructions by the processor 5010 or store data generated after the processor 5010 runs instructions.

When the communication apparatus 5000 is configured to implement the above method, the processor 5010 is configured to implement functions of the above processing unit 4910, and the interface circuit 5020 is configured to implement functions of the above transceiver unit 4920.

It may be understood that the processor in this embodiment of this application may be a central processing unit (CPU), or may be another general-purpose processor, a digital signal processor (DSP), an application-specific integrated circuit (ASIC), a field programmable gate array (FPGA) or another programmable logic device, a transistor logic device, a hardware component, or any combination thereof. The general-purpose processor may be a microprocessor or any conventional processor.

The steps of the method in the embodiments of this application may be implemented by hardware or may be implemented by software instructions executable by the processor. The software instructions may consist of corresponding software modules, and the software modules may be stored in a random access memory, a flash memory, a read-only memory, a programmable read-only memory, an erasable programmable read-only memory, an electrically erasable programmable read-only memory, a register, a hard disk, a removable disk, a CD-ROM, or any other form of storage medium well known in the art. An exemplary storage medium is coupled to the processor such that the processor can read information from, and write information to, the storage medium. The storage medium may alternatively be a component of the processor. The processor and the storage medium may be located in an ASIC. Additionally, the ASIC may be located in an access point or a station. The processor and the storage medium may alternatively be located in an access point or a station as discrete components.

Some or all of the above embodiments may be implemented using software, hardware, firmware, or any combination thereof. When implemented using software, all or some of the above embodiments may be implemented in the form of a computer program product. The computer program product includes one or more computer programs or instructions. When the computer programs or instructions are loaded and executed on a computer, all or some of the processes or functions described in the embodiments of this application are executed. The computer may be a general-purpose computer, a special-purpose computer, a computer network, a network device, user equipment, or another programmable apparatus. The computer program or instructions may be stored in a computer-readable storage medium, or transmitted from one computer-readable storage medium to another computer-readable storage medium, for example, the computer program or instructions may be transmitted from one website, computer, server, or data center to another web site, computer, server, or data center in a wired or wireless manner. The computer-readable storage medium may be any available medium that is accessible to a computer, or may be a data storage device such as a server, a data center, or the like integrating one or more available media. The available medium may be a magnetic medium, such as a floppy disk, a hard disk, or a magnetic tape; or may be an optical medium, such as a digital video disk; or may be a semiconductor medium, such as a solid-state disk. The computer-readable storage medium may be a volatile storage medium or a non-volatile storage medium, or may include both a volatile storage medium and a non-volatile storage medium.

In various embodiments of this application, if there is no special explanation and logical conflict, terms and/or descriptions in different embodiments have consistency and can be referenced to each other, and technical features in different embodiments can be combined to form new embodiments according to their inherent logical relationships.

It may be understood that various numeral signs involved in the embodiments of this application are only for convenience of description and distinction, and are not used to limit the scope of embodiments of this application. The values of the sequence numbers of the above processes do not imply the order of execution, and the execution order of each process should be determined by its function and inherent logic.

## Claims

1. A pilot configuration method, wherein the method comprises:
determining, by a first access point AP, a pilot subcarrier configuration for communication with a station STA, wherein the pilot subcarrier configuration comprises a quantity of pilot subcarriers and a location of a pilot subcarrier in a resource unit RU allocated to the STA; and
performing, by the first AP, communication transmission with the STA on the RU, wherein the pilot subcarrier is used for channel estimation.

2. The method according to claim 1, wherein the pilot subcarrier configuration is determined based on state information of the STA, and the quantity of pilot subcarriers in the pilot subcarrier configuration is related to the state information of the STA.

3. The method according to claim 1 or 2, wherein the pilot subcarrier configuration comprises distributed-tone resource unit DRU pilot configuration information and/or regular resource unit RRU pilot configuration information; wherein
the DRU pilot configuration information comprises a quantity of pilot subcarriers and a location of a pilot subcarrier in a DRU allocated to the STA for uplink and/or downlink communication transmission; and
the RRU pilot configuration information comprises a quantity of pilot subcarriers, and locations of the pilot subcarriers in an RRU allocated to the STA for uplink and/or downlink communication transmission.

4. The method according to claim 3, wherein the quantity of pilot subcarriers is determined by using at least one of the following methods:
the quantity of pilot subcarriers is linearly positively correlated with a value of the state information of the STA; or
the quantity of pilot subcarriers is positively and non-linearly correlated with a value of the state information of the STA; or
the quantity of pilot subcarriers is determined by the first AP from a correspondence between a value range of the state information and the quantity of pilot subcarriers based on the correspondence and a range in which the value of the state information of the STA falls.

5. The method according to claim 3, wherein the quantity of pilot subcarriers in the RRU pilot configuration information is a natural number not exceeding a first proportion of a total quantity of subcarriers in the RRU; or
the quantity of pilot subcarriers in the DRU pilot configuration information is a natural number not exceeding a second proportion of a total quantity of subcarriers in the DRU.

6. The method according to claim 3, wherein the location of the pilot subcarrier in the DRU pilot configuration information comprises at least one of the following:
locations of pilot subcarriers in the DRU pilot configuration information are locations of some or all pilot subcarriers in a fixed pilot configuration scheme allocated to the STA; or
locations of pilot subcarriers in the DRU pilot configuration information do not comprise locations of all pilot subcarriers in a fixed pilot configuration scheme allocated to the STA, wherein
the fixed pilot configuration scheme comprises an RRU-based fixed pilot configuration scheme and/or a DRU-based fixed pilot configuration scheme.

7. The method according to claim 3, wherein the location of the pilot subcarrier in the RRU pilot configuration information comprises at least one of the following:
locations of pilot subcarriers in the RRU pilot configuration information are locations of some or all pilot subcarriers in a fixed pilot configuration scheme allocated to the STA; or
locations of pilot subcarriers in the RRU pilot configuration information do not comprise locations of all pilot subcarriers in a fixed pilot configuration scheme allocated to the STA, wherein
the fixed pilot configuration scheme comprises an RRU-based fixed pilot configuration scheme and/or a DRU-based fixed pilot configuration scheme.

8. The method according to any one of claims 1 to 7, wherein before the determining, by the first AP, the pilot subcarrier configuration for communication with the station STA, the method further comprises:
receiving, by the first AP, first indication information reported by the STA, wherein the first indication information is used to indicate the state information of the STA.

9. The method according to claim 8, wherein the first indication information is configured in one or more of the following information reported by the STA: channel state information, block acknowledgment information, or location tracking notification frame information.

10. The method according to claim 8, wherein before the receiving, by the first AP, the first indication information reported by the STA, the method further comprises:
sending, by the first AP, second indication information to the STA, wherein the second indication information is used to indicate that the first AP has a capability of configuring a pilot subcarrier based on the state information of the STA.

11. The method according to claim 10, wherein the second indication information is configured in one or more of the following fields sent by the first AP to the STA: a universal signaling field, an extremely high throughput signaling field, or an extended capability field.

12. The method according to claim 1, wherein before the determining, by the first AP, the pilot subcarrier configuration for communication with the station STA, the method further comprises:
receiving, by the first AP, third indication information sent by a second AP, wherein the third indication information comprises state information of the STA.

13. A communication apparatus, comprising:
a processing module, configured to determine a pilot subcarrier configuration for communication with a station STA, wherein the pilot subcarrier configuration comprises a quantity of pilot subcarriers and a location of a pilot subcarrier in a resource unit RU allocated to the STA; and
a transceiver module, configured to perform communication transmission with the STA on the RU, wherein the pilot subcarrier is used for channel estimation.

14. The communication apparatus according to claim 13, wherein the pilot subcarrier configuration is determined based on state information of the STA, and the quantity of pilot subcarriers in the pilot subcarrier configuration is related to the state information of the STA.

15. The communication apparatus according to claim 13 or 14, wherein the pilot subcarrier configuration comprises distributed-tone resource unit DRU pilot configuration information and/or regular resource unit RRU pilot configuration information; wherein
the DRU pilot configuration information comprises a quantity of pilot subcarriers and a location of a pilot subcarrier in a DRU allocated to the STA for uplink and/or downlink communication transmission; and
the RRU pilot configuration information comprises a quantity of pilot subcarriers and a location of a pilot subcarrier in an RRU allocated to the STA for uplink and/or downlink communication transmission.

16. The communication apparatus according to claim 15, wherein the quantity of pilot subcarriers is determined by using at least one of the following methods:
the quantity of pilot subcarriers is linearly positively correlated with a value of the state information of the STA; or
the quantity of pilot subcarriers is positively and non-linearly correlated with a value of the state information of the STA; or
the quantity of pilot subcarriers is determined by the first AP from a correspondence between a value range of the state information and the quantity of pilot subcarriers based on the correspondence and a range in which the value of the state information of the STA falls.

17. The communication apparatus according to claim 15, wherein the quantity of pilot subcarriers in the RRU pilot configuration information is a natural number not exceeding a first proportion of a total quantity of subcarriers in the RRU; or
the quantity of pilot subcarriers in the DRU pilot configuration information is a natural number not exceeding a second proportion of a total quantity of subcarriers in the DRU.

18. The communication apparatus according to claim 15, wherein the location of the pilot subcarrier in the DRU pilot configuration information comprises at least one of the following:
locations of pilot subcarriers in the DRU pilot configuration information are locations of some or all pilot subcarriers in a fixed pilot configuration scheme allocated to the STA; or
locations of pilot subcarriers in the DRU pilot configuration information do not comprise locations of all pilot subcarriers in a fixed pilot configuration scheme allocated to the STA, wherein
the fixed pilot configuration scheme comprises an RRU-based fixed pilot configuration scheme and/or a DRU-based fixed pilot configuration scheme.

19. The communication apparatus according to claim 15, wherein the location of the pilot subcarrier in the RRU pilot configuration information comprises at least one of the following:
locations of pilot subcarriers in the RRU pilot configuration information are locations of some or all pilot subcarriers in a fixed pilot configuration scheme allocated to the STA; or
locations of pilot subcarriers in the RRU pilot configuration information do not comprise locations of all pilot subcarriers in a fixed pilot configuration scheme allocated to the STA, wherein
the fixed pilot configuration scheme comprises an RRU-based fixed pilot configuration scheme and/or a DRU-based fixed pilot configuration scheme.

20. The communication apparatus according to any one of claims 13 to 19, wherein before determining the pilot subcarrier configuration for communication with the station STA, the apparatus is further configured to:
receive first indication information reported by the STA, wherein the first indication information is used to indicate the state information of the STA.

21. The communication apparatus according to claim 20, wherein the first indication information is configured in one or more of the following information reported by the STA: channel state information, block acknowledgment information, or location tracking notification frame information.

22. The communication apparatus according to claim 20, wherein before the receiving the first indication information reported by the STA, the apparatus is further configured to:
send second indication information to the STA, wherein the second indication information is used to indicate that the first AP has a capability of configuring a pilot subcarrier based on the state information of the STA.

23. The communication apparatus according to claim 22, wherein the second indication information is configured in one or more of the following fields sent by the first AP to the STA: a universal signaling field, an extremely high throughput signaling field, or an extended capability field.

24. The communication apparatus according to claim 13, wherein before the determining the pilot subcarrier configuration for communication with the station STA, the apparatus is further configured to:
receive third indication information sent by a second AP, wherein the third indication information comprises state information of the STA.

25. A communication apparatus, comprising one or more processors and one or more memories, wherein the one or more memories store one or more programs; and when the one or more program are executed by the one or more processors, the apparatus is enabled to perform the method according to any one of claims 1 to 12.

26. A chip system, wherein the chip system comprises at least one chip and a memory; and the at least one chip is configured to read and execute a program stored in the memory, to implement the method according to any one of claims 1 to 12.

27. A readable storage medium, wherein the readable storage medium comprises a program; and when the program is run on an apparatus, the apparatus is enabled to perform the method according to any one of claims 1 to 12.

28. A computer program product comprising instructions, wherein when the computer program product is run on a computer, the computer is enabled to perform the method according to any one of claims 1 to 12.
